# EUROPEAN PATENT APPLICATION

(11) **EP 4 464 449 A2**
(43) Date of publication of application: **20.11.2024**
(21) Application number: 24172735.3
(22) Date of filing: 26.04.2024
(51) Int. Cl.: B23K 9/28, B23K 9/32

(54) **MARKER RINGS FOR PORTABLE WELDING TECHNIQUE MONITORING SYSTEMS**

(30) Priority: 27.04.2023 US 202363462353 P; 24.04.2024 US 202418644673
(71) Applicant: Illinois Tool Works Inc., Glenview IL 60025 (US)
(72) Inventor: BECKER, William Joshua, Glenview, 60025 (US); MUSKE, Mitchell James, Glenview, 60025 (US); KOPAC III, Jordan J., Glenview, 60025 (US)
(74) Representative: HGF

(57) **Abstract**

Described herein are examples of welding technique monitoring systems that provide lightweight, self-contained, and highly portable means of monitoring welding technique and/or providing technique feedback. The systems use a portable support platform that can be easily transported to different welding stations/sites, providing a marked advantage over legacy monitoring systems that use heavy welding stands that are difficult to move. After an initial calibration, the systems can consistently and repeatedly monitor welding technique relative to a particular joint with no additional calibration necessary, even if there is sensor and/or platform movement. The systems are additionally able to detect a welding-type operation without the need to communicate with welding equipment. The systems are further configured for use with existing (rather than potentially expensive custom) welding-type tools, thereby keeping the systems low cost and highly portable. The systems are further configured to use off the shelf mobile devices for all the electronic functions, thereby simplifying power/battery management.

## Description

### CROSS REFERENCE TO RELATED APPLICATIONS

This application claims priority to, and the benefit of, U.S. Provisional Patent Application No. 63/462,353, filed April 27, 2023, entitled "Marker Rings for Portable Welding Technique Monitoring Systems," the entire contents of which are hereby incorporated by reference.

### TECHNICAL FIELD

The present disclosure generally relates to welding technique monitoring systems, and, more particularly, to marker rings for portable welding technique monitoring systems.

### BACKGROUND

Welding technique generally refers to the way in which a welding operator positions, moves, and/or manipulates a welding-type tool relative to a workpiece (and/or a welding joint of the workpiece), such as, for example, during a welding-type operation. Good welding technique can positively impact the quality of a weld. Bad welding technique can negatively impact the quality of a weld. However, it can sometimes be difficult for (e.g., less experienced) human operators to accurately judge whether welding technique is good or bad.

Limitations and disadvantages of conventional and traditional approaches will become apparent to one of skill in the art, through comparison of such systems with the present disclosure as set forth in the remainder of the present application with reference to the drawings.

### BRIEF SUMMARY

The present disclosure is directed to marker rings for portable welding technique monitoring systems, substantially as illustrated by and/or described in connection with at least one of the figures, and as set forth more completely in the claims.

These and other advantages, aspects and novel features of the present disclosure, as well as details of an illustrated example thereof, will be more fully understood from the following description and drawings.

### BRIEF DESCRIPTION OF THE DRAWINGS

FIG. 1 shows an example welding system, in accordance with aspects of this disclosure.
FIGS. 2a-2d show examples of a welding technique monitoring system of the welding system of FIG. 1, in accordance with aspects of this disclosure.
FIG. 3 shows an example of an alternative support platform of the welding technique monitoring system of FIGS. 2a-2d, in accordance with aspects of this disclosure.
FIGS.4a-4d show examples of a joint alignment fixture of the welding technique monitoring system of FIGS. 2a-2d, in accordance with aspects of this disclosure.
FIGS. 5a-5b show examples of a first alternative joint alignment fixture, in accordance with aspects of this disclosure.
FIGS. 6a-6b show examples of a first alternative welding technique monitoring system, in accordance with aspects of this disclosure.
FIGS. 7a-7c show examples of a second alternative joint alignment fixture of the alternative welding technique monitoring system of FIGS. 6a-6b, in accordance with aspects of this disclosure.

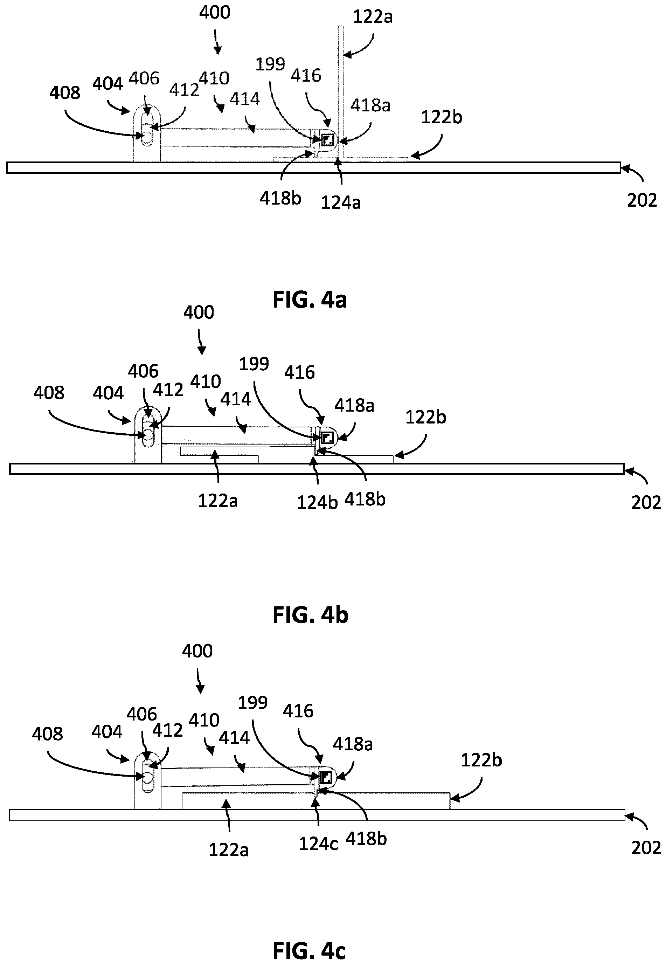

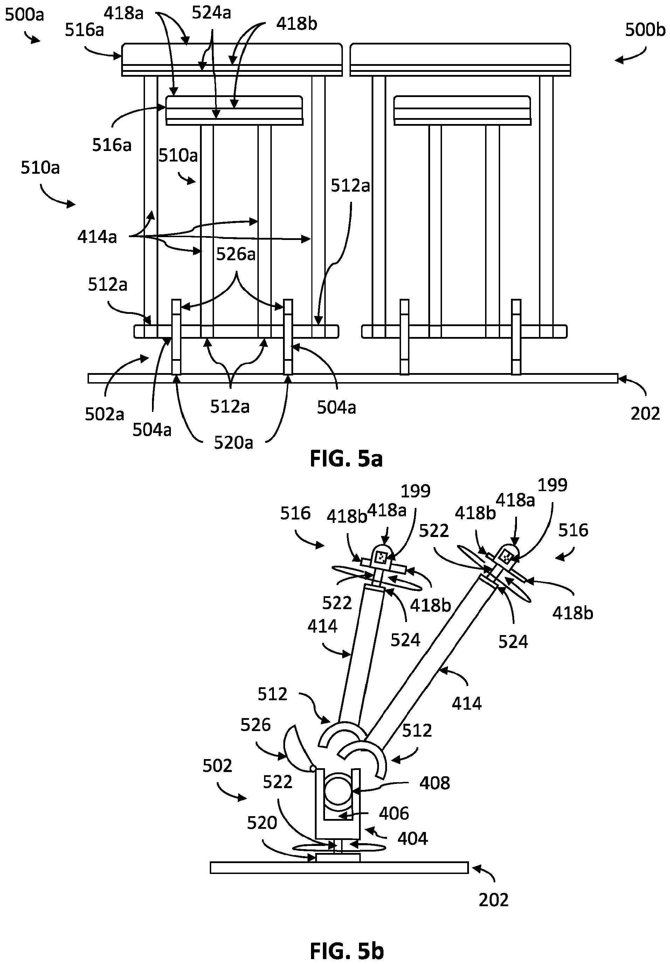

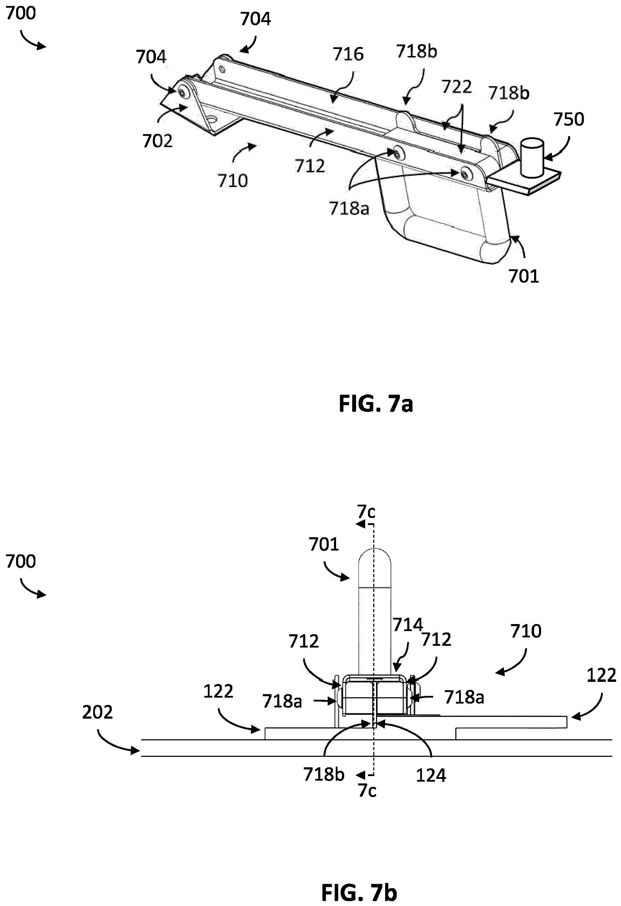

FIGS. 8a-8a show examples of marker flags that might be used with the joint alignment fixture of FIGS. 4a-4c, first alternative joint alignment fixture of FIGS. 5a-5b, and/or second alternative joint alignment fixture of FIGS. 7a-7b, in accordance with aspects of this disclosure.

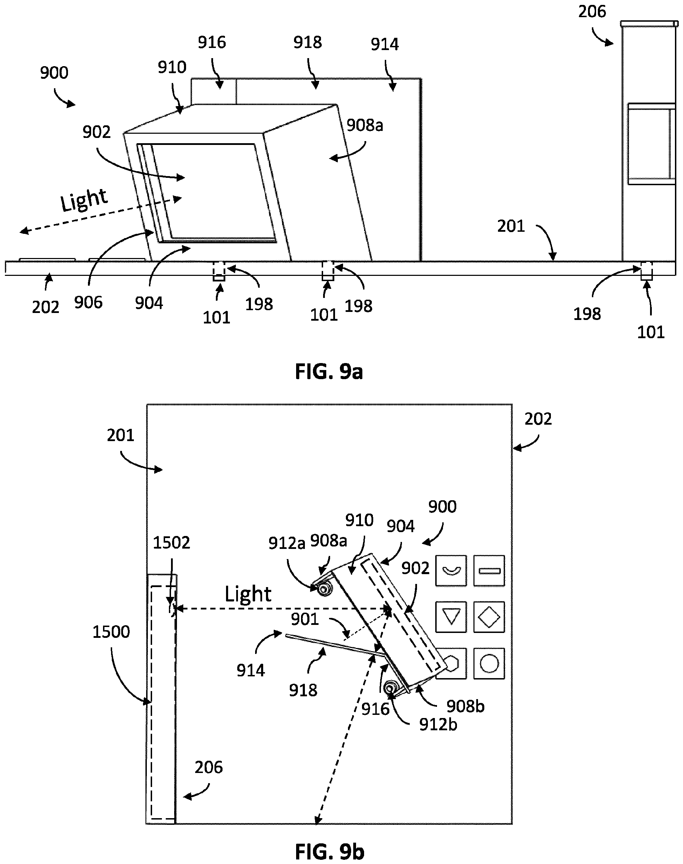

FIGS. 9a-9b show examples of a light filter housing and reflector wall, in accordance with aspects of this disclosure.

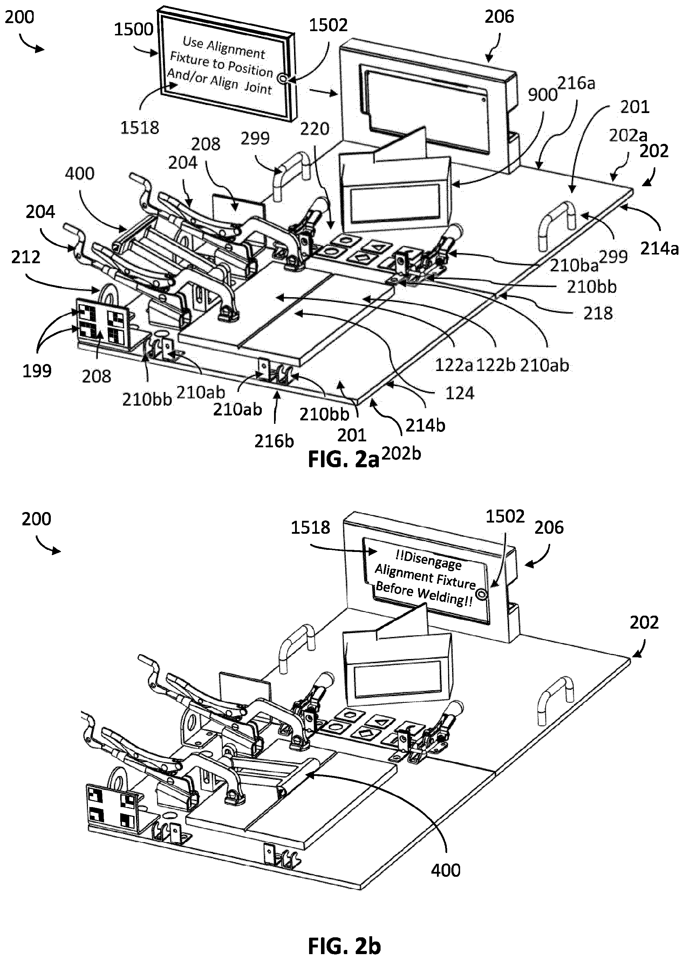

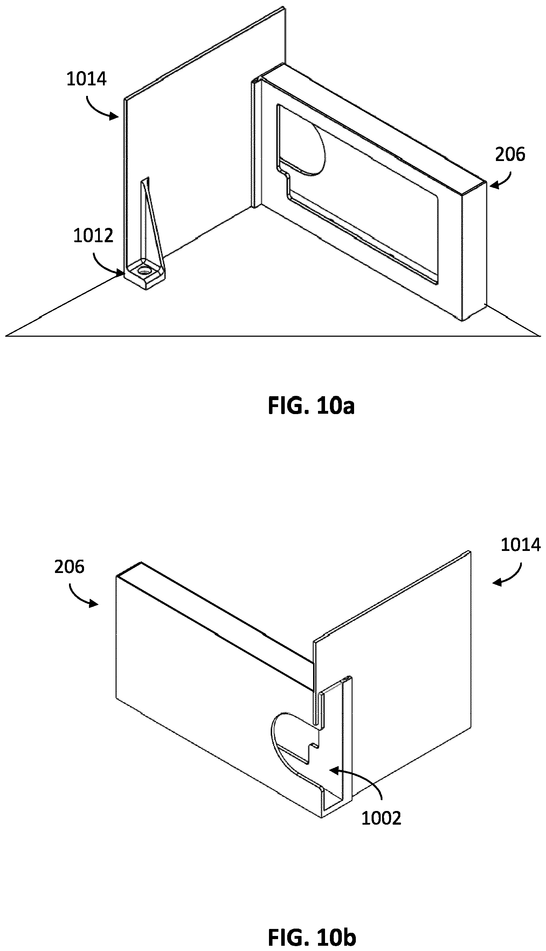

FIGS. 10a-10b show examples of a monitoring device housing and an alternative reflective wall of the welding technique monitoring system of FIGS. 2a-2d, in accordance with aspects of this disclosure.

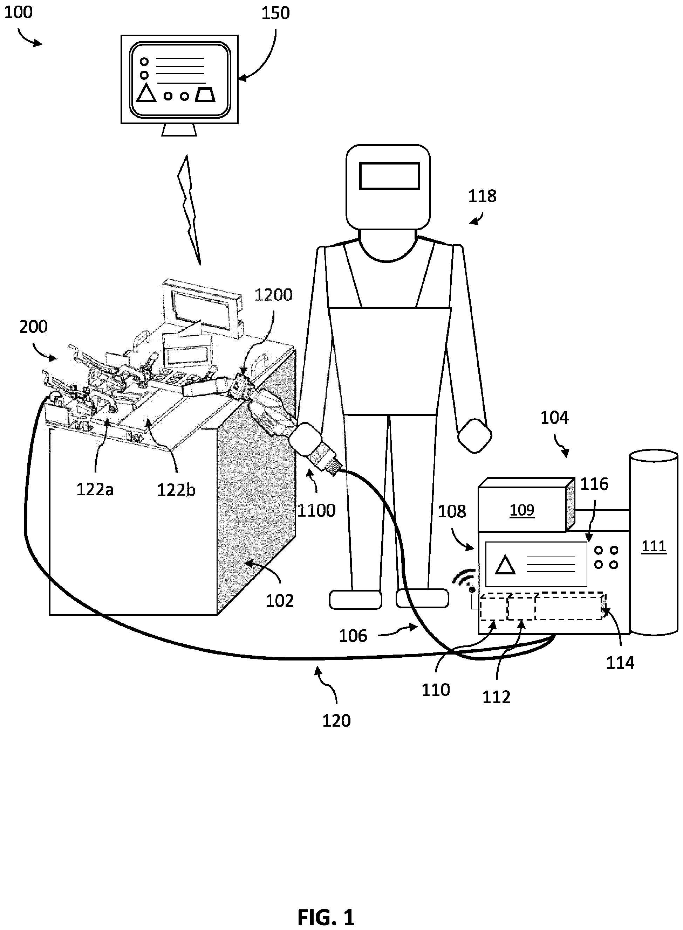

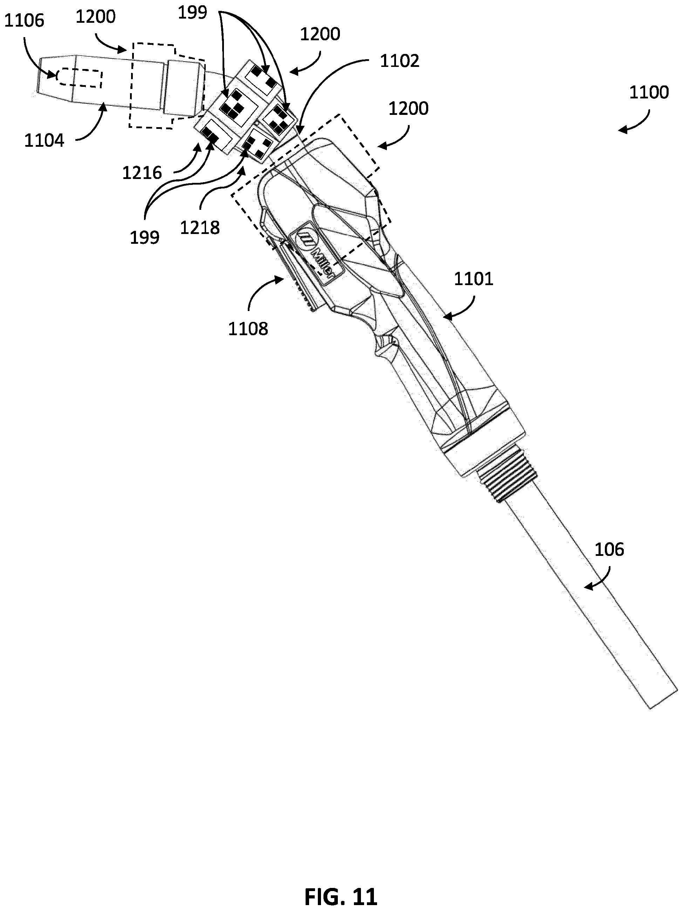

FIG. 11 shows an example of a welding-type tool of the welding system of FIG. 1, in accordance with aspects of this disclosure.

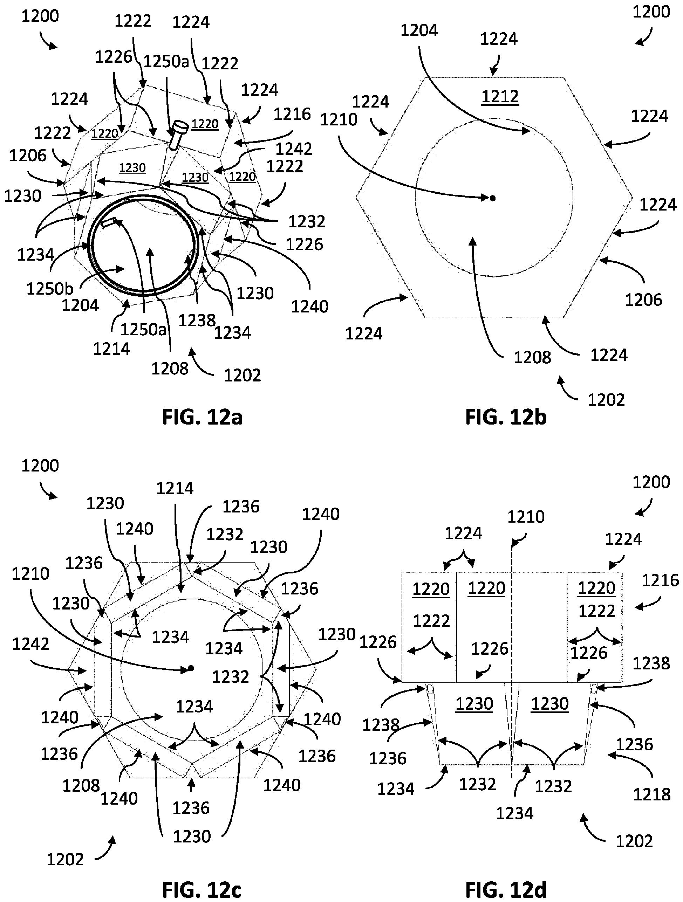

FIGS. 12a-12d show different views of an example marker ring attached to the welding-type tool of FIG. 11, in accordance with aspects of this disclosure.

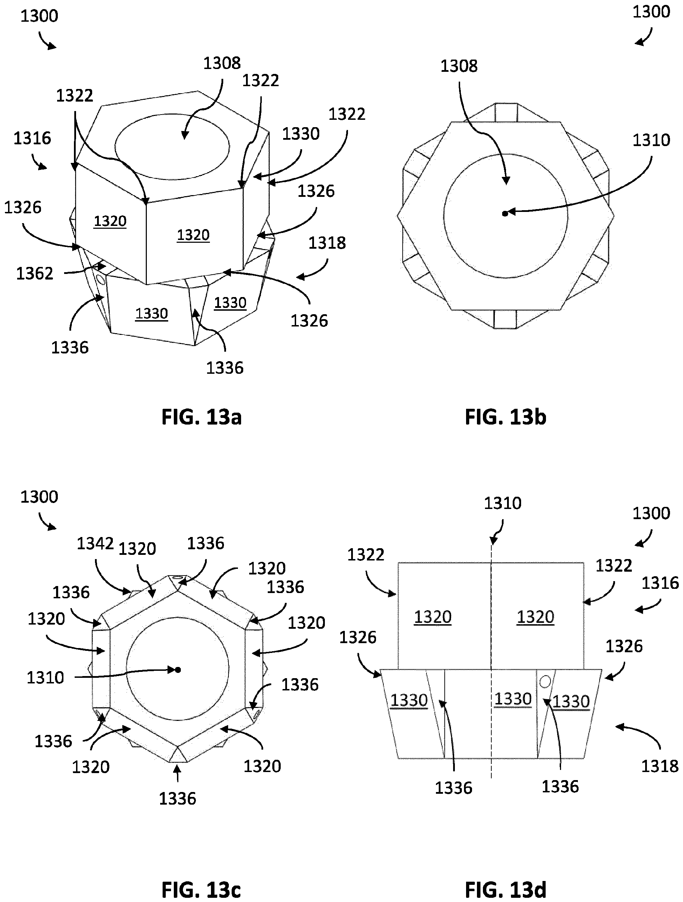

FIGS. 13a-13d show examples of a first alternative marker ring, in accordance with aspects of this disclosure.

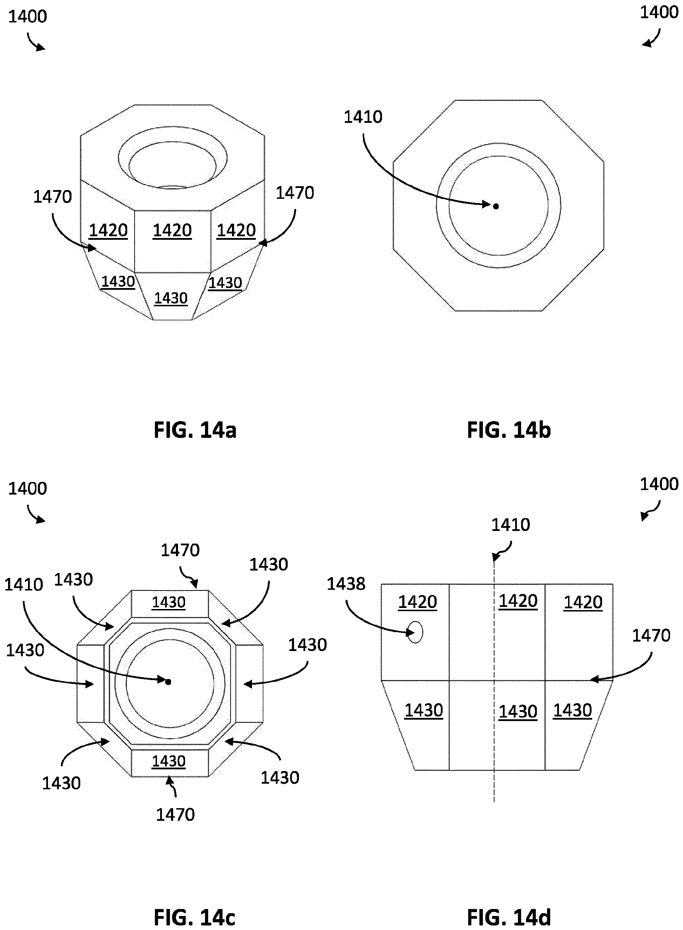

FIGS. 14a-14d show examples of a second alternative marker ring, in accordance with aspects of this disclosure.

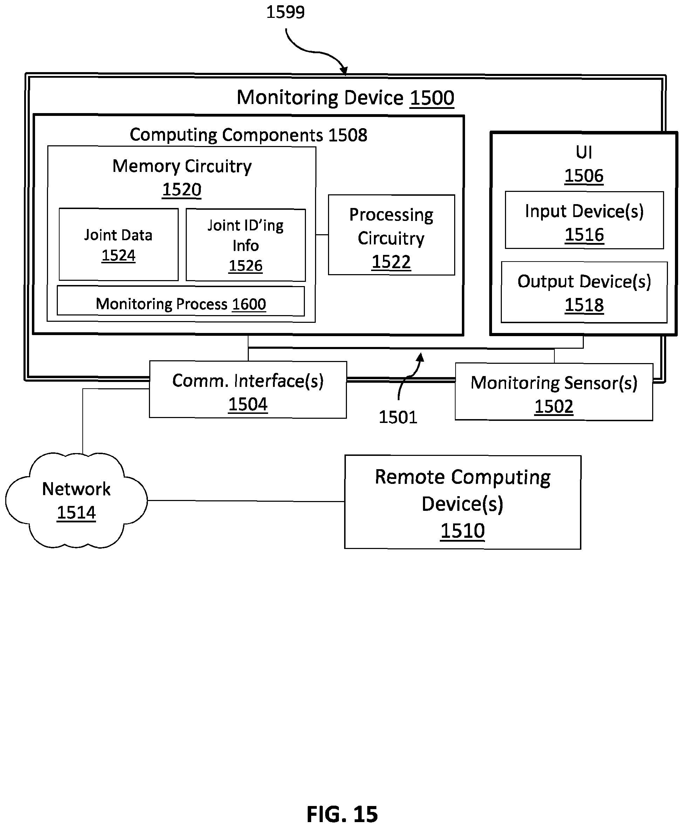

FIG. 15 is a block diagram showing electrical components and connections of the portable welding technique monitoring system of FIGS. 2a-2d, in accordance with aspects of this disclosure.

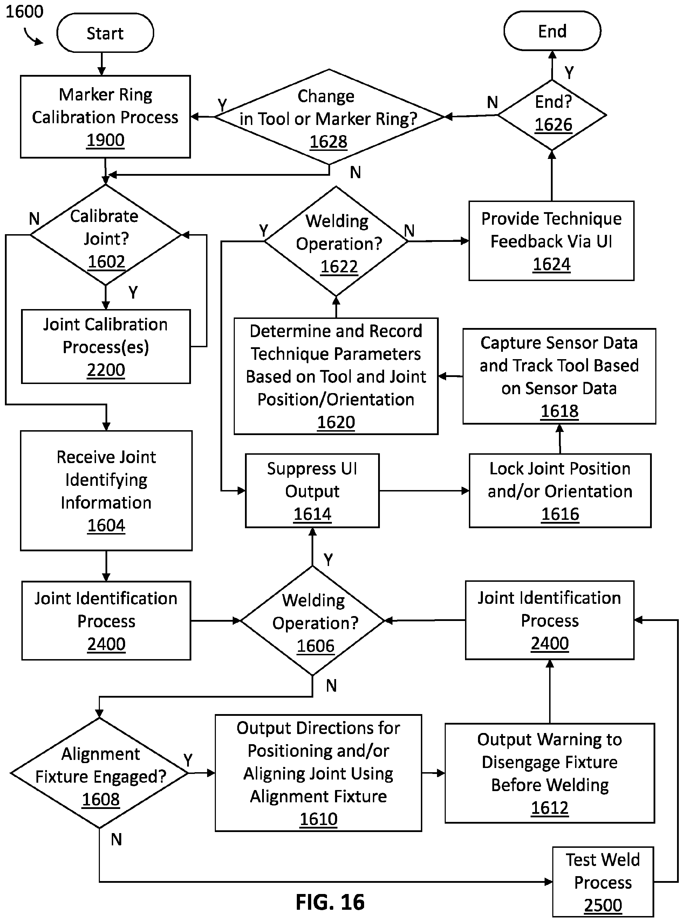

FIG. 16 is a flow diagram illustrating operation of an example welding technique monitoring process, in accordance with aspects of this disclosure.

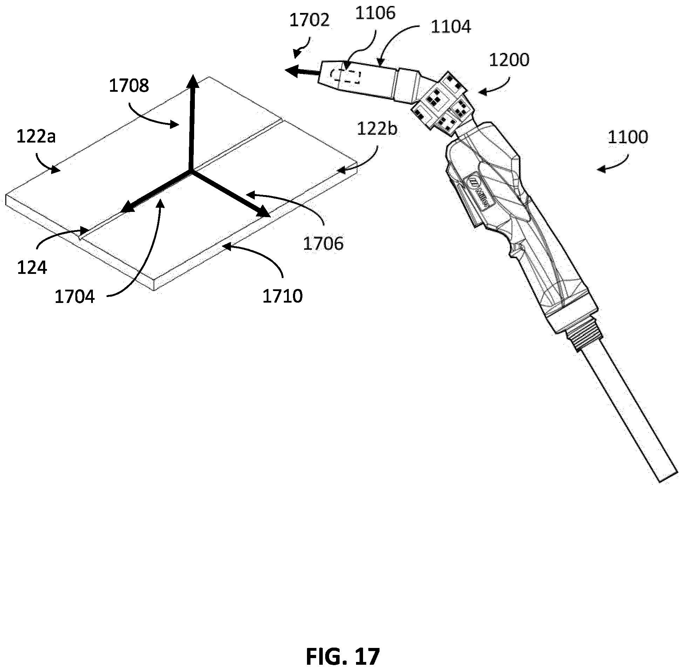

FIG. 17 shows examples of how various vectors used in the welding technique monitoring process of FIG. 16 may relate to a welding-type tool and/or workpiece, in accordance with aspects of this disclosure.

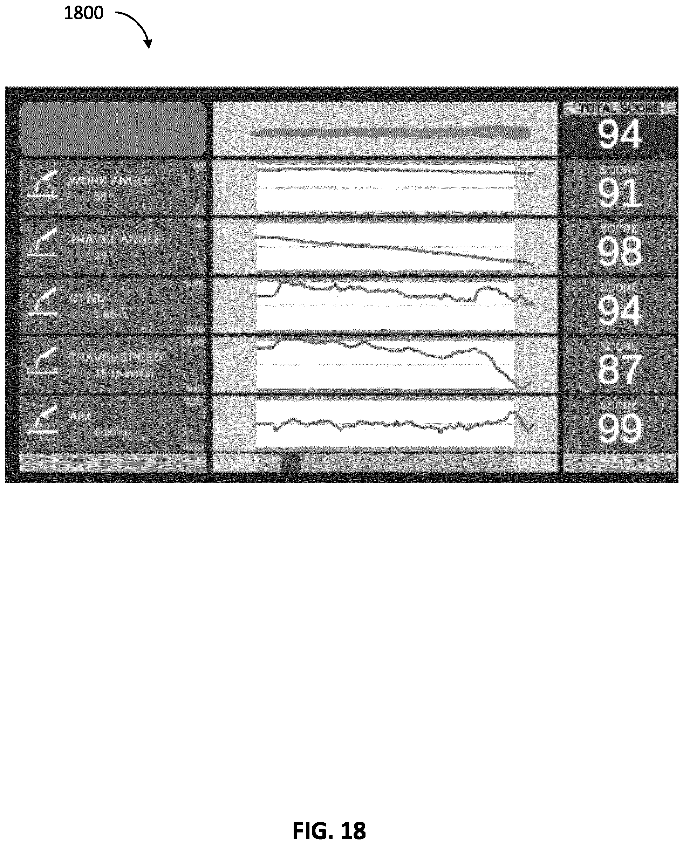

FIG. 18 shows an example of feedback that may be provided during the welding technique monitoring process of FIG. 16, in accordance with aspects of this disclosure.

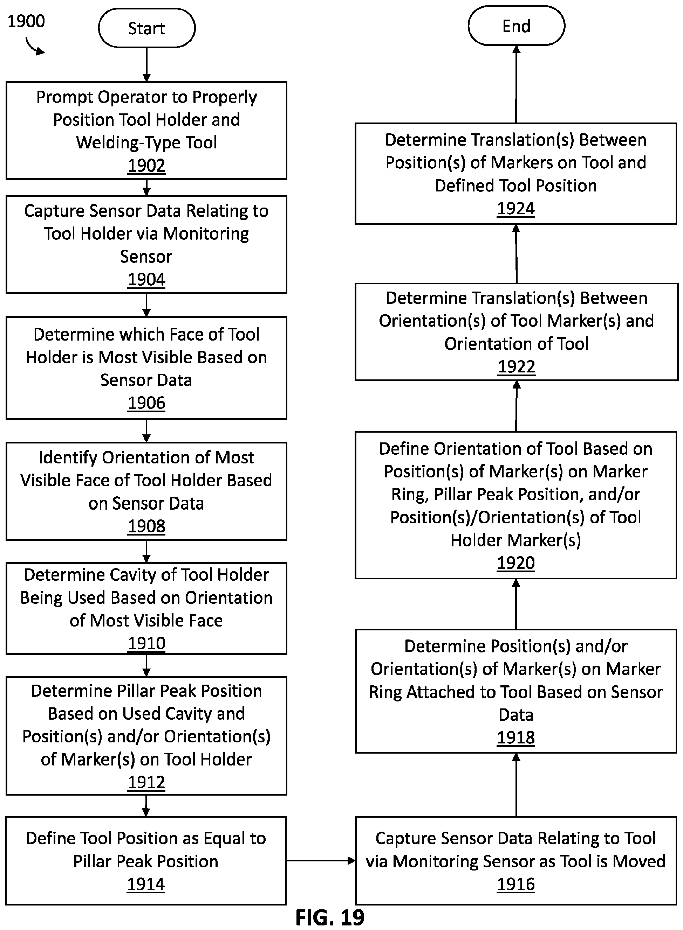

FIG. 19 is a flow diagram illustrating operation of an example marker ring calibration process of the welding technique monitoring process of FIG. 16, in accordance with aspects of this disclosure.

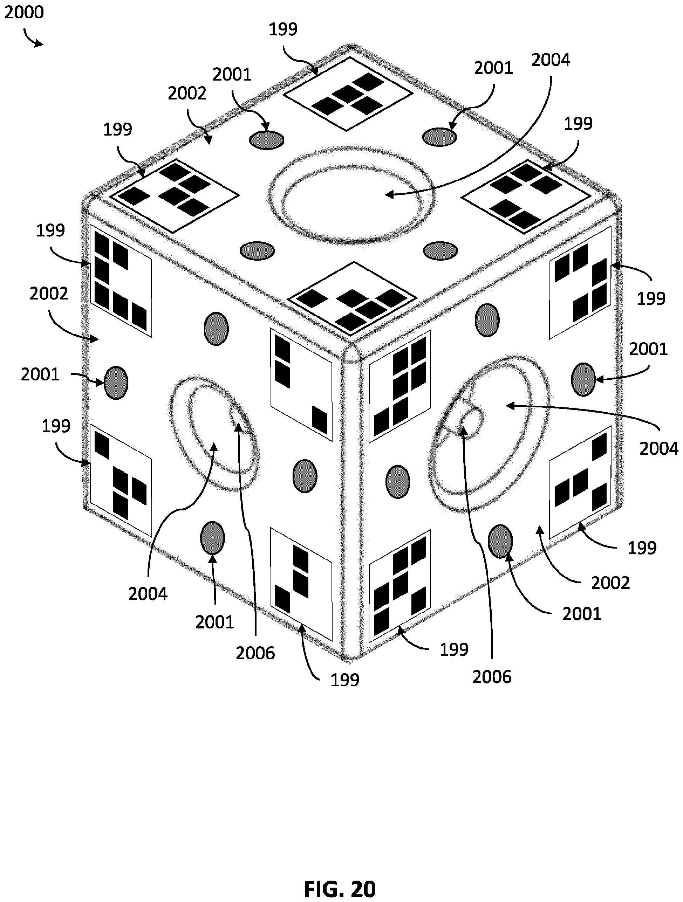

FIG. 20 shows an example of a calibration block that may be used as a tool holder during the marker ring calibration process of FIG. 19, in accordance with aspects of this disclosure.

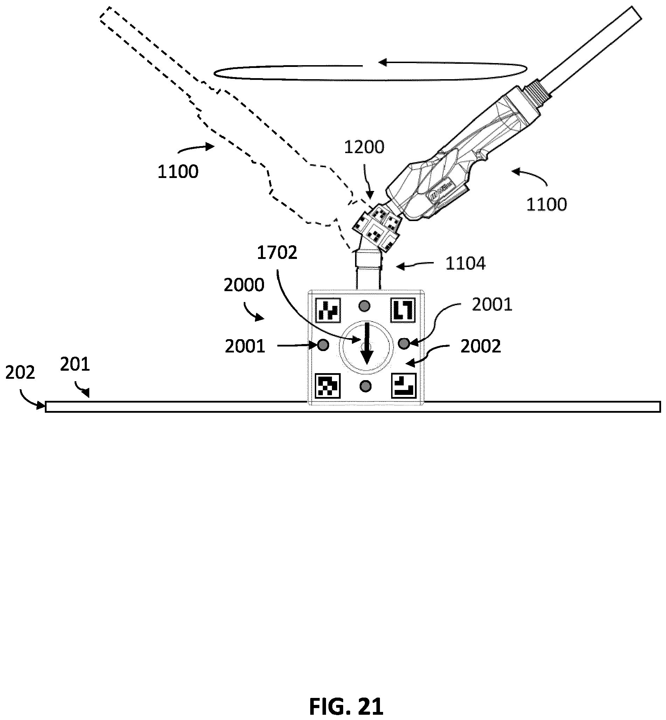

FIG. 21 shows an example of how the welding-type tool of FIG. 11 and marker ring of FIG. 12 may be used with the calibration block of FIG. 20 during the marker ring calibration process of FIG. 19, in accordance with aspects of this disclosure.

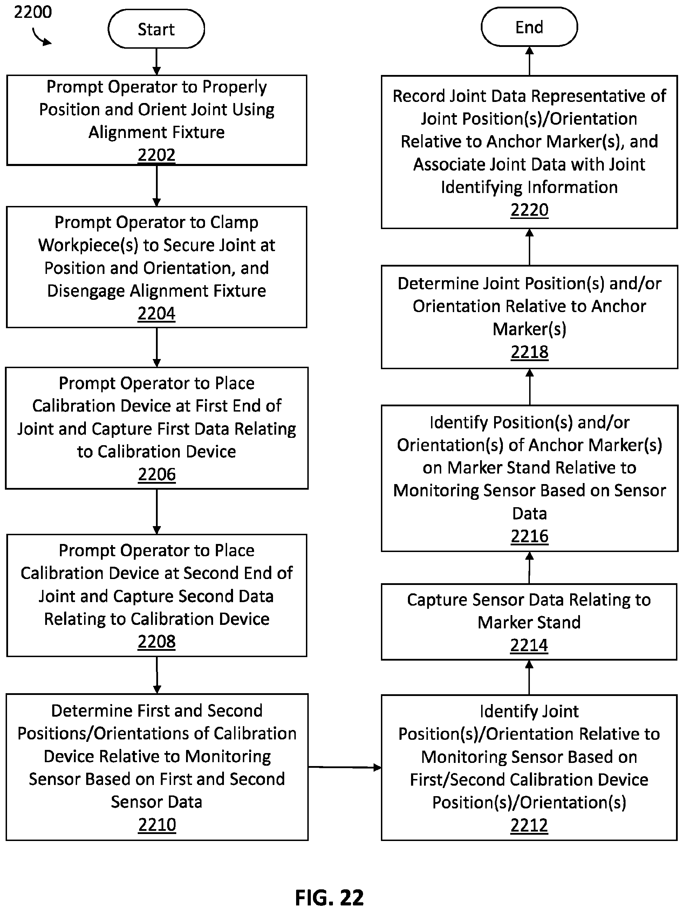

FIG. 22 is a flow diagram illustrating operation of a joint calibration process of the welding technique monitoring process of FIG. 16, in accordance with aspects of this disclosure.

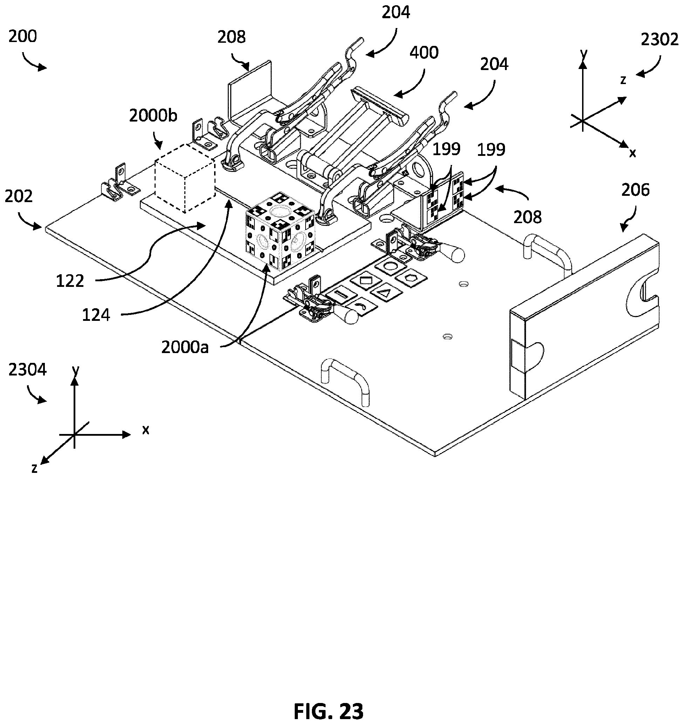

FIG. 23 shows an example of how the calibration block of FIG. 20 may be used during the joint calibration process of FIG. 22, in accordance with aspects of this disclosure.

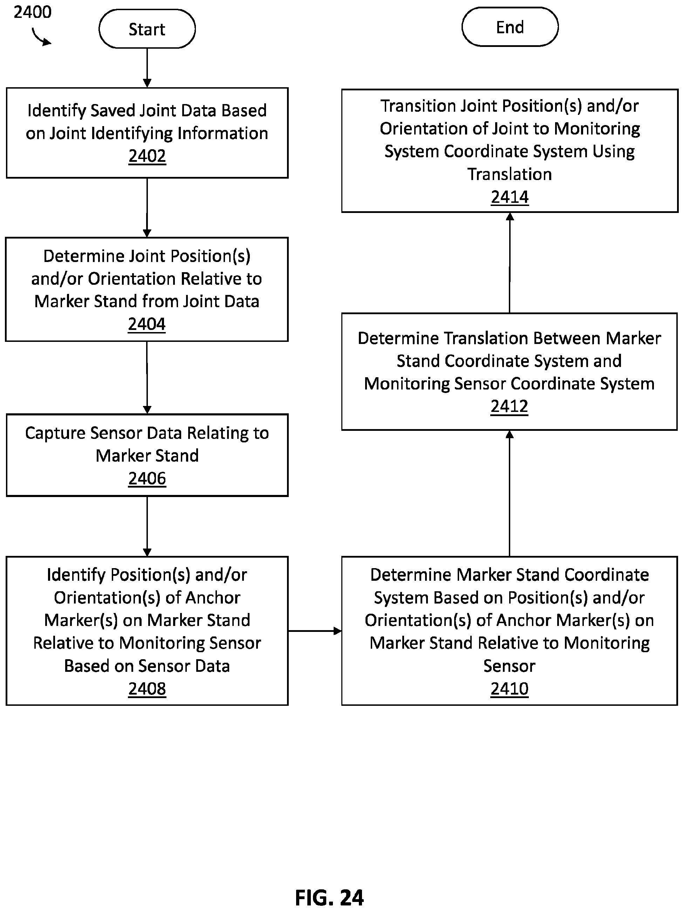

FIG. 24 is a flow diagram illustrating operation of a joint identification process of the welding technique monitoring process of FIG. 16, in accordance with aspects of this disclosure.

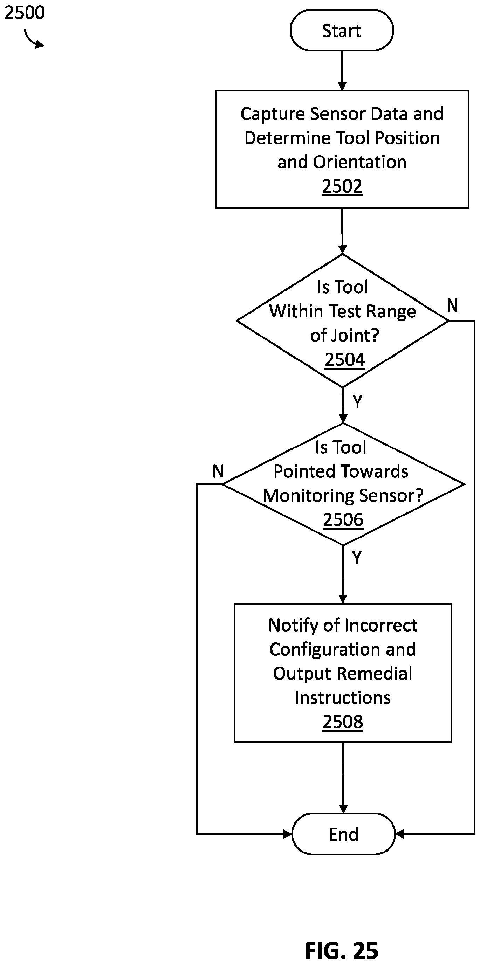

FIG. 25 is a flow diagram illustrating operation of a test weld process of the welding technique monitoring process of FIG. 16, in accordance with aspects of this disclosure.

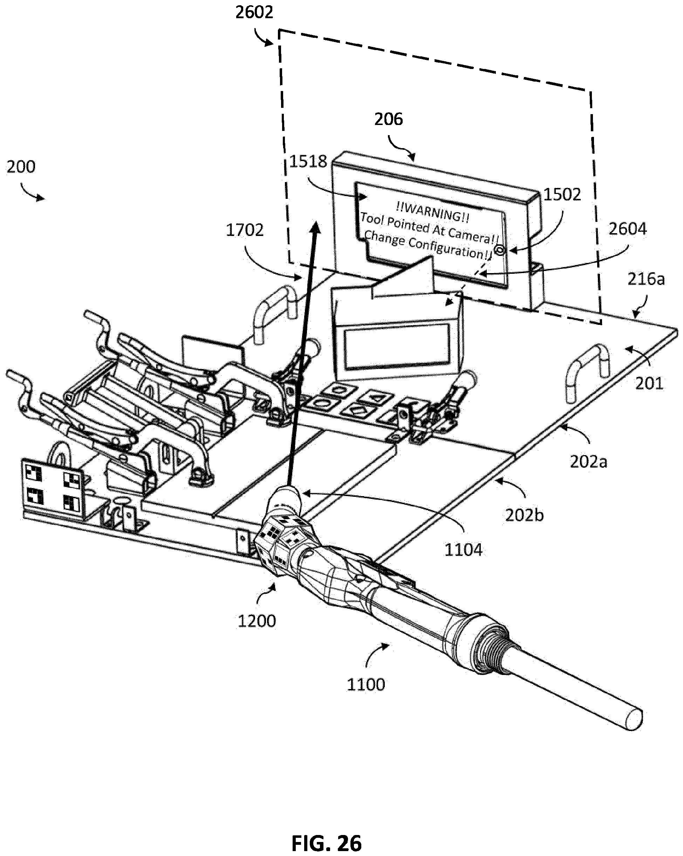

FIG. 26 shows an example of the welding technique monitoring system of FIGS. 2a-2d and welding-type tool of FIG. 11 during the test weld process of FIG. 25, in accordance with aspects of this disclosure.

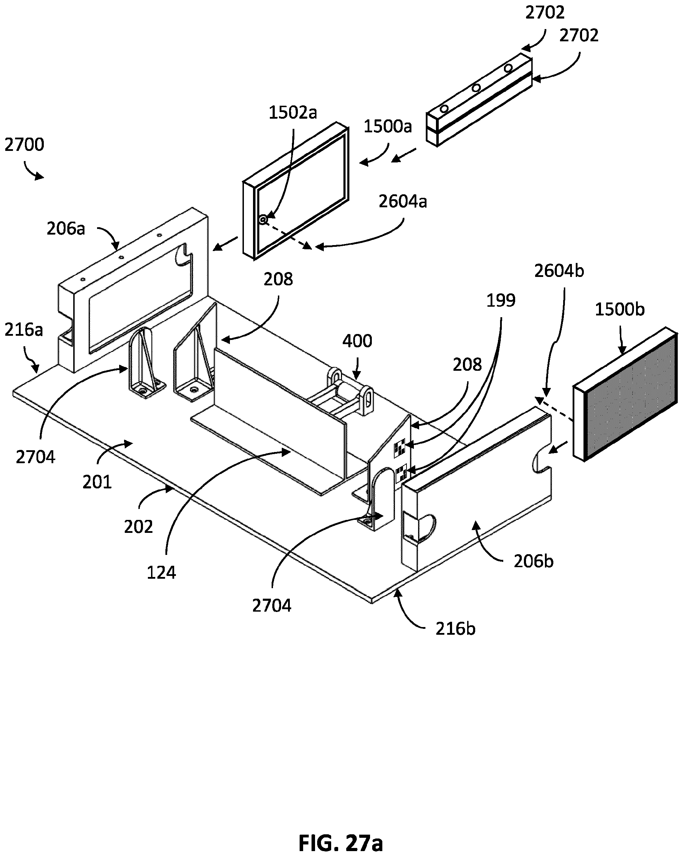

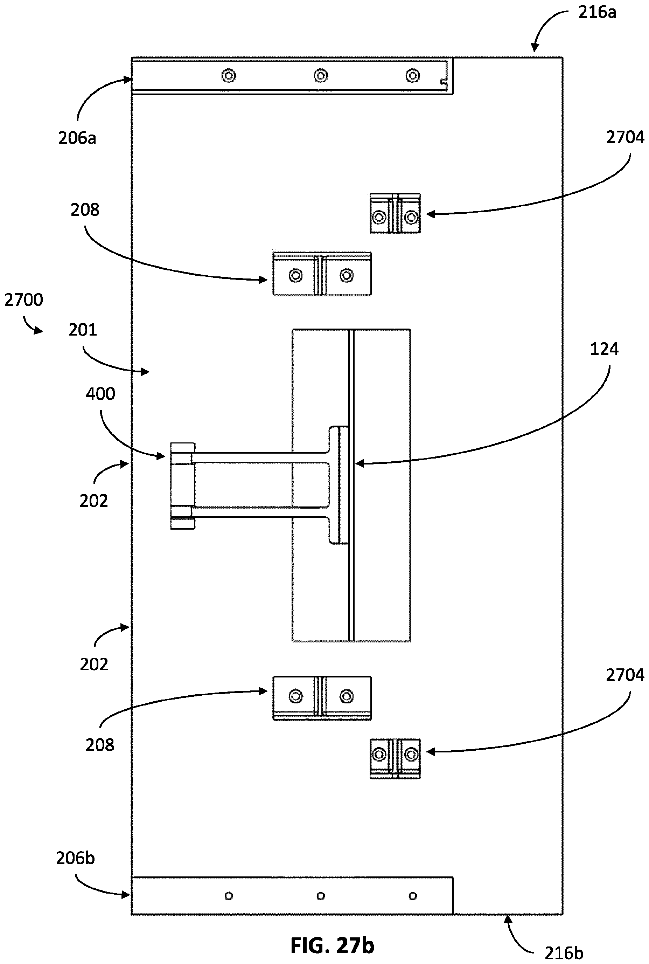

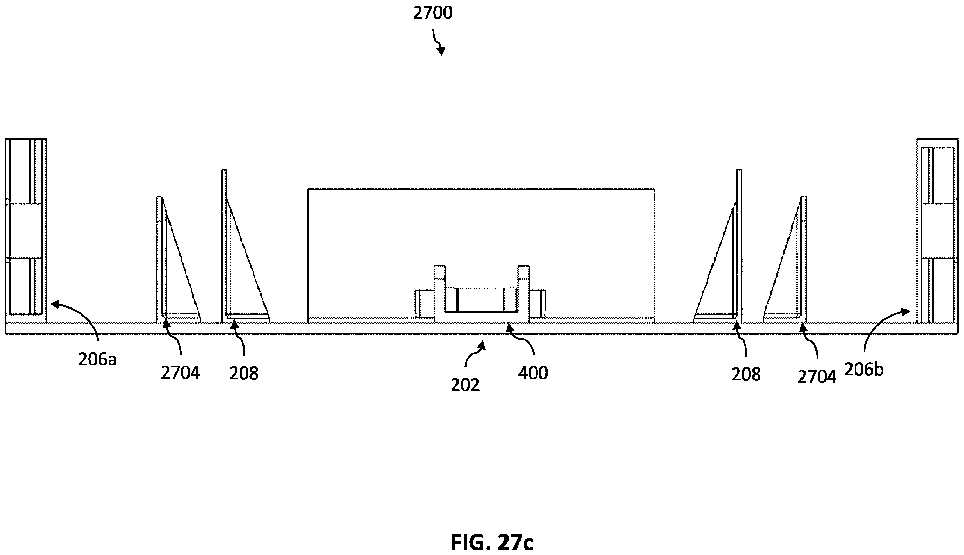

FIGS. 27a-27c show examples of a second alternative welding technique monitoring system, in accordance with aspects of this disclosure.

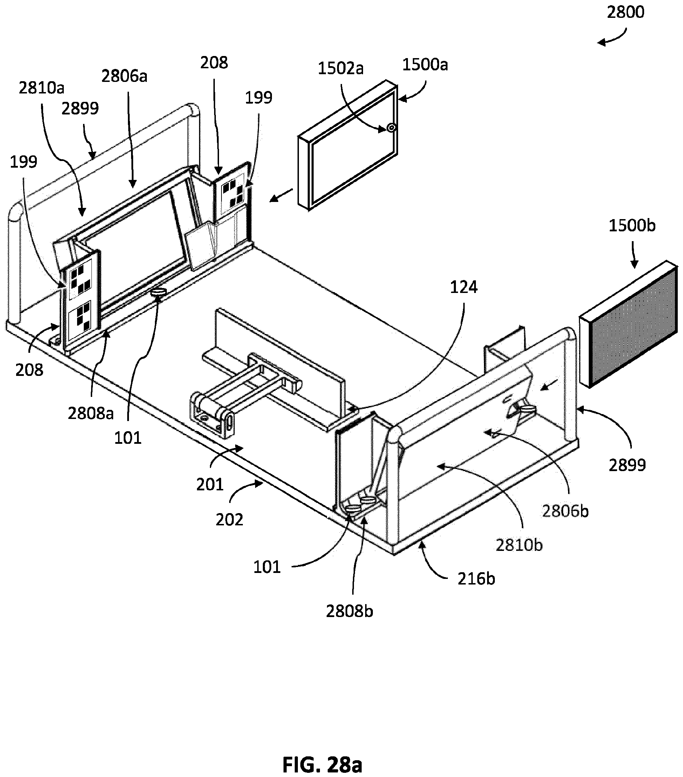

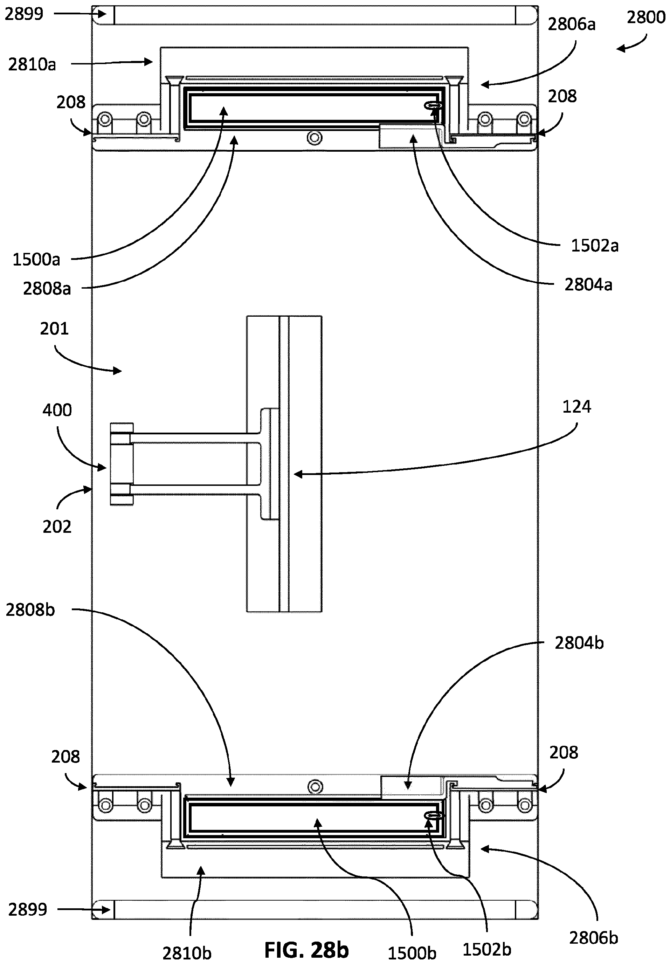

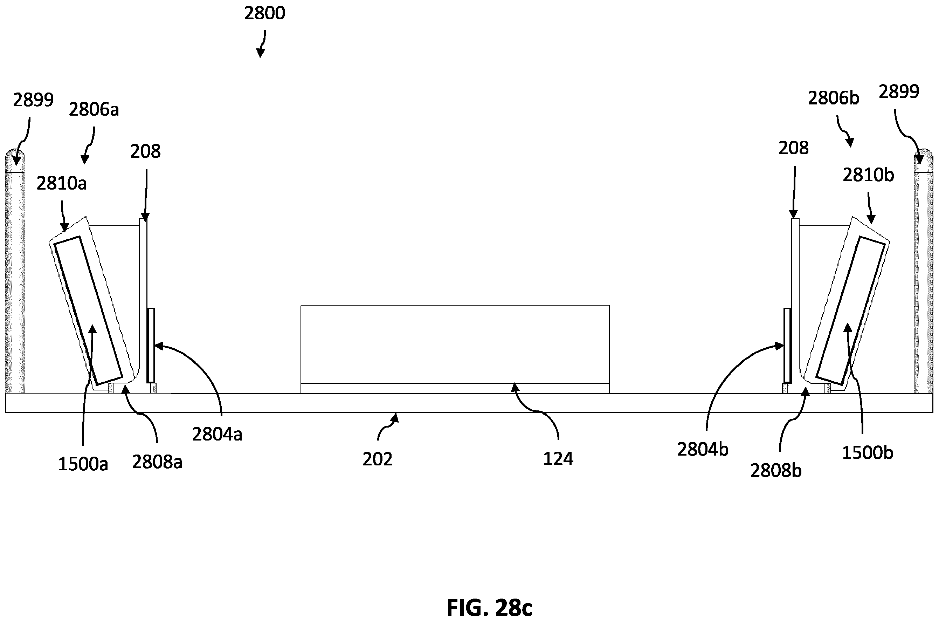

FIGS. 28a-28d show examples of a third alternative welding technique monitoring system, in accordance with aspects of this disclosure.

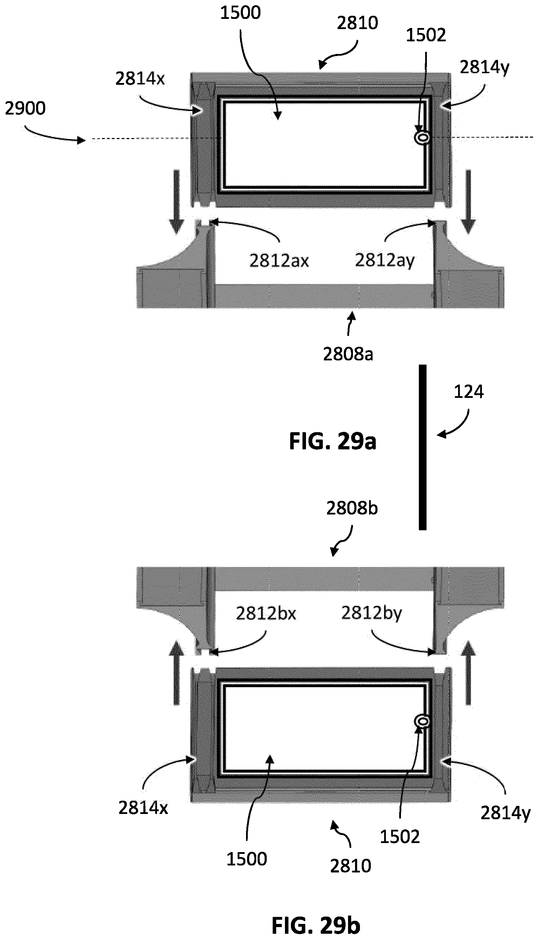

FIGS. 29a-29b show examples of alternative monitoring device housings having connectors arranged in a poka yoke configuration, such as might be used with the third alternative welding technique monitoring system of FIGS. 28a-28d, in accordance with aspects of this disclosure.

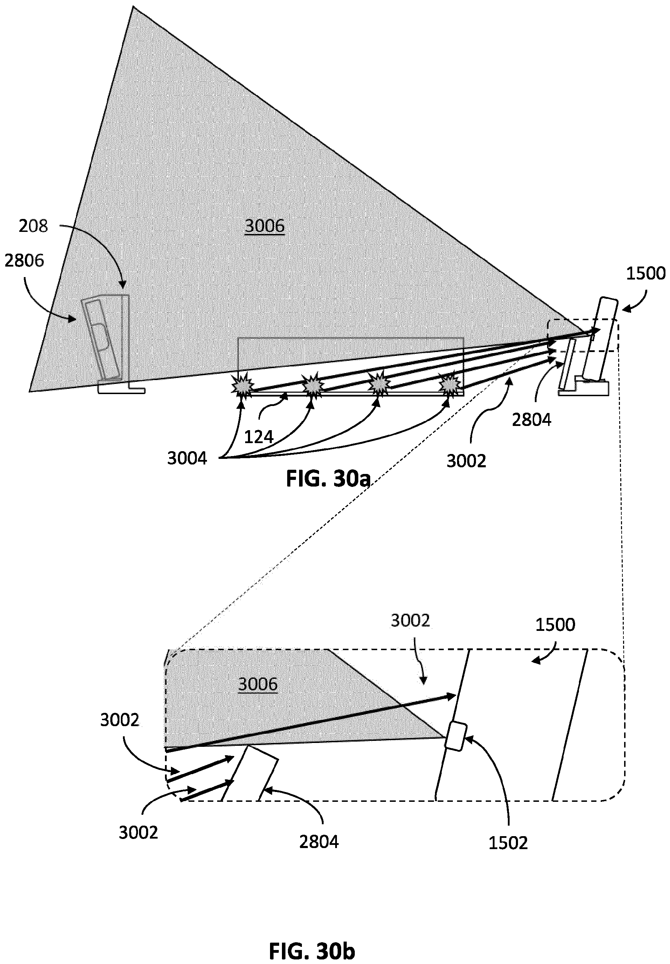

FIGS. 30a-30b show an example of how an alternative light blocker of the third alternative welding technique monitoring system of FIGS. 28a-28d might be used to prevent lens flare, in accordance with aspects of this disclosure.

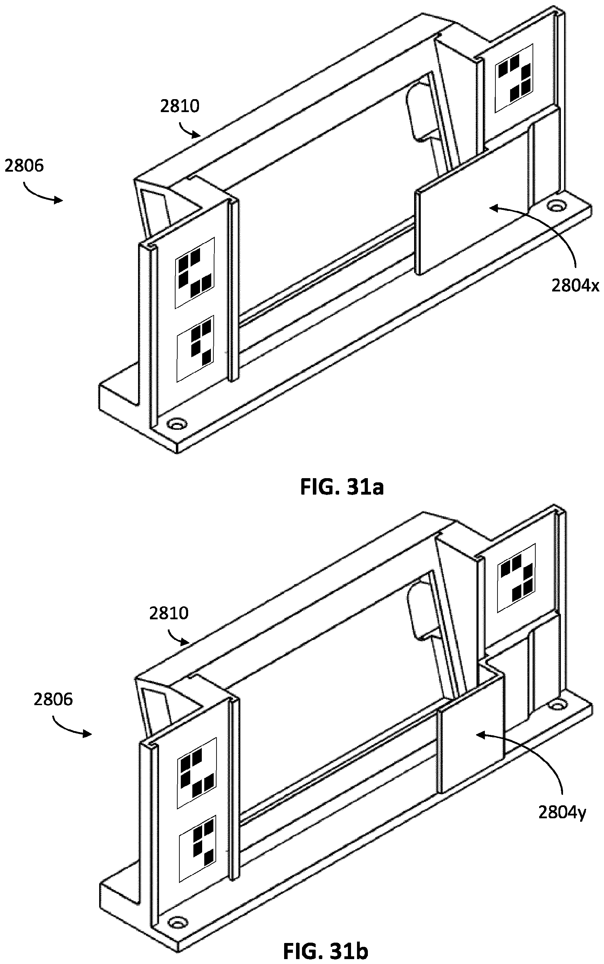

FIGS. 31a-31b show other examples of an alternative light blocker that might be used with the third alternative welding technique monitoring system of FIGS. 28a-28d.

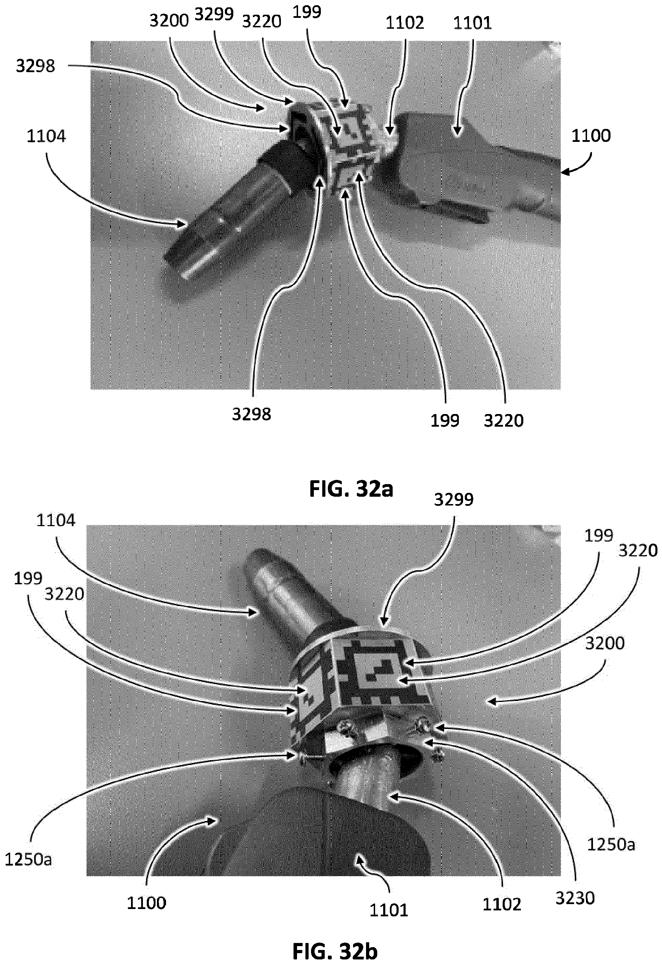

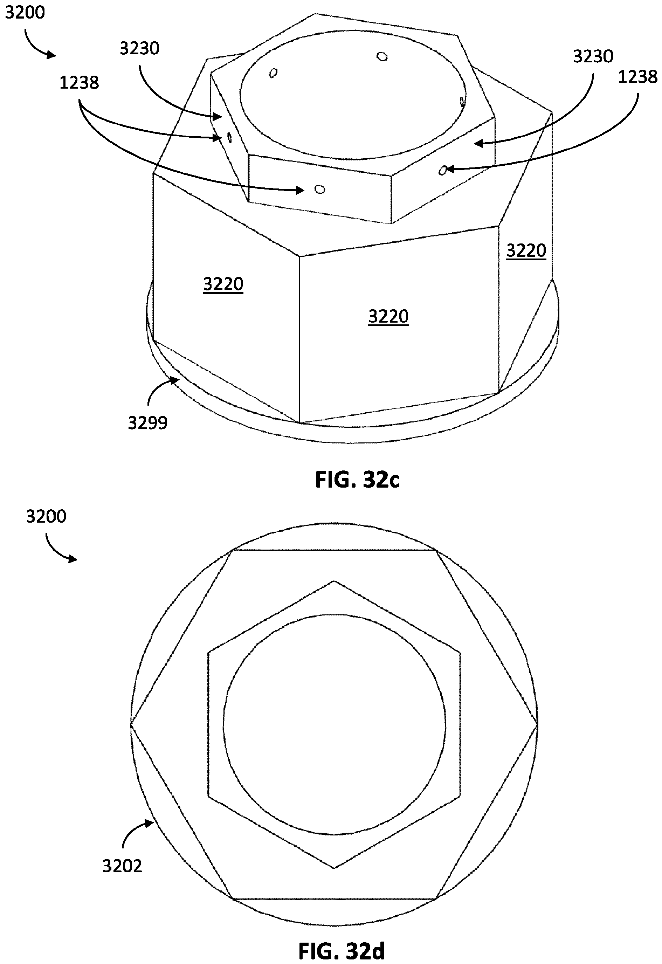

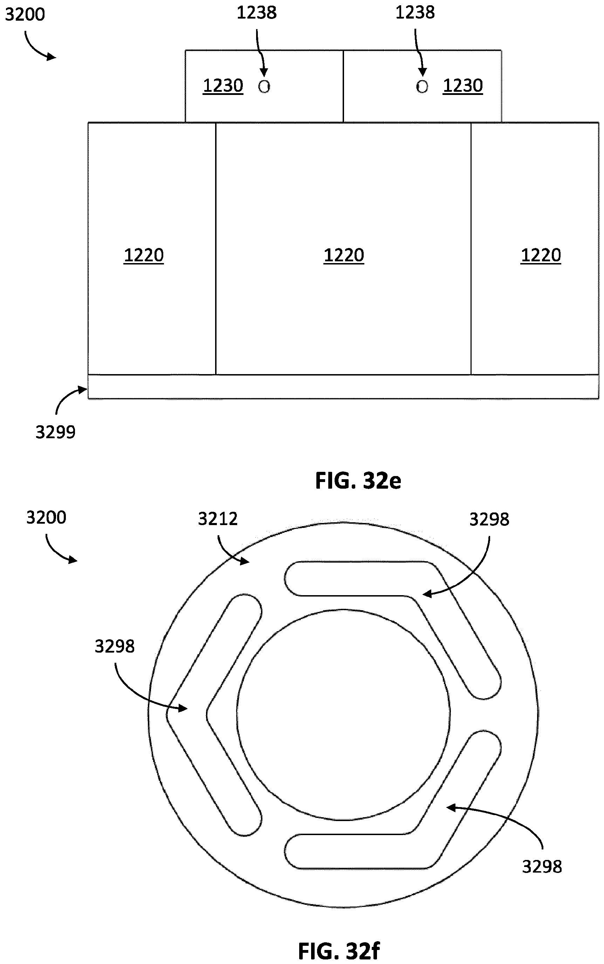

FIGS. 32a-32f show examples of a third alternative marker ring, in accordance with aspects of this disclosure.

The figures are not necessarily to scale. Where appropriate, the same or similar reference numerals are used in the figures to refer to similar or identical elements. For example, reference numerals utilizing lettering (e.g., workpiece 122a, workpiece 122b) refer to instances of the same reference numeral that does not have the lettering (e.g., workpieces 122).

### DETAILED DESCRIPTION

Some examples of the present disclosure relate to lightweight, self-contained, and highly portable welding technique monitoring systems that can be used to evaluate live and/or simulated welding-type operations. The disclosed welding technique monitoring systems use a portable support platform that can be easily transported to different welding stations/sites, providing a marked advantage over legacy monitoring systems that use heavy welding stands that are difficult to move between welding stations/sites. After an initial calibration, the systems can consistently and repeatedly monitor welding technique relative to a particular joint with no additional calibration necessary, even if there is sensor and/or platform movement. The systems are additionally able to detect a welding-type operation without the need to communicate with welding equipment, thereby removing the need to modify existing welding equipment to work with the systems. The systems are further configured for use with existing (rather than potentially expensive custom) welding-type tools, thereby keeping the systems low cost and highly portable. The systems are further configured to use off the shelf mobile devices for all the electronic functions, thereby simplifying equipment and/or power/battery management.

Some examples of the present disclosure relate to a marker ring configured for attachment to a welding tool, the marker ring comprising: a ring body, the ring body comprising: a ring inner surface extending at least partially around a ring bore that extends through the ring body, and a ring outer surface, comprising a plurality of outer sidewall faces connected together around the ring bore; a plurality of markers, each marker of the plurality of markers being positioned on a different outer sidewall face of the plurality of outer sidewall faces; and a fastener configured to fasten the marker ring to a handle, a neck, or a nozzle assembly of a welding torch.

In some examples, the fastener comprises a snap on fastener, a threaded fastener, a bolt fastener, a clamp fastener, a spring fastener, or an inflatable fastener. In some examples, the fastener extends through the ring body into the ring bore, or is configured to modify the diameter of the ring bore. In some examples, the ring outer surface comprises: a first ring outer surface comprising a first plurality of outer sidewall faces connected together in a first ring that encircles the ring bore, and a second ring outer surface comprising a second plurality of outer sidewall faces connected together in a second ring that encircles the ring bore.

In some examples, the ring body is centered around a ring axis, and a first outer sidewall face, of the first plurality of outer sidewall faces, is connected to an adjacent first outer sidewall face, of the first plurality of outer sidewall faces, at a first sidewall edge, and a second outer sidewall face, of the second plurality of outer sidewall faces, is connected to an adjacent second outer sidewall face, of the second plurality of outer sidewall faces, at a second sidewall edge, the first sidewall edge forming a first angle with respect to the ring axis, and the second sidewall edge forming a second angle with respect to the ring axis. In some examples, the first angle is different than the second angle. In some examples, the first angle is the same as the second angle.

In some examples, no first sidewall face of the first plurality of sidewall faces is parallel to any second sidewall face of the second plurality of sidewall faces. In some examples, no first outer sidewall face of the plurality of outer sidewall faces shares an edge with any second outer sidewall face of the second plurality of sidewall faces. In some examples, a number of the plurality of markers is equal to a quantity of the first plurality of outer sidewall faces, such that each first outer sidewall face has a first marker of the plurality of first markers.

Some examples of the present disclosure relate to a welding torch, comprising: a torch handle; a torch neck attached to the torch handle; a torch nozzle assembly attached to the torch neck, the nozzle assembly comprising a welding nozzle and electrode; and a marker ring attached to the torch handle, the torch neck, or the torch nozzle assembly, the marker ring comprising: a ring body, the ring body comprising: a ring inner surface extending at least partially around a ring bore that extends through the ring body, and a ring outer surface comprising a plurality of outer sidewall faces connected together around the ring bore, wherein the torch handle, the torch neck, or the torch nozzle assembly extends through the ring bore; and a plurality of markers, each marker of the plurality of markers being positioned on a different outer sidewall face of the plurality of outer sidewall faces.

In some examples, the marker ring further comprises a fastener that secures the marker ring to the torch handle, the torch neck, or the torch nozzle assembly. In some examples, the fastener extends through the ring body into the ring bore, is configured to modify the diameter of the ring bore, or comprises a snap on fastener, a threaded fastener, a screw fastener, a clamp fastener, a spring fastener, or an inflatable fastener. In some examples, the ring outer surface comprises: a first ring outer surface comprising a first plurality of outer sidewall faces connected together in a first ring that encircles the ring bore, and a second ring outer surface comprising a second plurality of outer sidewall faces connected together in a second ring that encircles the ring bore.

In some examples, the ring body is centered around a ring axis, and wherein a first outer sidewall face, of the first plurality of outer sidewall faces, is connected to an adjacent first outer sidewall face, of the first plurality of outer sidewall faces, at a first sidewall edge, and a second outer sidewall face, of the second plurality of outer sidewall faces, is connected to an adjacent second outer sidewall face, of the second plurality of outer sidewall faces, at a second sidewall edge, the first sidewall edge forming a first angle with respect to the ring axis, and the second sidewall edge forming a second angle with respect to the ring axis. In some examples, the first angle is different than the second angle. In some examples, the first angle is the same as the second angle.

In some examples, no first sidewall face of the first plurality of sidewall faces is parallel to any second sidewall face of the second plurality of sidewall faces. In some examples, no first outer sidewall face of the plurality of outer sidewall faces shares an edge with any second outer sidewall face of the second plurality of sidewall faces. In some examples, a number of the plurality of markers is equal to a quantity of the first plurality of outer sidewall faces, such that each first outer sidewall face has a first marker of the plurality of first markers.

FIG. 1 shows an example welding system 100 that includes an example welding technique monitoring system 200. While shown atop a table 102, in some examples, the welding technique monitoring system 200 may be otherwise positioned, such as, for example, mounted to a positioning arm (e.g., for out of position welding-type operations). In addition to the welding technique monitoring system 200, the welding system 100 is shown as including one or more remote input and/or output (I/O) devices 150 in communication with (e.g., a monitoring device 1500 of) the welding technique monitoring system 200. The welding system 100 is further shown as including welding-type equipment 104, and a welding-type tool 1100 having an attached marker ring 1200 (discussed further below with respect to FIGS. 11-12).

While shown as a welding torch or gun configured for gas metal arc welding (GMAW) in the example of FIG. 1, in some examples, the welding-type tool 1100 may instead be a different kind of welding-type tool 1100. For example, the welding-type tool 1100 may be an electrode holder (i.e., stinger) configured for shielded metal arc welding (SMAW), a torch and/or filler rod configured for gas tungsten arc welding (GTAW), a welding gun configured for flux-cored arc welding (FCAW), and/or a plasma cutter. While shown as a live welding-type tool 1100 in the example of FIG. 1, in some examples, the welding-type tool 1100 may be a mock welding-type tool, and/or be configured for mock (as opposed to live) welding-type operations, such as for (e.g., virtual/augmented reality) weld training.

In the example of FIG. 1, the welding-type tool 1100 is connected to a welding cable 106 that leads to, and puts the welding-type tool 1100 in electrical communication with, the welding-type equipment 104. In some examples, welding-type power (and/or consumables) for a welding arc may be provided to the welding-type tool 1100, by the welding-type equipment 104, via the welding cable 106. In some examples, the welding-type tool 1100 may transmit one or more signals to the welding-type equipment 104 when activated (e.g., via the welding cable 106), and the welding-type equipment 104 may provide the welding-type power (and/or consumables) for the arc in response.

In the example of FIG. 1, the welding-type equipment 104 comprises a welding-type power supply 108, wire feeder 109, and gas supply 111. In some examples, the wire feeder 109 may be configured to feed wire to the welding-type tool 1100 (e.g., via welding cable 106). In some examples, the gas supply 111 may be configured to route shielding gas to the welding-type tool 1100 (e.g., via welding cable 106). In some examples, the power supply 108 may be configured to route welding-type power to the welding-type tool 1100 (e.g., via welding cable 106).

In the example of FIG. 1, the power supply 108 includes power communication circuitry 110, control circuitry 112, and power conversion circuitry 114 interconnected with one another. In some examples, the power supply 108 may communicate with one or more external devices via one or more signals sent or received by the power communication circuitry 110. In some examples, the power conversion circuitry 114 may be configured to receive input power (e.g., from a generator, a battery, mains power, etc.) and convert the input power to welding-type output power, such as might be suitable for use by the welding-type tool 1100 for welding-type operations. In some examples, the power control circuitry 112 may be configured to control operation of the power communication circuitry 110 power conversion circuitry 114, wire feeder 109, and/or gas supply 111 (e.g. via one or more control signals) in accordance with one or more welding parameters.

In the example of FIG. 1, the welding-type equipment 104 further includes an operator interface 116. In some examples, the operator interface 116 may comprise one or more display screens, touch screens, knobs, buttons, levers, switches, microphones, speakers, lights, and/or other mechanisms through which an operator 118 may provide input to, and/or receive output from, the welding-type equipment 104. For example, an operator 118 may use the operator interface 116 to input one or more welding parameters (e.g., target voltage, current, wire feed speed, wire/filler type, wire/filler diameter, gas type, gas flow rate, welding-type process, material type of workpiece 122, position of welding-type process, etc.). As another example, the operator 118 may use the operator interface 116 to view and/or otherwise understand the current welding parameters of the welding-type equipment 104.

While shown as part of the power supply 108 in FIG. 1, in some examples, the operator interface 116, control circuitry 112, and/or power communication circuitry 110 (and/or some other control/communication circuitry) may be part of the wire feeder 109 and/or gas supply 111. In some examples, the welding-type equipment 104 may be omitted entirely, or may be mock and/or simulated welding-type equipment 104 (e.g., with no power conversion circuitry 114, wire feeder 109, and/or gas supply 112), such as may be used for training, simulated, and/or mock welding-type operations.

In the example of FIG. 1, the welding-type equipment 104 is connected to the welding technique monitoring system 200 via a grounding cable 120 that is connected to the welding-type equipment 104. In some examples, the grounding cable 120 may instead be attached to a workpiece 122 used by the welding technique monitoring system 200, rather than the welding technique monitoring system 200 itself. During live welding, the welding technique monitoring system 200, workpiece(s) 122, welding-type tool 1100, grounding cable 120 and/or welding cable 106 may form a closed circuit through which welding-type output power may be routed.

FIGS 2a-2b show enlarged examples of the welding technique monitoring system 200. In the examples of FIGS. 2a-2b, the welding technique monitoring system 200 is shown as including a monitoring device housing 206, a light filter housing 900, marker stands 208, platform connectors 210, power connectors 212, a joint alignment fixture 400, and handles 299 attached to a support platform 202.

In the example of FIGS. 2a-2d, the support platform 202 is shown as having a surface 201 that supports two welding workpieces 122 abutted together at a straight joint 124. Workpiece clamps 204 are shown securing one of the workpieces 122 to the support platform 202. In some examples, the workpieces 122 may be partially and/or loosely connected (e.g., via one or more tack welds), such that securing one workpiece 122 to the support platform 202 secures both workpieces 122 to the support platform 202. In some examples, the workpiece clamps 204 may be removably attached to the support platform 202, and/or repositionable with respect to the support platform 202 and/or the workpiece(s) 122 (e.g., via holes in the support platform 202).

In the examples of FIGS. 2a-2b, the support platform 202 has two platform portions: a monitoring platform 202a and an alignment platform 202b. Both platforms 202 are shown as being approximately equal sized square and/or rectangular platforms 202. Each platform 202 has two sets of aligned and/or collinear side edges 214 (with each set approximately parallel to the other set) and two sets of approximately parallel end edges 216. The end edges 216 of each platform 202 come together at an approximate center of the support platform 202 to form approximately parallel abutting edges 218.

In the example of FIGS. 2a-2d, the support handles 299, monitoring device housing 206, and light filter housing 900 are shown attached to the monitoring platform 202a, along with platform connectors 210a. The monitoring platform 202a further includes several input elements 220, each over which the welding-type tool 1100 may be positioned to provide a particular input. The marker stands 208, workpiece clamps 204, power connectors 212, and a joint alignment fixture 400 are shown attached to the alignment platform 202b, along with the platform connectors 210b.

In some examples, the monitoring platform 202a and alignment platform 202b of the support platform 202 are comprised of different materials. For example, the monitoring platform 202a may be comprised of a sturdy lightweight and/or spatter resistant material, such as aluminum or plastic, while the alignment platform 202b may be comprised of a material more suited to conducting electrical current suitable for a welding-type operation, such as steel. The power connectors 212 attached to the alignment platform 202b may be comprised of similarly conductive material. In some examples, one or more of the power connectors 212 may be used to connect the welding technique monitoring system 200 (and/or support platform 202) to the welding-type power supply 108, through the grounding cable 120 (e.g., via an intervening connector attached to the power connector 212 and grounding cable 120).

In the examples of FIGS. 2a-2d, both platforms 202 of the support platform 202 include platform connectors 210 configured to interface with one another to attach the monitoring platform 202a of the support platform 202 with the alignment platform 202b of the support platform 202. When both platforms 202 are connected together, the platforms 202 may be considered part of a single support platform 202.

In the examples of FIGS. 2a-2d, both platforms 202 of the support platform 202 are attached to bracket platform connectors 210a. The bracket platform connectors 210aa of the monitoring platform 202a are configured to connect with the bracket platform connectors 210ab of the alignment platform 202b at the abutting edges 218 of the platforms 202. In the examples of FIGS. 2a-2b, both sets of bracket platform connectors 210a are shown with holes that may align with their counterpart bracket platform connectors 210a when the platforms 202 are brought together at their abutting edges 218. In some examples, fasteners (e.g., screws, bolts, pins etc.) may be inserted through the aligned holes of the bracket platform connectors 210a to connect the platforms 202, and/or removed to disconnect the platforms 202. In some examples, other fastening mechanism that allow for connection and/or disconnection of the connectors 210a and/or platforms 202 may be used.

In the example of FIGS. 2a-2d, both platforms 202 of the support platform 202 are also attached to latch platform connectors 210b, albeit different types of latch platform connectors 210b. The latch platform connectors 210ba on the monitoring platform 202a of the support platform 202 are shown as latch arms, while the latch platform connectors 210bb on the alignment platform 202ba of the support platform are shown as latch catches. In some examples, each latch arm platform connector 210ba is configured to reach across the abutting edges 218 of the platforms 202 to clasp a latch catch platform connector 210bb, and thereby connect together the platforms 202. As shown, each latch arm platform connector 210ba includes a handle by which the latch arm may be manipulated to connect to and/or disconnect from a latch catch platform connector 210bb, thereby allowing for tool-less connection and/or disconnection of the platforms 202.

In the examples of FIGS. 2a-2d, the alignment platform 202b has more platform connectors 210 than the monitoring platform 202a. More particularly, the alignment platform 202b has twice as many platform connectors 210 as the monitoring platform 202a. One set of platform connectors 210 are positioned proximate the end edge 216b of the alignment platform 202b, while a second set of platform connectors 210 are positioned proximate the opposite abutting edge 218 of the alignment platform 202b. While a particular number of platform connectors 210 are shown in the examples of FIGS. 2a-2d, in some examples, more or fewer platform connectors 210 may be used. While both bracket platform connectors 210a and latch platform connectors 210b are shown in the examples of FIGS. 2a-2d (e.g., for redundancy and/or increased security), in some examples, the support platform 202 may include only one or the other.

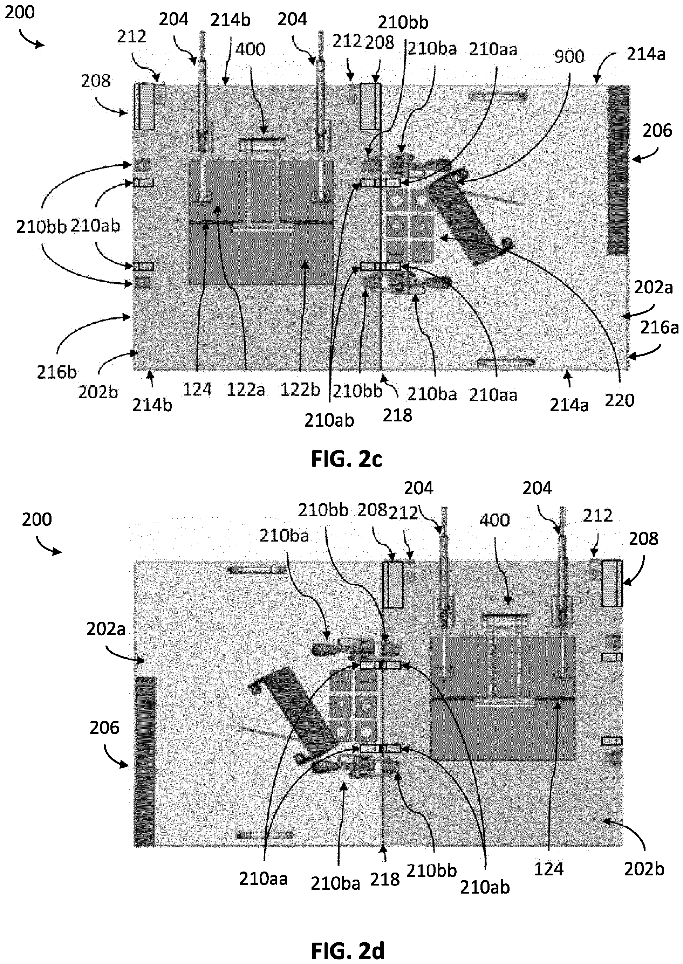

In some examples, the two opposite sets of platform connectors 210 on the alignment platform 202b of the support platform 202 allow for the alignment platform 202b to be connected to the monitoring platform 202a at two different (e.g., opposite) orientations that are approximately 180 degrees apart. FIG. 2c, for example, shows the alignment platform 202b connected to the monitoring platform 202a at a first orientation, while FIG. 2d shows the alignment platform 202b connected to the monitoring platform 202a at a second orientation that is approximately 180 degrees offset from the first orientation of FIG. 2c.

In some examples, the support platform 202 may be reconfigurable (e.g., via the alignment platform 202b) to ensure that, during a welding-type operation, the welding-type tool 1100 will be pointed away from a monitoring sensor 1502 (e.g., of a monitoring device 1500 housed in the monitoring device housing 206). Having the welding-type tool 1100 pointed away from the monitoring sensor 1502 may help to reduce the amount of sparks that come between the welding-type tool 1100 and monitoring sensor 1502 during a welding-type operation, as such sparks might interfere with and/or impede the detection capabilities of the monitoring sensor 1502. Additionally, the orientation of the alignment platform 202b may be reconfigurable to ensure that, regardless of which way the welding-type tool 1100 is pointed, the joint alignment fixture 400, marker stands 208, and workpiece clamps 204 can always be placed on a side of the joint 124 that is opposite to where the operator 118 will be positioned (e.g., to avoid obstructing and/or impeding the operator 118 during the welding-type operation).

In some examples, first and second orientations of the alignment platform 202b may correspond to right and left handed welding. For example, the first orientation of the alignment platform 202b shown in FIG. 2c may be used by a right handed welding operator 118, while the second orientation shown in FIG. 2d may be used by a left handed welding operator 118.

Whether right or left handed, a welding operator 118 generally prefers to hold the welding-type tool 1100 such that the welding-type tool 1100 is pointed across the body of the operator 118, from dominant hand to weaker hand. Thus, if the welding operator 118 is positioned below and facing the monitoring system 200 in FIGS. 2c-2d (opposite the joint 124 from the joint alignment fixture 400, marker stands 208, and workpiece clamps 204), a right handed operator 118 may seek to point the welding-type tool 1100 to the left. In contrast, a left handed operator 118 will seek to point and move the welding-type tool 1100 to the right.

Therefore, in the right handed configuration of FIG. 2c, the monitoring device housing 206 is positioned on the right side of the support platform 202 (as the operator 118 will likely point the welding-type tool 1100 to the left). In the left handed configuration of FIG. 2d, the monitoring device housing 206 is positioned on the left side of the support platform 202 (as the operator 118 will likely point the welding-type tool 1100 to the right). In both of FIGS. 2c-2d, the marker stands 208, joint alignment fixture 400, and workpiece clamps 204 are positioned on an opposite side of the joint 124 from where the operator 118 would be positioned (e.g., to avoid obstructing and/or impeding the operator 118 during the welding-type operation).

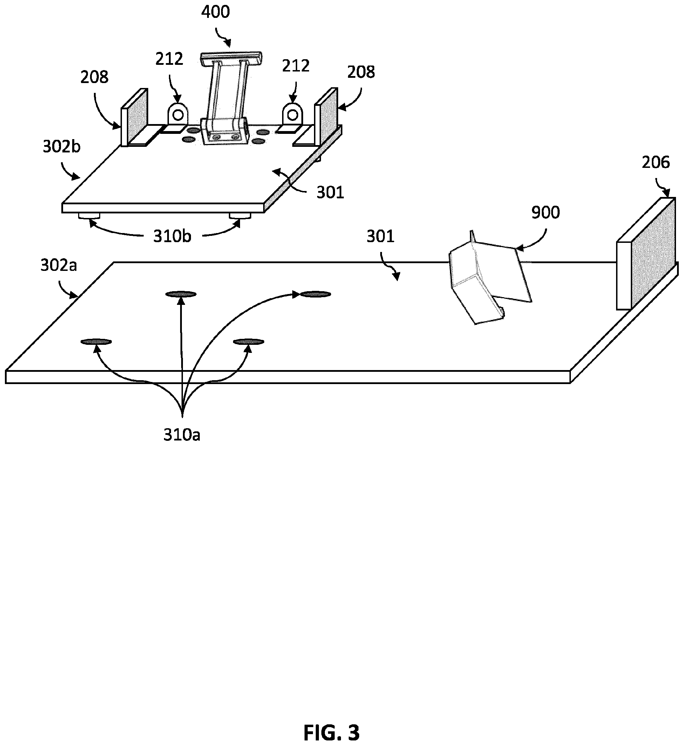

FIG. 3 shows an example of a monitoring system 200 with an alternative support platform 302. The alternative support platform 302 is shown as being comprised of an alternative monitoring platform 302a and alternative alignment platform 302b, similar to the monitoring platform 202a and alignment platform 202b of the support platform 202 of FIGS. 2a-2d. The light filter housing 900 and monitoring device housing 206 remain attached to the alternative monitoring platform 302a, similar to the monitoring platform 202a of FIGS. 2a-2d. The marker stands 208, power connectors 212, and joint alignment fixture 400 are shown attached to an alternative alignment platform 302b, similar to their arrangement with the alignment platform 202b of FIGS 2a-2d.

However, in the example of FIG. 3, the alternative monitoring platform 302a is much larger than the monitoring platform 202a of the support platform 202 of FIGS. 2a-2d. As shown, the alternative monitoring platform 302a is approximately double the size of the monitoring platform 202 of FIGS. 2a-2d; and approximately the same size of the entire support platform 202 of FIGS. 2d-2d.

Additionally, the alternative monitoring platform 302a no longer has platform connectors 210 at its abutting edge 218 that connect to complementary platform connectors 210 on the alignment platform 202b across the abutting edges 218. Rather, the alternative monitoring platform 302a has alternative platform connectors 310 (e.g., holes) on an upper surface 301 of the alternative monitoring platform that connect with complementary platform connectors 310 (e.g., protrusions) on an under surface of the alternative alignment platform 302. Thus, the alternative alignment platform 302b may sit atop the surface 301 of the alternative monitoring platform 302a when the two alternative platforms 302 are connected, and may be lifted off the surface and rotated approximately 180 to reconfigure for left or right handed welding.

In some examples, the alternative support platform 302 may have additional, or different, alternative platform connectors 310. For example, the alternative support platform 302 may use bracket platform connectors 210a and/or latch platform connectors 210b (e.g., similar to those shown in FIGS. 2a-2d) that extend from an upper surface 301 of the alternative alignment platform 302b (e.g., approximately parallel to the surface 301) and connect with bracket platform connectors 210b on the upper surface 301 of the alternative monitoring platform 302a.

In the examples of FIGS. 2a-2d, the monitoring sensor 1502 is shown as being part of a monitoring device 1500 having a display screen output device 1518 (and/or touch screen input device 1516). In the examples of FIGS. 2a-2d, both the monitoring sensor 1502 and display screen output device 1518 of the monitoring device 1500 are oriented facing the light filter housing 900, alignment platform 202b, marker stands 208, and joint alignment fixture 400. In some examples, the monitoring device 1500 may be a mobile device, such as, for example, a smartphone, tablet, personal data assistant, or other handheld digital device. In some examples, the monitoring device 1500 may be a camera (e.g., webcam). While shown as a single sensor in FIGS. 2a-2d, in some examples, the monitoring sensor 1502 (and/or monitoring device 1500) may comprise a plurality of monitoring sensors 1502.

In some examples, the monitoring sensor 1502 may comprise one or more motion sensors, depth sensors, camera sensors (e.g., infrared cameras, visible spectrum cameras, high dynamic range cameras, etc.), acoustic sensors, optical sensors, radio frequency (RF) sensors, ultrasonic sensors, magnetic sensors, acceleration sensors (e.g., accelerometers), gyroscopic sensors, and/other appropriate sensors. In some examples, the sensor data captured by the sensors 1502 may comprise one or more images, videos, sounds, temperatures, radio waves, heat waves, radiation measurements, and/or other appropriate data. In some examples, the acceleration sensor(s) may detect the direction(s) and/or magnitude(s) of linear acceleration(s) (e.g., due to gravity, etc.). In some examples, sensor data captured by the monitoring sensor(s) 1502 may allow the monitoring system 200 to track, detect, and/or record positions, orientations, and/or movement of the welding-type tool 1100 and/or other objects in the welding environment.

In the example of FIGS. 2a-2b, the monitoring device 1500 is sized to fit within the monitoring device housing 206 that is (e.g., removably) attached to the surface 201 of the support platform 202. When the monitoring device housing 206 is attached to the support platform 202, and the monitoring device 1500 is housed within the monitoring device housing 206, the monitoring sensor 1502 is located at a monitoring position. In some examples, the monitoring position (and/or sensor axis 2604; see, e.g., FIG. 26) of the monitoring sensor 1502 is approximately aligned with (e.g., an expected position and/or expected orientation of) the welding joint 124.

In some examples, the monitoring device housing 206 may be attached to the surface 201 of the support platform 202 via fasteners 101 that extend through passages 198 in the support platform 202 (see, e.g., FIG. 9a). In some examples, removal of the fasteners 101 may allow for removal of the monitoring device housing 206 from the support platform 202. In some examples, the fasteners 101 may be secured to the support platform 202, and removal of the monitoring device housing 206 from the fasteners 101 may remove the monitoring device housing 206 from the support platform 202.

In some examples, the monitoring device housing 206 may be overlaid with a housing cover. In some examples, the housing cover may help to protect the monitoring device 1500 from damage via collision, spatter, sparks, debris, etc. In some examples, the housing cover may be transparent so that the operator 118 can see a display screen of the monitoring device 1500 through the housing cover.

In the examples of FIGS. 2a-2d, the welding technique monitoring system 200 further includes a joint alignment fixture 400 configured to position the welding joint 124 at an expected position and/or in an expected orientation (e.g., approximately corresponding to the illustrated position/orientation of the joint 124). As shown, the joint alignment fixture 400 is attached to the surface 201 of the support platform 202. In some examples, the joint alignment fixture 400 is removably attached to the surface 201 of the support platform 202, such as, for example, through fasteners 101 that can be unfastened from the support platform 202 to disconnect and/or remove the joint alignment fixture 400 from the support platform 202.

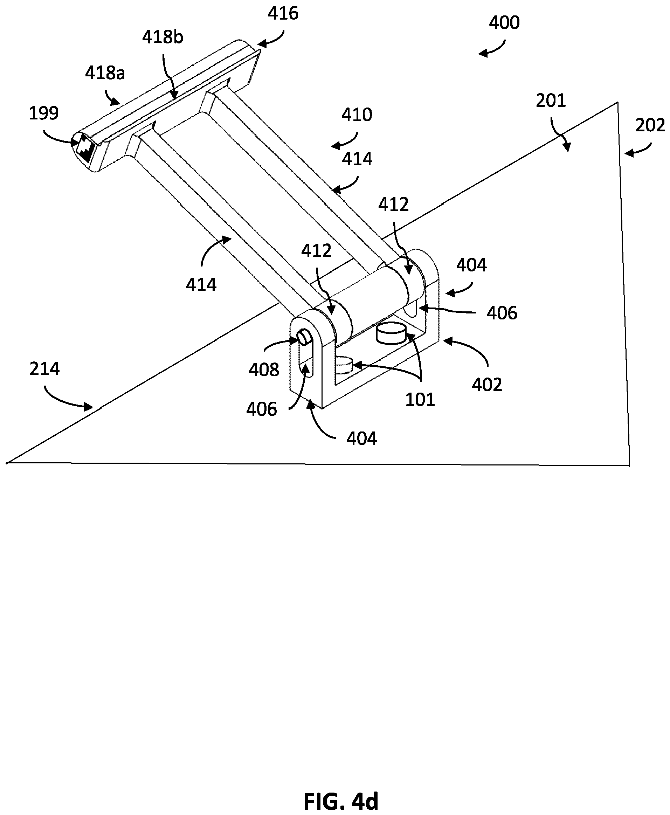

FIG. 4d shows an enlarged depiction of the joint alignment fixture 400 of FIGS. 2a-2d. In the example of FIG. 4d, the joint alignment fixture 400 includes a fixture base 402 attached to the support platform 202 via fasteners 101. The fixture base 402 includes two stanchions 404 extending up from (and/or approximately perpendicular to) the surface 201 of the support platform 202. As shown, the stanchions 404 are aligned approximately parallel to the side edge 214 of the support platform 202.

In the example of FIG. 4d, each stanchion 404 of the joint alignment fixture 400 includes an elongated elliptical slot 406 that extends approximately perpendicular to the surface 201 of the support platform 202. Like the stanchions 404 themselves, the slots 406 of the stanchions 404 are similarly aligned approximately parallel to the side edge 214 of the support platform 202. The joint alignment fixture 400 is further shown with a hinge pin 408 having ends positioned in the slots 406 of the stanchions 404 of the fixture base 402, such that the hinge pin is also aligned approximately parallel to the side edge 214 of the support platform 202. In some examples, the elongated slots 406 of the stanchions 404 allow for the hinge pin 408 to move up and down, towards and/or away from the surface 201 of the support platform 202.

In the example of FIG. 4d, a dual support alignment arm 410 is attached at one end to the hinge pin 408 via barrels 412 of each arm support 414. As shown, the arm supports 414 of the alignment arm 410 are connected to a crossbar 416 at the opposite end from the barrels 412. In some examples, the attachment of the alignment arm 410 to the hinge pin 408 causes the alignment arm 410 to move with the hinge pin 408 when the hinge pin 408 moves up and/or down in the slots 406 of the stanchions 404. In some examples, the attachment of the alignment arm 410 to the hinge pin 408 also enables the alignment arm 410 to rotate about an axis defined by the hinge pin 408, such that the crossbar 416 is moved in an arc towards or away from the (e.g., expected) position of the joint 124 (and/or towards or away from the side edge 214).

Because the joint alignment fixture 400 is fixed to the support platform 202, and the alignment arm 410 is of an unchanging length with a single axis of rotation, if the alignment arm 410 is used to position the joint 124 (e.g., via contact with the joint 124), then the joint 124 will always be placed at the same position relative to the joint alignment fixture 400. Additionally, for straight line joints 124, if at least two points of the alignment arm 410 make contact with the joint 124, the joint 124 is assured to always be at the same orientation relative to the joint alignment fixture 400 (e.g., aligned with a line passing through those two contact points).

Furthermore, the ability of the alignment arm 410 to move up and/or down via movement of the hinge pin 408 in the slots 406 of the stanchions 404 allows for the joint alignment fixture 400 to accommodate workpieces 122 of different thicknesses (e.g., extending to different heights above the surface 201 of the support platform 202). In particular, the ability of the alignment arm 410 to move up and/or down allows for the arm supports 414 of the alignment arm 410 to avoid contact with the workpiece(s) 122, regardless of their thickness. This, in turn, allows the arm supports 414 to extend parallel to the surface of the support platform 202 when the joint alignment fixture 400 makes contact with the joint 124, regardless of the material thickness of the workpiece(s) 122 (at least up to a practical point beyond which virtually no real life workpiece 122 extend).

In some examples, the alignment fixture 400 may be considered to be in an engaged position when the arm supports 414 extend parallel to the surface 201 of the support platform 202 and/or the alignment arm 416 makes contact with the joint 124 (and/or the workpiece(s) 122 defining the joint 124). In some examples, joint contacting elements 418 of the joint alignment fixture 400 may be used to contact and/or engage the joint 124 (and/or the workpiece(s) 122 defining the joint 124) to position and/or align the joint 124 at the expected joint position and/or orientation.

In the example of FIG. 4d, the crossbar 416 of the joint alignment fixture 400 has two joint contacting elements 418: a rounded edge joint contacting element 418a and a protruding edge joint contacting element 418b. These two joint contacting elements 418 ensure that at least some portion of the joint alignment fixture 400 has a line of contact with both workpieces 122 of a Tee/corner joint 124a, lap joint 124b, and/or butt joint 124c. Using the joint contacting elements 418, the joint alignment fixture 400 is able to properly position and orient the vast majority of straight joints 124.

In the example of FIG. 4d, the rounded edge joint contacting element 418a is an outer edge of the half cylinder portion of the crossbar 416 that extends between (and beyond) the two arm supports 414 of the alignment arm 410. The rounded edge joint contacting element 418a is configured such that a line along the rounded edge 418a (e.g., approximately parallel to the hinge pin 408) can make contact with a vertical workpiece 122a of a Tee joint 124a (and/or corner joint) when the alignment arm 410 is in the engaged position (see, e.g., FIG. 4a).

In some examples, the rounded edge 418a further prevents the crossbar 416 from pushing the vertical workpiece 122a away when the alignment arm 410 moves from the engaged position to a disengaged position (e.g., where the alignment arm 410 no longer makes contact with the workpiece(s) 122). Were the rounded edge 418a of the half-cylindrical crossbar 416 instead a flat surface of a half polygonal (e.g., rectangular) crossbar 416, the flat surface would push the workpiece 122a away as the alignment arm 410 is rotated from an engaged position (e.g., as shown in FIG. 4a) to a disengaged position (e.g., as shown in FIG. 4d). Thus, without the rounded edge 418a, the joint alignment fixture 400 might be unable to correctly position the workpiece 122a.

In some examples, the rounded edge joint contacting element 418a may instead be a corner edge. For example, an edge along a line of intersection of two sides of a triangular or half polygonal, rather than cylindrical, portion of the crossbar 416. In such examples, the corner edge joint contacting element would still form a line of contact, rather than a flat surface of contact, and therefore would not push the vertical workpiece 122a away when moving from the engaged position to a disengaged position.

In the example of FIG. 4d, the protruding edge joint contacting element 418b is a perimeter edge of a cuboidal protrusion extending from the crossbar 416. As shown, the protrusion extends from the half-cylindrical crossbar 416 proximate to where the crossbar 416 connects with the supports 414. The protruding edge joint contacting element 418b is shown extending from the crossbar 416 in a direction approximately perpendicular to the crossbar 416 (and/or at least one surface of the supports 414). The protruding edge joint contacting element 418b is configured such that at least some surface of the protruding edge joint contacting element 418b will form at least a line of contact with at least one workpiece 122 when the alignment arm 410 is in the engaged position, regardless of the type of joint 124. In some examples, when the alignment arm 410 is in the engaged position, the protruding edge joint contacting element 418b is approximately aligned with a sensor axis 2604 of the monitoring sensor 1502.

FIGS. 4a-4c show examples of the joint contacting elements 418 engaged with different types of joints 124. FIGS. 4a-4c are end views, oriented as if viewed from the non-abutting end edge 216b of the alignment platform 202b that is opposite the abutting edge 218. Only the joint alignment fixture 400, support platform 202, and workpieces 122 are shown in FIGS. 4a-4c for the sake of simplicity and explanation.

FIG. 4a shows the alignment arm 410 in the engaged position on a Tee joint 124a, with the rounded edge joint contacting element 418a abutting the vertical standing workpiece 122a, while the protruding edge joint contacting element 418b abuts the horizontal base workpiece 122b. While shown with respect to the Tee j oint 124a, a similar arrangement might also be used with a corner joint 124. As shown, the hinge pin 408 is lower in the slot 406 of the stanchion than in either of FIGS. 4b-4c, as very little height clearance is needed to get over the thin horizontal base workpiece 122b to reach the engaged position.

FIG. 4b shows the alignment arm 410 in the engaged position on a lap joint 124b, with the protruding edge joint contacting element 418b positioned in the corner of the lap joint 124b. In such a position, the left flat face of the protruding edge joint contacting element 418b abuts the right end of the upper workpiece 122a, while the adjacent bottom face of the protruding edge joint contacting element 418b contacts the upper surface of the lower workpiece 122b. The hinge pin 408 is also shown higher in the slot 406 of the stanchion 404 than in FIG. 4b, as the alignment arm 410 needs more height clearance to reach the engaged position over the workpieces 122.

In the example of FIG. 4c, the alignment arm 410 is in the engaged position on a butt joint 124c, with the protruding edge joint contacting element 418b positioned in the groove of the butt joint 124c. While in the groove, the protruding edge joint contacting element 418b contacts both workpieces 122, through opposite corner edges of the cuboidal protruding edge joint contacting element 418b. Additionally, the hinge pin 408 is shown approximately midway up the slot 406 of the stanchion 404 (higher than in both FIGS. 4a-4b), giving the alignment arm 410 enough room to reach the engaged position over the relatively thick workpieces 122.

While the joint contacting elements 418 of the joint alignment fixture 400 will always be adequate for engaging and aligning a Tee joint 124c, there may be situations where certain lap joints 124b and/or butt joints 124c present problems. For example, there may be a lap joint 124 where the upper workpiece 122a has a thickness and/or width that is greater than the length of the protruding edge joint contacting element 418b. In such an example, the protruding edge joint contacting element 418b may have trouble making contact with the lower workpiece 122b when the alignment arm 410 is in the engaged position. As another example, there may be a butt joint 124c where the groove is wider than the protruding edge joint contacting element 418b down to a depth that is greater than the length of the protruding edge joint contacting element 418b. In such an example, the protruding edge joint contacting element 418b may have trouble making contact with both workpieces 122 when the alignment arm 410 is in the engaged position.

FIGS. 5a-5b show examples of first alternative joint alignment fixtures 500. As shown, each first alternative joint alignment fixture 500 has several different first alternative alignment arms 510, each first alternative alignment arm 510 having differently sized joint protruding edge joint contacting elements 418b. The differently sized joint protruding edge joint contacting elements 418b provide options from which an operator 118 can select the most appropriately sized protruding edge joint contacting elements 418b for a particular joint 124. The first alternative j oint alignment fixture 500 additionally exhibits several mechanisms for switching between differently sized alternative protruding edge joint contacting elements 418b.

FIG. 5a shows a front view of the first alternative joint alignment fixtures 500, such as might be seen when viewed from the side edge 214b of the support platform 202 farthest from the joint alignment fixture 400 (other elements of the welding technique monitoring system 200 besides the joint alignment fixtures 500 are omitted for the sake of simplicity and explanation). More particularly, FIG. 5a shows two first alternative alignment fixtures 500 positioned side by side on the support platform 202. As shown, the two first alternative alignment fixtures 500 are identical save for their protruding edge joint contacting elements 418b. FIG. 5b shows a side view of one of the first alternative alignment fixtures 500, such as might be seen when viewed from the end edge 216b of the alignment platform 202b opposite the abutting edge 218 (other elements of the welding technique monitoring system 200 besides the joint alignment fixture 500 are omitted for the sake of simplicity and explanation).

The first alternative alignment joint fixture 500 shown in the examples of FIGS. 5a-5b shares some similarities with the joint alignment fixture 400 discussed above with respect to FIGS. 2a-2d and 4a-4d. Like the joint alignment fixture 400, each first alternative joint alignment fixture 500 is shown as including a first alternative fixture base 502 attached to the support platform 202. Each first alternative fixture base 502 also includes slots 406 within which is retained a hinge pin 408. In FIG. 5b, the first alternative alignment arm 510 is shown attached to the hinge pin 408 via dual arm supports 414 of the first alternative alignment arm 510. The dual arm supports 414 are additionally connected via an alternative crossbar 516 that includes joint contacting elements 418.

Unlike the joint alignment fixture 400 discussed above, each first alternative joint alignment fixture 500 is shown as including two first alternative alignment arms 510 attached to a single hinge pin 408. As shown in FIG. 5b, each of the two first alternative alignment arms 510 has two protruding edge joint contacting element 418b, with each protruding edge joint contacting element 418b protruding from an opposite side of the alternative crossbar 516 than the other. Additionally, each protruding edge joint contacting element 418b is of a different size than each other protruding edge joint contacting element 418b (e.g., with respect to width and/or length).

FIGS. 5a-5b show several different mechanisms through which the first alternative joint alignment fixture(s) 500 can be reconfigured to switch between differently sized protruding edge joint contacting elements 418b. For example, the first alternative joint alignment fixture 500b may be used instead of the first alternative joint alignment fixture 500a, which will result in a differently sized protruding edge joint contacting element 418b being used for joint 124 alignment. While using different first alternative joint alignment fixtures 500 may result in the joint 124 being differently positioned, the welding technique monitoring system 200 may be configured to recognize which first alternative joint alignment fixture 500 is being used, and compensate accordingly.

Another example of a mechanism through which the first alternative joint alignment fixture(s) 500 can be reconfigured to switch between protruding edge joint contacting elements 418b is the rotatable first alternative fixture base 502 and rotatable alternative crossbar 516 of each first alternative joint alignment fixture 500. FIG. 5b shows an example of a first alternative fixture base 502 that can be pulled away from a surface connector 520 attached to the support platform 202, and rotated approximately 180 degrees, so that the protruding edge joint contacting element 418b on the opposite side of the alternative crossbar 516 can be used for joint 124 alignment. The first alternative fixture base 502 nevertheless maintains connection with the surface connector 520 at all times via a stretchable cable 522 to reduce the potential for loss of parts. However, in some examples, the cable 522 may be omitted, and the first alternative fixture base 502 may be fully removed (e.g., by removing fasteners 101 connecting the first alternative fixture base 502 to the platform connector 210 and/or support platform 202) and then rotated and reattached.

FIG. 5b also shows examples of alternative crossbars 516 that may similarly be pulled away from support connectors 524 attached to the arm supports 414 of the first alternative alignment arm 510, and then rotated approximately 180 degrees, so that the protruding edge joint contacting element 418b on the opposite side of the alternative crossbar 516 can be used for joint 124 alignment. Like the first alternative fixture base 502, the alternative crossbar 516 maintains connection with the support connector 524 via stretchable cable 522. However, in some examples, the cable 522 may be omitted, and the alternative crossbar 516 may be fully removed (e.g., by removing fasteners connecting the alternative crossbar 516 to the support connector 524 and/or arm supports 414) and then rotated and reattached.

Another example of a mechanism through which the first alternative joint alignment fixture(s) 500 can be reconfigured to switch between protruding edge joint contacting elements 418b is the removable hinge pin 408. FIGS. 5a-5b shows examples of alternative fixture bases 502 with caps 526 at the top of each stanchion 404 that can be moved to open the slot 406 in which the hinge pin 408 is disposed. Once the slot 406 of the stanchion is opened via the cap 526, the hinge pin 408 can be removed. After removal, the pin 408, along with the attached alignment arm(s) 510 and crossbar 516, can be rotated approximately 180 degrees, so that the protruding edge joint contacting element 418b on the opposite side of the crossbar 516 can be used for joint 124 alignment.

Another example of a mechanism through which the first alternative joint alignment fixture(s) 500 can be reconfigured to switch between protruding edge joint contacting elements 418b is the detachable first alternative alignment arms 510. FIG. 5b shows an example of first alternative alignment arms 510 having clips 512 at the connecting end of the arm supports 414 rather than barrels 412. In some examples, the clips 512 can be attached to and/or detached from the hinge pin 408, thereby attaching and/or detaching the arm support 414 and/or first alternative alignment arm 510 attached to each clip 512. In this way, even if the hinge pin 408 is not removable from the slots 406, the first alternative alignment arm 510 can be disconnected from the hinge pin 408, rotated approximately 180 degrees, and then reattached so that the protruding edge joint contacting element 418b on the opposite side of the crossbar 516 can be used for joint 124 alignment.

In some examples, the different mechanisms for switching between differently sized alternative protruding edge joint contacting elements 418b may be mixed and matched, with some (or all) of them used with the first alternative joint alignment fixture 500 (and/or previously discussed joint alignment fixture 400), while some others are not used. While, in the examples of FIGS. 5a-5b, other elements of the welding technique monitoring system 200 besides the j oint alignment fixture 400 are omitted for the sake of simplicity and explanation, it should be understood that the first alternative joint alignment fixture 500 may be integrated into the welding technique monitoring system 200 similarly, or identical, to the that of the previously discussed joint alignment fixture 400.

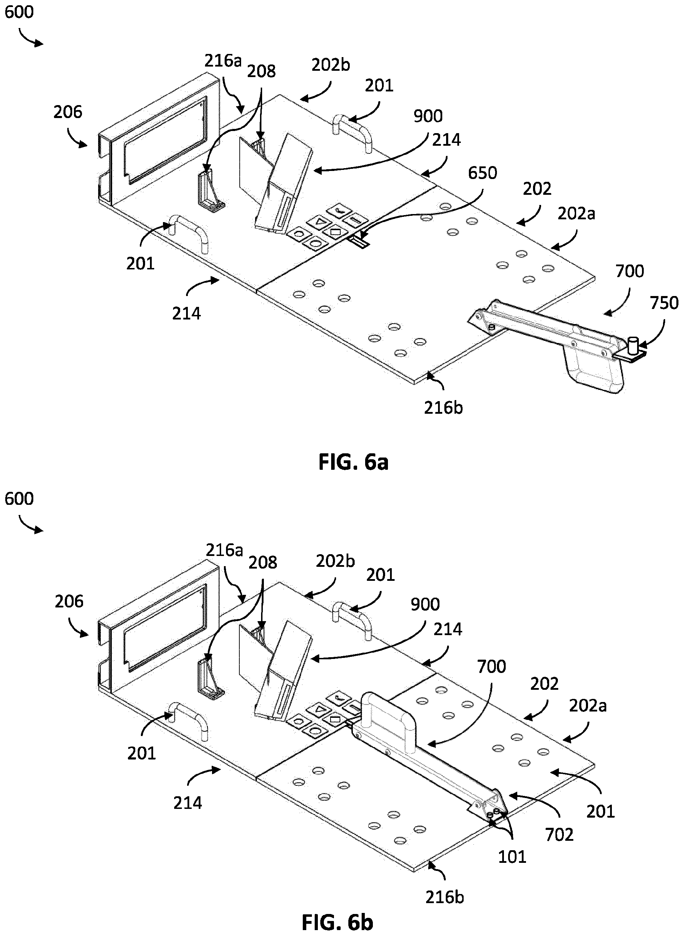

FIGS. 6a-6b show examples of a first alternative welding technique monitoring system 600 comprising a second alternative joint alignment fixture 700. In some examples, the first alternative welding technique monitoring system 600 may be used in the welding system 100 as an alternative to, or in addition to, the welding technique monitoring system 200. As shown, the first alternative welding technique monitoring system 600 is similar to the welding technique monitoring system 200 of FIGS. 2a-2d. For example, the first alternative welding technique monitoring system 600 has a support platform 202 comprised of two portions: a monitoring platform 202a and an alignment platform 202b, which may be composed of different materials, as discussed above. Additionally, attached to the surface 201 of the support platform 202 are handles 299, a monitoring device housing 206, a light filter housing 900, and marker stands 208.

However, the first alternative welding technique monitoring system 600 of FIGS. 6a-6b differs from the welding technique monitoring system 200 of FIGS. 2a-2d in several respects. For example, unlike the welding technique monitoring system 200, the first alternative welding technique monitoring system 600 is configured to accommodate both left and right handed welding without the need for reconfiguration of the alignment platform 202b. In particular, the second alternative joint alignment fixture 700 used in the first alternative welding technique monitoring system 600 is configured to accommodate both left and right handed welding, without the need for reconfiguration of the alignment platform 202b. Thus, while the support platform 202 of the first alternative welding technique monitoring system 600 comprises a monitoring platform 202a and an alignment platform 202b, the platform connectors 210 used to connect and/or disconnect the platforms 202 in the monitoring system 200 do not appear in the first alternative monitoring system 600 shown in FIGS. 6a-6b. Instead, the monitoring platform 202a and an alignment platform 202b are shown as integrally and/or permanently connected in FIGS. 6a-6b.

The first alternative welding technique monitoring system 600 shown in FIGS. 6a-6b additionally differs from the welding technique monitoring system 200 of FIGS. 2a-2d in that the marker stands 208 are attached to the monitoring platform 202a rather than the alignment platform 202b. In some examples, the marker stands 208 serve as reference points that will always be a particular distance and/or direction from the expected joint position and/or orientation. As the alignment platform 202b has the potential to be disconnected and/or reconnected to the monitoring platform 202a in welding technique monitoring system 200 of FIGS. 2a-2d, the marker stands 208 are connected to the alignment platform 202b to ensure the marker stands 208 remain a constant distance and/or direction from the expected joint position and/or orientation (and/or the joint alignment fixture 400).

However, because the alignment platform 202b of the first alternative welding technique monitoring system 600 is not reconfigurable with respect to the monitoring platform 202a, there is no need for the marker stands 208 to be on the alignment platform 202b. Additionally, the markers 199 of the marker stand 208 are more easily detectable by the monitoring sensor 1502 the closer the markers 199 are to the monitoring sensor 1502. Thus, the first alternative welding technique monitoring system 600 positions the marker stands 208 on monitoring platform 202a, near the light filter housing 900.

The first alternative welding technique monitoring system 600 shown in FIGS. 6a-6b additionally differs from the welding technique monitoring system 200 of FIGS. 2a-2d in that the alignment platform 202b includes an aperture 650 sized to snugly fit a connector 750 of the second alternative joint alignment fixture 700. In some examples, insertion of the connector 750 in the aperture 650 of the alignment platform 202b may restrict movement of a second alternative alignment arm 710 of the second alternative joint alignment fixture 700 toward or away from either side edge 214 of the support platform 202. In this way, the aperture 650 and platform connector 210 may help to ensure the second alternative alignment arm 710 remains consistently aligned with the expected joint orientation (e.g., to guard against loose hinges 704). While shown on the alignment platform 202b in the example of FIG. 6a, in some examples, the aperture 650 may instead be positioned on the monitoring platform 202a.

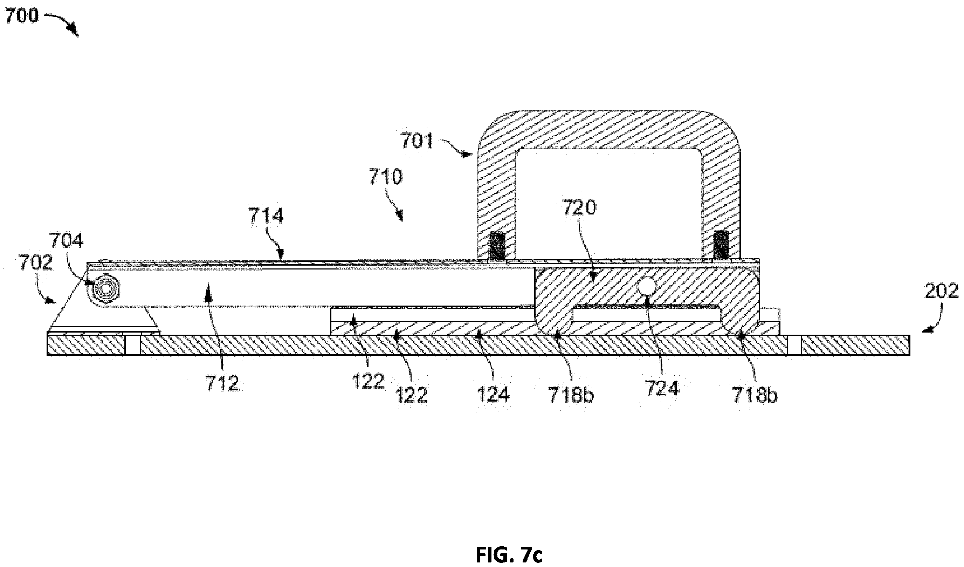

The first alternative welding technique monitoring system 600 shown in FIGS. 6a-6b additionally differs from the welding technique monitoring system 200 of FIGS. 2a-2d with respect to the second alternative j oint alignment fixture 700. FIGS. 7a-7c show enlarged depictions of the second alternative joint alignment fixture 700. The connector 750 is omitted from the end view of FIG. 7b and side view of FIG. 7c in the interest of clarity and explanation.

In the examples of FIGS. 7a-7c, the second alternative joint alignment fixture 700 includes a second alternative fixture base 702. In FIG. 6b, the second alternative fixture base 702 is shown fastened to the surface 201 of the alignment platform 202b via fasteners 101 proximate an end edge 216 of the support platform 202, approximately (e.g., within 0-3% of being) midway between the two side edges 214 of the support platform 202. In the example of FIGS. 7a-7c, the second alternative fixture base 702 further includes aligned hinges 704 defining an axis of rotation approximately parallel to the end edge 216 of the support platform 202 and/or perpendicular to an expected orientation of the joint 124.

In the examples of FIGS. 7a-7c, the second alternative joint alignment fixture 700 further includes a second alternative alignment arm 710. In the examples of FIGS. 7a-7b, the second alternative alignment arm 710 is "U" shaped, with two arm sidewalls 712, a top arm wall 714 connecting the arm sidewalls 712, and an open ended inner cavity 716 between the arm sidewalls 712 and bounded on one end by the arm top wall 714. The arm sidewalls 712 of the second alternative alignment arm 710 are attached to the hinges 704 of the second alternative fixture base 702 at one end. In the example of FIG. 7a, the platform connector 210 is connected to the end of the second alternative alignment arm 710 opposite the hinges 704. An arm handle 701 is attached to the arm top wall 714 proximate the platform connector 210 to assist an operator 118 in moving the second alternative alignment arm 710 about the hinges 704 between engaged and disengaged positions.

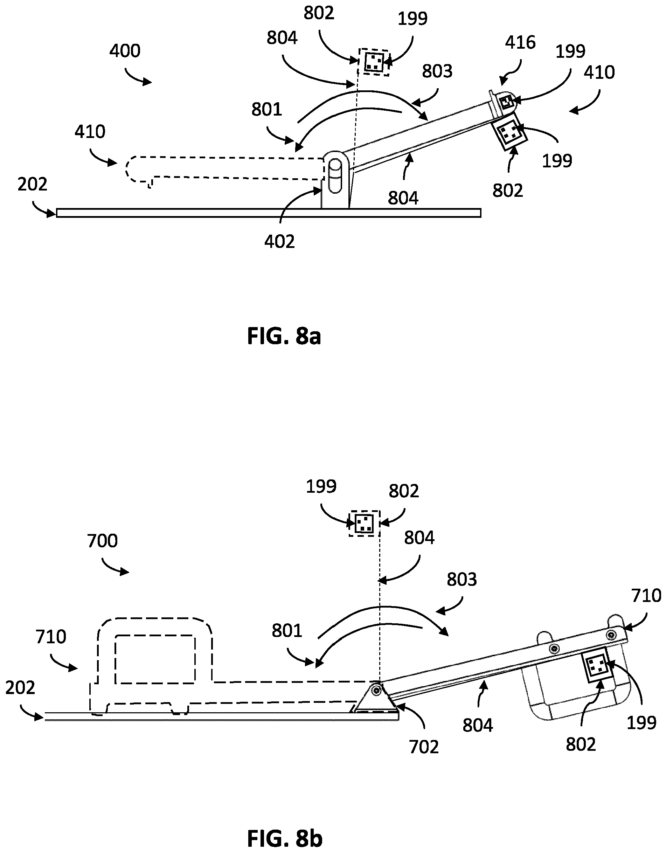

In some examples, the second alternative alignment arm 710 may be considered to be fully engaged when rotated as far as possible about the hinges 704 in a first direction 801 (see, e.g., FIG. 8b) towards the monitoring device housing 206, the workpiece(s) 122, the joint 124, and/or the expected position of the joint 124. In some examples, the second alternative alignment arm 710 may be considered to be partially engaged when rotated about the hinges 704 in the first direction 801 to a point where the end with the handle 701 is above the support platform 202, but not yet fully engaged.

In some examples, the second alternative alignment arm 710 may be considered to be fully disengaged when rotated about the hinges 704 as far as possible in a second direction 803 (see, e.g., FIG. 8b) away from the monitoring device housing 206. In some examples, the second alternative alignment arm 710 may be considered to be partially disengaged when the second alternative alignment arm 710 has been rotated about the hinges 704 in the second direction 803 to a point where the end with the handle 701 is no longer above the support platform 202, but not yet fully disengaged.

As noted above, and seen, for example, in FIGS. 6a-6b, the second alternative joint alignment fixture 700 is attached via its fixture base 702 to the surface 201 of the support platform 202 proximate the end edge 216 of the alignment platform 202b, and approximately midway between the side edges 21. Additionally, the hinges 704 of the fixture base 704 allow the second alternative alignment arm 710 to be moved to a disengaged position away from the welding joint 124 that will be operated on during a welding-type operation. Thus, the second alternative joint alignment fixture 700 need never impede and/or obstruct a welding-type operation, regardless of which side of the support platform 202 the operator 118 stands and/or which hand the operator 118 uses, as long as the second alternative alignment arm 710 is moved to a disengaged position prior to a welding-type operation. Therefore, no reconfiguration of the first alternative welding technique monitoring system 600 is necessary to accommodate left or right handed welding, other than shifting the workpiece(s) 122 slightly toward or away from one of the side edges 214 of the support platform 202, and/or moving the clamps 204 to the other side of the support platform 214b (e.g., proximate the opposite side edge 214b).

Instead, the second alternative joint alignment fixture 700 is configured with alternative joint contacting elements 718 that can accommodate joints 124 positioned for left and/or right handed welding from either side of the support platform 202 and/or second alternative joint alignment fixture 700. In the examples of FIGS. 7a-7c, the second alternative alignment arm 710 has two sets of alternative joint contacting elements 718: rounded bumper joint contacting elements 718a and protruding tab joint contacting elements 718b. Like the joint contacting elements 418 discussed above, the alternative joint contacting elements 718 ensure that at least some portion of the second alternative j oint alignment fixture 700 has two points of contact with both workpieces 122 of a joint 124, thereby ensuring proper positioning and/or alignment of the joint 124. Using the alternative joint contacting elements 718, the second alternative joint alignment fixture 700 is able to properly position and orient the vast majority of straight joints 124.

In the examples of FIGS. 7a-7c, two rounded bumper joint contacting elements 718a are positioned on each arm sidewall 712 of the second alternative alignment arm 710. As shown, each rounded bumper joint contacting element 718a is a half sphere that extends from the arm sidewall 712 in a direction approximately perpendicular to the arm sidewall 712. In some examples, the rounded bumper joint contacting elements 718a are configured to contact the vertical workpiece 122 of a Tee/corner joint 124a, similar to the rounded edge joint contacting element 418a discussed above. Two rounded bumper joint contacting elements 718a are positioned on each arm sidewall 712 to ensure two points of contact can be made with the workpiece 122 on either side of the alignment arm 410 (e.g., to accommodate both left and right handed welding).

In the examples of FIGS. 7a-7c, two protruding tab joint contacting elements 718b extend from an armature 720 positioned within the inner cavity 716 of the second alternative alignment arm 710, on the other side of the arm top wall 714 from the handle 701. As shown, the armature 720 is sandwiched between two pivot supports 722 also positioned within the inner cavity 716 on the opposite side of the arm top wall 714 from the handle. The armature 720 is additionally attached to the pivot supports 722 at a pivot 724 that defines a pivot axis (e.g., approximately perpendicular to the arm sidewalls 712 and/or armature 720) about which the armature can rotate. As shown, the armature 720 can rotate about the pivot 724 in a plane approximately parallel to the arm sidewall 712.

At the ends of the armature 720 are shown tabs 718b that protrude perpendicular to the armature 720 out of the cavity 716. The armature 720 is configured to rotate about the pivot 724 such that when one tab 718b moves one direction (e.g., up), the other tab 718b moves the opposite direction (e.g., down). Thus, when one protruding tab joint contacting element 718 is pushed up (e.g., due to contact with a workpiece 122), the other protruding tab joint contacting element 718 is pushed down until it also contacts the workpiece 122, at which point the protruding tab joint contacting elements 718 reach equilibrium.

In some examples, the tabs 718b are configured to extend into the groove of a butt joint 124c and contact the workpieces 122 within, extend over and against the edge of a lap joint 124b and contact the workpieces 122 forming the lap joint 124b, and/or contact the lower/horizontal/base workpiece 122 in a Tee joint 124a, similar to the protruding edge joint contacting element 418b discussed above. In this way, the tabs 718b ensure at least two points of contact can be made with at least one workpiece 122 (e.g., regardless of whether right or left handed welding is used.

Once the joint 124 and/or workpieces 122 are correctly positioned and/or oriented through use of the joint alignment fixture 400 (and/or first alternative joint alignment fixture 500 and/or second alternative joint alignment fixture 700), the operator 118 may use the clamps 204 to secure the workpiece 122 in place so that the workpieces 122 do not move. In the examples of FIGS. 2a-2b and 6a-6b, the surface 201 of the support platform 202 includes holes configured to accommodate certain clamps 204 at different positions. Other clamps 204 may not need the holes and/or be able to connect to the support platform 202 to secure the workpiece(s) 122 regardless.

After clamping, the joint alignment fixture 400 (and/or first alternative joint alignment fixture 500 and/or second alternative joint alignment fixture 700) may be disengaged from the workpiece(s) 122 by rotating the alignment arm 410/510/710 away from the workpiece(s) 122. Once disengaged, the alignment arm 410/510/710 will be out of the way of any subsequent welding-type operation, and therefore less likely to impede the welding-type operation and/or be subject to damage due to outputs of the welding-type operation (e.g., particulates, sparks, heat, smoke, etc.). In some examples, the alignment arm 410, first alternative alignment arm 510, and/or second alternative alignment arm 710 may be spring biased towards the disengaged position, so that the alignment arm 410/510/710 will default to the disengaged (out of the way) position when not in use.

In some examples, the welding technique monitoring system 200 (and/or first alternative welding technique monitoring system 600) may detect whether the alignment arm 410/510/710 is in an engaged or disengaged position, and operate accordingly. To assist in this endeavor, the joint alignment fixtures 400/500/700 may be outfitted with one or more markers 199 that can be detected by the welding technique monitoring system 200. In some examples, detection of the markers 199 may enable the welding technique monitoring system 200 (and/or first alternative welding technique monitoring system 600) to determine a (e.g., three dimensional (3D)) position of the alignment arm 410/510/710, which can then be used to determine whether the position is an engaged or disengaged position. In some examples, detection of the marker(s) 199 associated with the first alternative joint alignment fixture 500 may additionally enable the welding technique monitoring system 200 to determine which first alternative alignment arm 510 (and/or which joint contacting element 418) is in which position.

In some examples, one or more of the markers 199 may comprise an active or passive tag. In some examples, one or more of the markers 199 may comprise a fiducial tag, such as, for example, an April Tag. In some examples, one or more of the markers 199 may comprise a unique asymmetrical visual pattern that encodes information that can be used to identify both a three dimensional position and a three dimensional orientation of the marker 199. In some examples, one or more of the markers 199 may have a flat/matte finish (e.g., rather than glossy) in order to reduce reflections from a welding arc or welding environment that may interfere with tracking. In some examples, one or more of the markers 199 may comprise labels, etchings, and/or paintings.

FIG. 8a shows a side view of an example of a joint alignment fixture 400, such as might be seen from the end edge 216a of the monitoring platform 202a, for example. Other elements of the welding technique monitoring system 200 besides the joint alignment fixture 400 and support platform 202 are omitted for clarity. While the discussion of FIG. 8a below focuses on the joint alignment fixture 400 for the purpose of simplicity, the discussion is equally applicable to the first alternative joint alignment fixture 500.

In the example of FIG. 8a, a marker 199 is attached to a side surface of the crossbar 416 of the alignment arm 410 of the joint alignment fixture 400 (see also, e.g., FIG. 4d). The alignment arm 410 is shown in solid line in a disengaged position, and in dashed line in an engaged position. In some examples, the alignment arm 410 (and/or the marker 199 on the alignment arm 410) may be viewable and/or detectable by the monitoring sensor 1502 when in the disengaged position, and not viewable and/or detectable by the monitoring sensor 1502 when in the engaged position (e.g., due to the light filter 902 and/or light filter housing 900).

In the example of FIG. 8a, the j oint alignment fixture 400 further includes a marker flag 802 attached to a flagpole 804. As shown, the flagpole 804 is, in turn, attached to the fixture base 402 of the joint alignment fixture 400. In some examples, the flagpole 804 may alternatively be attached to the support platform 202 proximate the fixture base 402, such as, for example, between the fixture base 402 and the closest side edge 214 of the support platform 202. As shown, the marker flag 802 includes a marker 199.

In the example of FIG. 8a, the marker flag 802 and flagpole 804 are shown in solid and dashed lines to exhibit their positions when the alignment arm 410 is in the corresponding solid line disengaged position and/or the dotted line engaged position. In the example of FIG. 8a, the solid line flagpole 804 is bent backward by the crossbar 416 (and/or other portions) of the alignment arm 410 when the alignment arm 410 is in the solid line disengaged position. In some examples, both the marker 199 on the marker flag 802, and the marker 199 on the crossbar 416 may be visible and/or detectable by the monitoring system 200 when in this position (e.g., to the side of the light filter 902 and/or light filter housing 900). As shown, the dotted line flagpole 804 extends up unobstructed from the support platform 202 when the alignment arm 410 is in the dotted engaged position. In some examples, the marker flag 802 and associated marker 199 may be visible and/or detectable by the monitoring sensor 1502 when so raised (e.g., above the light filter 902 and/or light filter housing 900).

FIG. 8b shows a side view of an example of a second alternative joint alignment fixture 700, such as might be seen from a side edge 214 of the support platform 202, for example. Other elements of the first alternative welding technique monitoring system 600 besides the second alternative joint alignment fixture 700 and support platform 202 are omitted for clarity. FIG. 8b shows the second alternative alignment arm 710 is shown in solid line in a disengaged position, and in dashed line in an engaged position.

In the example of FIG. 8b, the second alternative alignment arm 710 does not have a marker 199 because the orientation of the second alternative alignment arm 710 relative to the monitoring sensor 1502 is less conducive to detection of a marker 199 when the second alternative alignment arm 710 is an engaged or disengaged position. However, a flagpole 804 is shown attached to the second alternative fixture base 702 of the second alternative joint alignment fixture 700, with a marker flag 802 (having a marker 199) at the end of the flagpole 804. In some examples, the flagpole 804 may alternatively be attached to the support platform 202 proximate the second alternative fixture base 702, such as, for example, between the second alternative fixture base 702 and the closest end edge 216 of the support platform 202. While shown as in a particular orientation in the example of FIG. 8b for the sake of explanation and clarity, in some examples, the marker flag 802 and/or marker may be oriented differently (e.g., to be more conducive to detection by the monitoring sensor 1502).

In the example of FIG. 8b, the marker flag 802 and flagpole 804 are shown in solid and dashed lines to exhibit their positions when the second alternative alignment arm 710 is in the corresponding solid line disengaged position and/or the dotted line engaged position. In the example of FIG. 8b, the solid line flagpole 804 is bent backward by the second alternative alignment arm 710 when the second alternative alignment arm 710 is in the solid line disengaged position. In some examples, the marker 199 on the marker flag may be invisible and/or undetectable by the monitoring system 200 when in this position. As shown, the dotted line flagpole 804 extends up unobstructed from the surface 201 of the support platform 202 when the second alternative alignment arm 710 is in the dotted engaged position. In some examples, the marker flag 802 and associated marker 199 may be visible and/or detectable by the monitoring sensor 1502 when so raised (e.g., above the light filter 902 and/or light filter housing 900).

In some examples, the welding technique monitoring system 200 and/or first alternative welding technique monitoring system 600 may be able to determine whether the alignment arm 410/510/710 (and/or which alignment arm 510) is in an engaged or disengaged position by determining whether one or more of the above alignment fixture 400/500/700 associated markers 199 are visible and/or detectable. In some examples, the welding technique monitoring system 200/600 may be able to determine whether the alignment arm 410/510/710 is in an engaged or disengaged 3D position by determining a position of the alignment fixture 400/500/700 associated marker(s) 199, and/or a distance of between the marker(s) 199 and the monitoring sensor 1502, and comparing with a threshold distance and/or 3D position.

In some examples, the marker 199 on the marker flag 802 may provide some level of redundancy to the marker 199 on the crossbar 416, which may be of help if, for example, one or the other becomes obscured for some reason. In some examples, the marker 199 on the marker flag 802 and/or the marker 199 on the crossbar 416 may be omitted. In some examples, a different sort of alignment fixture may be used that need not be moved, and may stay continually engaged throughout a welding-type operation, in which case no distinction may need to be made between engaged and disengaged positions.

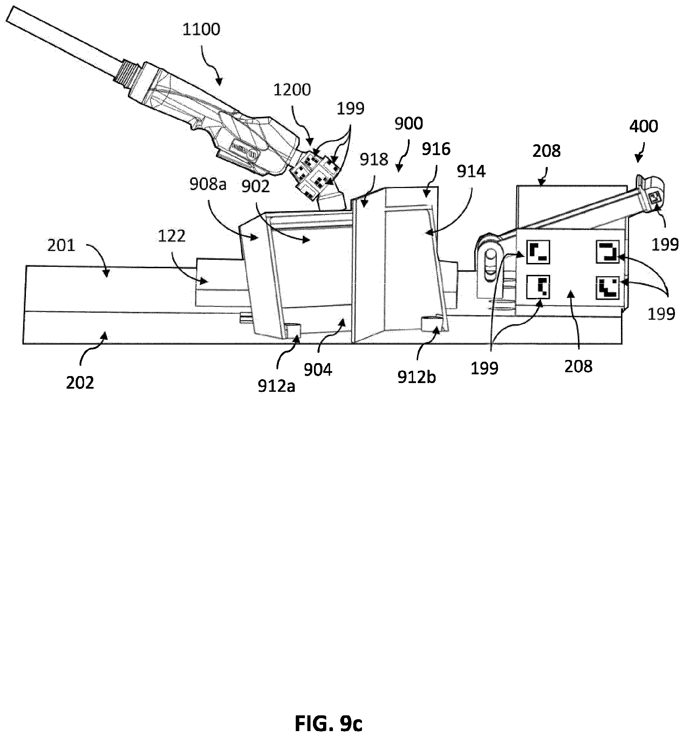

As discussed above, and shown in FIGS. 2a-2d and 6a-6b the welding technique monitoring system 200/600 includes a light filter housing 900 attached to the surface 201 of the support platform 202 between the monitoring device housing 206 and the joint alignment fixture 400/500/600. FIG. 9a shows a close up view of the example light filter housing 900 as might be seen, for example, from a side edge 214 of the monitoring platform 202a. FIG. 9b shows a top down view of the light filter housing 900. FIG. 9c illustrates an example of how the light filter housing 900 and light filter 902 (as well as other portions of the monitoring system 200) might appear from the perspective of the monitoring sensor 1502.

In the examples of FIGS. 9a-9c, the light filter housing 900 houses a light filter 902. In some examples, the light filter 902 may be an auto-darkening lens. In some examples, the light filter 902 may be a 2 x 4.25 inch shade 5-13 passive lens, which are readily available and relatively inexpensive.

In some examples, the light filter 902 is configured to reduce a brightness of light emitted by a welding arc that passes through the light filter 902. Such a reduction in brightness may be beneficial to the monitoring sensor 1502 when viewing and/or capturing sensor data relating to the welding-type operation through the light filter 902. Were the light filter 902 omitted, the light output by the welding-type operation and/or welding arc may be so blindingly bright as to obscure the view of the monitoring sensor(s) 1502 and/or impede data capture by the monitoring sensor(s) 1502 and/or analysis of the captured data.

In some examples, in the absence of a welding arc, the environment viewed through the light filter 902 may be so dark as to be invisible and/or indistinguishable. In some examples, in the presence of the welding arc, the environment viewed through the light filter 902 may appear dimly lit, with the welding arc appearing noticeably (but not blindingly) bright.

In some examples, the monitoring system 200/600 may be able to detect the presence of a welding arc by analyzing light filtered by the light filter 902 and captured by the monitoring sensor 902, and determining whether the filtered light is still noticeably bright. In some examples, the monitoring system 200/600 may additionally, or alternatively, look for a particular color light that can be detected through the light filter 902 when filtering light from a welding arc. By using the light filter 902 to filter/dim the otherwise blindingly bright light emitted by a welding arc, the monitoring system 200/600 may be able to detect the welding arc using the monitoring sensor 1902, and thereby avoid the need to establish communication with the welding-type tool 1100, welding-type equipment, and/or other device to determine when a welding-type operation is occurring.

In the examples of FIGS. 9a-9c, the light filter housing 900 includes a filter holder 904 configured to hold the light filter 902. As shown, the filter holder 904 comprises a shell with a window in which is positioned the light filter 902. The front of the filter holder 904 (e.g., on the side farther from the monitoring device housing 206) is overlaid with a protective cover 906. In some examples, the protective cover 906 may help to protect the light filter 902 from weld spatter.

In the examples of FIGS. 9a-9c, the light filter housing 900 further includes filter housing sidewalls 908 attached to the filter holder 904, and a filter housing top wall 910 attached to the filter holder 904 and the filter housing sidewalls 908. The light filter housing 900 further includes spacers 912 attached to the sidewalls 712 proximate the surface 201 of the support platform 202. As shown, the spacers 912 attached to the sidewalls 712 of the light filter housing 900 abut the surface of the support platform 202, and include holes that, in some examples, may be aligned with passages 198 in the support platform 202.

In some examples, the light filter housing 900 is attached to the surface of the support platform 202 via fasteners 101 that are inserted through the spacers 912 of the light filter housing 900 and/or passages 198 of the support platform 202. In some examples, the light filter housing 900 may be removable from the support platform 202 via removal of the fasteners 101. In some examples, the fasteners 101 may be secured to the support platform 202, and removal of the light filter housing 900 from the fasteners 101 may remove the light filter housing 900 from the support platform 202.

In the example of FIG. 9a, the filter holder 904 of the light filter housing 900 (and/or the light filter 902 held by the filter holder 904) is angled with respect to the flat surface 201 of the support platform 202. This is evident, for example, by looking at the lines defining the intersections of the filter housing sidewalls 908, which form an angle with surface 201 of the support platform 202 that is not equal to ninety degrees. The filter housing top wall 910 is further angled with respect to the flat surface 201 of the support platform, where the angle is not equal to ninety degrees.

In some examples, this angling of the light filter housing 900 and/or light filter 902 ensures that any light emitted close to the surface 201 of the support platform 202 that is reflected by the light filter 902, is reflected back down to the surface 201 of the support platform 202. Thus, light from a welding arc that is generated close to the surface 201 of the support platform 202 (e.g., proximate a joint 124 of a workpiece 122 supported on the surface 201 of the support platform 202) is reflected back down towards the surface 201 of the support platform 202, rather than upwards. Were the light filter housing 900 and/or light filter 902 not so angled, the light might instead be reflected upwards into the environment above the light filter 902, where it may obscure and/or interfere with data capture by the monitoring sensor 1502 (e.g., with respect to the welding-type tool 1100 and/or a marker ring 1200 attached to the welding-type tool 1100).

In the example of FIG. 9b, the light filter housing 900 and light filter 902 are shown slanted with respect to the monitoring device housing 206, such that one spacer 912a (and/or filter housing sidewall 908a) is closer to the monitoring device housing 206 than the other spacer 912b (and/or filter housing sidewall 908b). In some examples, this slanting arrangement may ensure that ambient light from outside the welding technique monitoring system 200 that reflects off (e.g., a display screen output device 1518 of) the monitoring device 1500 housed in the monitoring device housing 206 does not then reflect off the light filter 902 back to the monitoring sensor 1502. The slanting arrangement may likewise ensure that light output directly by the display screen output device 1518 of the monitoring device 1500 does not reflect off the light filter 902 back to the monitoring sensor 1502. Were the light instead reflected back to the monitoring sensor 1502, the reflected light might impede the detection capabilities of the monitoring sensor 1502 (e.g., by showing a reflection of the display screen of the monitoring device 1500). Due to the slant of the light filter 902, any reflected light will be reflected to the side, as the angle of entry of the incoming light is equal to the angle of exit of reflected light relative to the normal 901 of the reflective surface (e.g., the light filter 902).

In the example of FIGS. 9a-9c, a reflector wall 914 is also attached to the light filter housing 900. As shown, the reflector wall 914 extends up from the surface 201 of the support platform 202, in a direction perpendicular to the surface 201 of the support platform 202, and to a height above the filter housing top wall 910 of the light filter housing 900. In some examples, the reflector wall 914 may instead be the same height as the filter housing top wall 910. In the examples of FIGS. 9a-9c, the reflector wall 914 has a connected wall 916 that connects to and extends along the filter housing top wall 910 between the filter housing sidewalls 908 for some distance. The reflector wall 914 further includes an unconnected wall 918 that veers away from the light filter housing 900, and forms a (non 90 degree) angle, with the connected wall 916. As shown, the unconnected wall 918 is further aligned with the monitoring sensor 1502 such that the unconnected wall 918 would intersect the monitoring sensor 1502 if the unconnected wall 918 were to be extended.

In some examples, the unconnected wall 918 of the reflector wall 914 prevents light from outside the welding technique monitoring system 200 from reflecting off the light filter 902 into the monitoring sensor 1502, which may impede the detection capabilities of the monitoring sensor 1502. In some examples, the unconnected wall 918 of the reflector wall 914 further prevents light reflected off the (e.g., display screen of) the monitoring device 1500, and then off the light filter 902, from being further reflected. In some examples, the reflector wall 914 may be composed of a non or low reflective material, and/or have a non or low reflective color (e.g., black, gray, etc.).

FIG. 9c shows an example of how the monitoring system 200 might appear from the perspective of the monitoring sensor 1502. Some elements (e.g., platform connectors 210, clamps 204, etc.) of the monitoring system 200 have been omitted for clarity. As shown in FIG. 9c, while the reflector wall 914 does cover some of the light filter 902, a substantial enough portion of the light filter 902 remains unobstructed to allow the monitoring sensor 1502 to be able to detect a welding arc through the light filter 902. Additionally, the light filter 902 (and/or light filter housing 900) is spaced far enough away from the monitoring sensor 1502 to avoid completely obstructing the monitoring sensor 1502, and allowing for the monitoring sensor 1502 to still have a view of the marker stand 208 (and/or the attached markers 199), the joint alignment fixture 400 (and/or the attached marker 199), and (at least part of) the welding-type tool 1100 (and/or the attached marker ring 1200 and/or markers 199). In such an arrangement, the monitoring sensor 1502 may be able to simultaneously capture sensor data that may be used to detect a welding arc (e.g., through the light filter 902), determine the orientation of the alignment platform 202b, determine the status of the alignment fixture 400/500/700, track the welding-type tool 1100 (and/or the attached marker ring 1200), and/or record the welding-type tool 1100 during the welding-type operation (e.g., for later playback).

FIGS. 10a-10b show an example of an alternative reflector wall 1014 that is attached to the monitoring device housing 206, rather than the light filter housing 900. As shown, the alternative reflector wall 1014 also includes a standoff 1012 configured for attachment to the surface 201 of the support platform 202 (e.g., via a fastener 101 inserted through a hole in the standoff 1012 that is aligned with a passage 198 in the support platform 202. The alternative reflector wall 1014 and the monitoring device housing 206 further share an opening 1002 through which the monitoring device 1500 can be inserted into the monitoring device housing 206.

In some examples, the alternative reflector wall 1014 may serve a similar, or identical, function to that of the reflector wall 914. In some examples, the alternative reflector wall 1014 may additionally, or alternatively, serve to protect (e.g., universal serial bus (USB), power, etc.) cords and/or wires connected to the monitoring device 1500 from weld spatter during a welding-type operation. While described as an alternative reflector wall 1014, in some examples, both the reflector wall 914 and alternative reflector wall 1014 may be used together in the welding technique monitoring system 200 (and/or first alternative welding technique monitoring system 600).

FIG. 11 shows an example of a welding-type tool 1100 that might be used with the welding technique monitoring system 200 (and/or first alternative welding technique monitoring system 600). As shown, the welding-type tool 1100 is a welding gun comprising a tool handle 1101 to which is connected the welding cable 106 that leads to the welding-type equipment 104 (as shown, for example, in FIG. 1). At the opposite end of the tool handle 1101 from the welding cable 106 is connected a gooseneck 1102.

At the opposite end of the gooseneck 1102 from the tool handle 1101 is connected a nozzle assembly 1104. Within the nozzle assembly 1104 is shown a contact tip 1106. In some examples, the nozzle assembly 1104 may additionally include a nozzle shell, an insulator, a gas diffuser, and/or other elements. In some examples, (e.g., where the welding-type tool 1100 is a tungsten inert gas (TIG) torch configured for GTAW), the nozzle assembly 1104 may include a nozzle shell, an insulator, a tungsten electrode, a back cap, and/or other elements.

While, in the example of FIG. 11, the marker ring 1200 is shown as a collar attached to the gooseneck 1102 of the welding-type tool 1100, in some examples, the marker ring 1200 may additionally, or alternatively, be attached to the nozzle assembly 1104 (as shown, for example, by the dotted line outline of the marker ring 1200 on the nozzle assembly 1104). However, attachment of the marker ring 1200 to the nozzle assembly 1104 may be less ideal as portions of the nozzle assembly 1104 (and/or an attached marker ring 1200) may appear obstructed and/or obscured by the light filter 902 and/or light filter housing 900 when viewed from the perspective of the monitoring sensor 1502 during a welding-type operation (see, e.g., FIG. 9c).

In some examples, the marker ring 1200 may additionally, or alternatively, be attached to the tool handle 1101 (as shown, for example, by the dotted line outline of the marker ring 1200 on the handle 1101). However, attachment of the marker ring 1200 to the tool handle 1101 may also be less ideal due to potential obstruction of a trigger 1108 on the tool handle 1101, and/or obstruction of a hand of an operator 118 when attempting to hold the welding-type tool 1100 by the handle 1101.

In some examples, the marker ring 1200, and/or the markers 199 on the marker ring 1200, are used by the welding technique monitoring system 200 to track a position and/or orientation of the welding-type tool 1100. In some examples, a separate marker ring 1200 that is attachable to, and/or detachable from, the welding-type tool 1100, may allow the welding technique monitoring system 200 to be easily used with existing welding-type tools 1100 and/or welding-type equipment 104. And the ability to use existing welding-type tools 1100 and/or welding-type equipment 104 eliminates (or substantially reduces) the need for special customized welding-type tools 1100 and/or welding-type equipment 104. Thus, the use of the marker ring 1200 may help to reduce the cost of the monitoring system 200/600.

In particular, the attachable/detachable marker ring 1200 may allow the monitoring system 200/600 to use existing welding-type tools 1100 because existing welding-type tool 1100 are poorly suited to markers 199. For example, the nozzle assembly 1104 and/or gooseneck 1102 of many existing welding-type tools 1100 are substantially cylindrical, with rounded and/or curved surfaces (e.g., as shown in FIG. 11). In contrast, the markers 199 may require and/or be better detectable/distinguishable by the monitoring sensor 1502 when positioned on and/or attached to a flat structure (rather than rounded, curved, and/or cylindrical structures). So, conventionally, if a monitoring system wanted to track a nozzle assembly 1104 and/or gooseneck 1102 of a welding-type tool 1100, the system would need to be used with a customized welding-type tool with a flat, planar, and/or polygonal nozzle assembly and/or gooseneck. In contrast, the attachable marker ring 1200 disclosed herein has flat, planar faces conducive to markers 199, thereby allowing for tracking of the welding-type tool 1100 to which it is attached without the need for a custom welding-type tool.

FIGS. 12a-12d show a perspective, top plan, bottom plan, and side view of the marker ring 1200 shown in FIG. 1100. As shown, the marker ring 1200 comprises a polyhedron ring body 1202 with an inner ring surface 1204 and an outer ring surface 1206. The inner ring surface 1204 is shown as a hollow cylinder that encircles a cylindrical ring bore 1208. In the examples of FIGS. 12a-12d, the ring bore 1208 is cylindrical, and both the inner ring surface 1204 (and/or ring body 1202) and ring bore 1208 are centered around a ring axis 1210 that extends through an approximate middle of the marker ring 1200.

In some examples, the inner ring surface 1204 may only extend partway around the ring bore 1208, thereby leaving a gap in the ring body 1202. In some examples, such a gap may allow a diameter of the ring bore 1208 to expand to accommodate larger goosenecks 1102 (and/or other element(s)) of a welding-type tool 1100. In some examples, this feature may be used, for example, to help attach the marker ring 1200 to the gooseneck 1102 (and/or other part) of the welding-type tool 1100.

In the examples of FIGS. 12a-12d, the outer ring surface 1206 of the ring body 1202 includes a ring top face 1212 and a ring bottom face 1214. Both the ring top face 1212 and the ring bottom face 1214 are depicted as hexagons. As shown, the outer ring surface 1206 of the ring body 1202 further includes an upper ring sidewall 1216 that is connected to the ring top face 1212, and a lower ring sidewall 1218 that is connected to the ring bottom face 1214.

In some examples, the outer ring surface 1206 may further include a washer shaped circular flange between the upper ring sidewall 1216 and lower ring sidewall 1218. In some examples, the flange might have a surface approximately parallel to the ring top face 1212 and/or ring bottom face 1214. In some examples, such a flange may be used to protect the upper ring sidewall 1216 and/or lower ring sidewall 1218 (and/or the markers 199 positioned thereon) from damage in the event the marker ring 1200 is dropped.

In the examples of FIGS. 12a-12d, the upper ring sidewall 1216 includes six upper ring sidewall faces 1220 that are connected together at (and/or along) upper ring side edges 1222 to form an upper ring around the ring bore 1208. Each upper ring sidewall face 1220 is depicted as being rectangular (e.g., a square), with two upper ring side edges 1222, where each upper ring side edge 1222 of each upper ring sidewall face 1220 is shared with an adjacent upper ring sidewall face 1220. Each upper ring sidewall face 1220 is further shown as including an upper ring top edge 1224 connected to (and forming the perimeter of) the ring top face 1212. The upper ring bottom edge 1226 of each upper ring sidewall face 1220 is not shared with the lower ring sidewall 1218, and no other edge of any upper ring sidewall face 1220 is shared with the lower ring sidewall 1218.

In the examples of FIGS. 12a-12d, each upper ring sidewall face 1220 extends straight up and down, approximately parallel to an opposite upper ring sidewall face 1220 that is on the opposite side of the ring bore 1208. Likewise, each upper ring sidewall face 1220 has an upper ring top edge 1224 and upper ring bottom edge 1226 that extends approximately parallel to an upper ring top edge 1224 and upper ring bottom edge 1226 of the upper ring sidewall face 1220 that is on the opposite side of the ring bore 1208. As shown, each upper ring side edge 1222 of each upper ring sidewall face 1220 extends approximately parallel to every other upper ring side edge 1222 of every other upper ring sidewall face 1220, as well as approximately parallel to the ring axis 1210. Each upper ring top edge 1224 and upper ring bottom edge 1226 of each upper ring sidewall face 1220 additionally extends approximately perpendicular to the upper ring side edges 1222 that they intersect.

In the examples of FIGS. 12a-12d, the lower ring sidewall 1218 includes six lower ring sidewall faces 1230 that form a lower ring around the ring bore 1208. However, the six lower ring sidewall faces 1230 are not aligned with the six upper ring sidewall faces 1220. Rather the six lower ring sidewall faces 1230 are rotationally and angularly offset from the six upper ring sidewall faces 1220. In some examples, the rotational and angular offset of the lower ring sidewall faces 1230 with respect to the upper ring sidewall faces 1220 may help to ensure that at least one upper ring sidewall face 1220 or lower ring sidewall face 1230 (and/or associated marker 199) is visible to the monitoring sensor 1502 at all times, regardless of the rotational and/or angular orientation of the welding-type tool 1100.

Because the lower ring sidewall faces 1230 are rotationally and angularly offset from the six upper ring sidewall faces 1220, none of the upper ring sidewall faces 1220 extends parallel to any lower ring sidewall face 1230, nor shares an edge with any lower ring sidewall face 1230. Additionally, the lower ring sidewall faces 1230 are not connected together along their lower ring side edges 1232 (except at one point where the lower ring bottom edges 1234 of the lower ring sidewall faces 1230 intersect). Rather, each lower ring sidewall face 1230 is connected along its lower ring side edge 1232 to a corner portion 1236 of the lower ring sidewall 1218.

In the examples of FIGS. 12a-12d, the corner portions 1236 are triangular slivers positioned between each lower ring sidewall face 1230. As shown, each corner portion 1236 is defined by a lower ring side edge 1232 of a lower ring sidewall face 1230 and a portion of the upper ring bottom edge 1226 of an upper ring sidewall face 1220. Some of the corner portions 1236 further include channels 1238 leading from the outer ring surface 1206 to the inner ring surface 1204.

In the examples of FIGS. 12a-12d, each lower ring sidewall face 1230 is depicted as being rectangular (e.g., a square), with two lower ring side edges 1232 connected to two corner portions 1236. Each lower ring sidewall face 1230 is further shown as including a lower ring bottom edge 1234 connected to (and forming the perimeter of) the ring bottom face 1214. The lower ring top edge 1240 of each lower ring sidewall face 1230 is connected to an underside 1242 of the upper ring sidewall 1216. As discussed above, no edge of any lower ring sidewall face 1230 is shared with any upper ring sidewall face 1220.

In the examples of FIGS. 12a-12d, each lower ring sidewall face 1230 is tilted with respect to the ring axis 1210 and/or the upper ring sidewall faces 1220. More particularly, each lower ring sidewall face 1230 extends downwards from the underside 1242 of the upper ring sidewall 1216 and inwards towards the ring axis 1210 and/or ring bore 1208. The tilt is such that, as discussed above, no lower ring sidewall face 1230 extends parallel to any other lower ring sidewall face 1230 (or any upper ring sidewall face 1220). Additionally, no lower ring side edge 1232 of a lower ring sidewall face 1230 extends parallel to a lower ring side edge 1232 of any other lower ring sidewall face 1230, nor to any side edge 214 of any upper ring sidewall face 1220.

While the ring sidewall faces 1220/1230 of the marker ring 1200 are shown as square and/or rectangular, in some examples, the ring sidewall faces 1220/1230 may take the form of other polygons. While six ring sidewall faces 1220/1230 are shown as part of each of the upper ring sidewall 1216 and lower ring sidewall 1218, in some examples the upper ring sidewall 1216 and/or the lower ring sidewall 1218 may have more or less ring sidewall faces 1220/1230 (e.g., 8, 7, 5, 4, etc.).

While the markers 199 themselves are omitted in FIGS. 12a-12d, for simplicity and clarity, FIG. 11 shows that a marker 199 is positioned on each face of the upper ring sidewall 1216 and lower ring sidewall 1218 of the marker ring 1200. In some examples, one or more of the markers 199 may be separate objects that are attached, such as through adhesive, fasteners, and/or other appropriate attachment means. In some examples, one or more of the markers 199 may be an integral part of the ring sidewall faces 1220/1230 on which they are positioned, such as through painting, molding, etching, and/or other appropriate means.

In some examples, one or more of the markers 199 may be (e.g., laser) etched onto the faces of the marker ring 1200. In some examples, etched markers 199 may be more resistant to damage from heat, spatter, and/or sparks (e.g., as compared to markers 199 attached via adhesive). In some examples, the faces of the marker ring 1200 may be buffed before etching to improve the contrast of the markers 199, which may be helpful for tracking. Alternatively, or additionally, the faces of the marker ring 1200 may be painted white (or some other light color), then etched to remove the white paint and apply a black (or other dark) coloring.

In the example of FIG. 12a, the marker ring 1200 includes ring fastening elements 1250 configured to facilitate fastening of the marker ring 1200 to the welding-type tool 1100. Ring fastening elements 1250a are shown as being bolts, set screws, and/or threaded screws that extend through the several channels 1238 of the ring body 1202 into the ring bore 1208. In some examples, the ring fastening elements 1250a may modify the diameter of the ring bore 1208 (at least at the ring fastening element 1250), which may, for example, facilitate fastening of the marker ring 1200 to a gooseneck 1102 having a diameter that is smaller than the diameter of the ring bore 1208. In some examples, a fastener adjuster (e.g., lever, button, screwdriver) may be used to adjust how far the ring fastening elements 1250a extend into the ring bore 1208 to modify the diameter of the ring bore 1208.

In the example of FIG. 12a, the ring fastening element 1250b is shown as an annular element positioned in contact with the inner surface 1204 of the ring body 1202 within the ring bore 1208. In some examples, the ring fastening element 1250b may be attached to the inner surface 1204 of the ring body 1202, such as, for example, through adhesive, fasteners, and/or other attachment mechanisms.

In some examples, the ring fastening element 1250b may be an inflatable diaphragm that can be inflated and/or deflated to modify the diameter of the ring bore 1208. In some examples, the ring fastening element 1250b may be a clamping element that can be clasped onto and/or unclasped from the welding-type tool 1100 (e.g., the gooseneck 1102). In some examples, the ring fastening element 1250b may be a spring loaded snap on clasp configured to be snapped onto and/or off of the welding-type tool 1100. In some examples, the ring fastening element 1250a and/or some other fastener adjuster may be used to activate (e.g., inflate, clamp, clasp, etc.), deactivate (e.g., deflate, unclamp, unclasp, etc.) and/or otherwise adjust the ring fastening element 1250b.

FIGS. 13a-13d show examples of a first alternative marker ring 1300. In some examples, the first alternative marker ring 1300 may be used and/or attached to the welding-type tool 1100 in place of the marker ring 1200 (e.g., using the ring fastening element(s) 1250 discussed above). While the markers 199 are omitted in FIGS. 13a-13d, for simplicity and clarity, one or more markers 199 may be positioned on the first alternative ring faces 1320/1330 of the first alternative marker ring 1300, similar to that which is discussed above with respect to the marker ring 1200.

FIGS. 13a-13d show a perspective, top plan, bottom plan, and side view of the first alternative marker ring 1300. As shown, the first alternative marker ring 1300 is similar to the marker ring 1200 in most respects. However, each corner portion 1336 is no longer defined by a portion of the upper ring bottom edge 1326 of an upper ring sidewall face 1320. Instead, the corner portions 1336 extend farther from the ring bore 1308 and/or ring axis 1310 than any ring sidewall face 1320/1330. Additionally, the lower ring top edge 1340 of each lower ring sidewall face 1330 just barely extends along the underside 1342 of the upper ring sidewall 1316, instead of entirely like with the marker ring 1200. Meanwhile the upper ring bottom edge 1326 of the upper ring sidewall 1316 extends along a roof 13 62 of the lower ring sidewall 1318 (except just proximate the upper ring side edges 1322). These differences in the first alternative marker ring 1300 lead to the lower ring sidewall face 1330 to appear to jut out from the upper ring sidewall face 1320.

FIGS. 14a-14d show examples of a second alternative marker ring 1400. In some examples, the second alternative marker ring 1400 may be used and/or attached to the welding-type tool 1100 in place of the marker ring 1200 in the same way as discussed above. While the markers 199 are omitted in FIGS. 14a-14d, for simplicity and clarity, markers 199 may be positioned on the ring sidewall faces 1420/1430 of the second alternative marker ring 1400, similar to that which is discussed above with respect to the marker ring 1200.

FIGS. 14a-14d show a perspective, top plan, bottom plan, and side view of the second alternative marker ring 1400. As shown, the second alternative marker ring 1400 is similar to the marker ring 1200 in many respects. However, while the lower ring sidewall faces 1430 remain angularly offset from the upper ring sidewall faces 1420, they are not rotationally offset from the upper ring sidewall faces 1430.

Instead, the lower ring sidewall faces 1430 and upper ring sidewall faces 1420 are aligned, such each lower ring sidewall face 1430 shares a common edge 1470 with each upper ring sidewall face 1420. As a result, there are no triangular corner portions 1236/1336. There are, however, trapezoidal lower ring sidewall faces 1430 positioned between each rectangular lower ring sidewall face 1430.

In the example of FIG. 14d, the channel 1438 that was positioned on the corner portions 1236/1336 in FIGS. 12a-13d, is instead shown as being positioned on an upper ring sidewall face 1420. In some examples, no marker 199 may be positioned on the upper ring sidewall face(s) 1420 that host(s) the channel(s) 1438, to avoid obstructing the channel(s) 1438. The ring bore 1408 is also shown as transitioning from a cylindrical to a hexagonal prism within the ring body 1402 proximate the common edge 1470.

FIGS. 32a-32f show examples of a third alternative marker ring 3200. In some examples, the third alternative marker ring 3200 may be used and/or attached to the welding-type tool 1100 in place of the marker ring 1200 in the same way as discussed above. FIGS. 32a-32b, for example, show the third alternative marker ring 3200 attached to a gooseneck 1102 of the welding-type tool 1100. While the markers 199 of the third alternative marker ring 3200 are omitted in FIGS. 32c-32f, for simplicity and clarity, FIGS. 32a-32b show how markers 199 may be positioned on at least the upper ring sidewall faces 3220 of the third alternative marker ring 3200, similar to that which is discussed above with respect to the marker ring 1200.

As shown in FIGS. 32a-32f, the third alternative marker ring 3200 is similar to the marker ring 1200 in many respects. However, the lower ring sidewall faces 3230 of the third alternative marker ring 3200 are not tilted as the lower ring sidewall faces 1230 are in the marker ring 1200. The lack of tilted lower ring sidewall faces 3230 means that the third alternative marker ring 3200 has no corner portions 1236 like in the marker ring 1200.

The lower ring sidewall faces 3230 are also shown as being smaller relative to the upper ring sidewall faces 3220 in the third alternative marker ring 3200 than the lower ring sidewall faces 1230 are relative to the upper ring sidewall faces 1220 in the marker ring 1200. This is possible because no markers 199 are included on the lower ring sidewall faces 3230 in the third alternative marker ring 3200.

Recent empirical evidence suggests that high precision tracking of the welding-type tool 1100 may be conducted using only markers 199 on the upper ring sidewall faces 3220. Indeed, in some examples, the lack of markers 199 on tilted and/or slanted lower ring sidewall faces 3230 may make welding-type tool position and/or orientation determinations/calculations even easier. As high precision tracking may be conducted using only markers 199 on the upper ring sidewall faces 3220, the third alternative marker ring 3200 does not put markers 199 on the lower ring sidewall faces 3230.

Because there is no need for markers 199 on the lower ring sidewall faces 3230 of the third alternative marker ring 3200, there is also no need for the lower ring sidewall faces 3230 of the third alternative marker ring 3200 to be large enough to accommodate (e.g., visible, observable, discernable, etc.) markers 199. Thus, the lower ring sidewall faces 3230 are smaller relative to the upper ring sidewall faces 3220 in the third alternative marker ring 3200 than the lower ring sidewall faces 1230 are relative to the upper ring sidewall faces 1220 in the marker ring 1200. The smaller size of the lower ring sidewall faces 3230 results in a smaller overall size and lower weight of the third alternative marker ring 3200, which may make the third alternative marker ring 3200 less likely to negatively impact welding technique during a welding-type operation.

Rather than being used for markers 199, the lower ring sidewall faces 3230 are used primarily for attaching the third alternative marker ring 3200 to the welding-type tool 1100. Because it is important that the third alternative marker ring 3200 remain stationary (relative to the welding-type tool 1100), each lower ring sidewall face 3230 is shown as having a channel 1238 through which a ring fastening element 1250a may extend. The ring fastening elements 1250a that extend through the channels 1238 on the lower ring sidewall faces 3230 of the third alternative marker ring 3200 serve to attach the third alternative marker ring 3200 to the welding-type tool 1100.

In the examples of FIGS. 32a-32f, the third alternative marker ring 3200 further includes a washer shaped circular flange 3299. As shown, the circular flange 3299 is integrated into the ring top face 3212 of the third alternative marker ring 3200. In some examples, the circular flange 3299 may be used to protect the lower ring sidewall faces 3230 and/or upper ring sidewall faces 3220 (and/or the markers 199 positioned thereon) from damage in the event the third alternative marker ring 3200 is dropped. The circular flange 3299 may additionally prevent any upper ring sidewall face 3220 from lying against any abrasive and/or hot surfaces in a welding area, which might damage the upper ring sidewall face 3220 (and/or the marker 199 on the upper ring sidewall face 3220).

The circular flange 3299 may further serve as a shield to protect the upper ring sidewall faces 3220 (and markers 199 positioned thereon) from heat, debris, sparks, and/or spatter generated during a welding-type operation. As may be seen in the examples of FIGS. 32a-32b, the circular flange 3299 is positioned closer to the nozzle assembly 1104 than any other part of the third alternative marker ring 3200 when the third alternative marker ring 3200 is attached to the welding-type tool 1100. Thus, heat, debris, sparks, and/or spatter generated during a welding-type operation will first encounter the circular flange 3299 before any other part of the third alternative marker ring 3200. Thereby, the circular flange 3299 can serve as a shield to protect the rest of the third alternative marker ring 3200 from heat, debris, sparks, and/or spatter generated during a welding-type operation.

FIGS. 32a-32f further show several hollowed out cavities 3298 formed in the third alternative marker ring 3200. In particular, three cavities 3298 are shown, with openings leading to the cavities 3298 formed in the ring top face 3212 of the third alternative marker ring 3200. In some examples, the cavities 3298 may serve to help to further reduce the weight of the third alternative marker ring 3200. While debris and/or spatter may collect in the cavities 3298, the cavities 3298 may be easily cleaned to remove the spatter and/or debris. Additionally, in some examples, the cavities 3298 may be filled and/or capped by a lightweight and/or heat resistant material (e.g., plastic) to limit the ability of spatter and/or debris to collect in the cavities 3298.

FIG. 15 is a block diagram showing example electronic components of the welding technique monitoring system 200. As shown, the electronic components of the welding technique monitoring system 200 include a monitoring device 1500, comprising computing components 1508, a user interface (UI) 1506, one or more communication interfaces 1504, and one or more monitoring sensors 1502 electrically interconnected via a common electrical bus 1501. The monitoring device 1500 is further shown in communication with one or more remote computing devices 1510 (e.g., such as the remote I/O device(s) 150) through a network 1514 in communication with one or more of the communication interfaces 1504.

In some examples, the communication interface(s) 1504 may include one or more wireless adapters, wireless cards, cable adapters, wire adapters, dongles, radio frequency (RF) devices, wireless communication devices, Bluetooth devices, IEEE 802.11-compliant devices, WiFi devices, cellular devices, GPS devices, USB devices, Ethernet ports, network ports, lightning cable ports, cable ports, etc. In some examples, the communication interface(s) 1504 may be configured to facilitate communication via one or more wired media and/or protocols (e.g., Ethernet cable(s), universal serial bus cable(s), etc.) and/or wireless mediums and/or protocols (e.g., cellular communication, general packet radio service (GPRS), near field communication (NFC), ultra high frequency radio waves (commonly known as Bluetooth), IEEE 802.11x, Zigbee, HART, LTE, Z-Wave, WirelessHD, WiGig, etc.).

In some examples, the communication interface(s) 1504 may be coupled to one or more antennas to facilitate wireless communication. In some examples, the communication interface(s) 1504 may be coupled to one or more power supplies of the monitoring device 1500 to facilitate power transfer, generation, and/or recharging.

In some examples, the communication interface(s) 1504 may be configured to facilitate internal and/or external communications. In some examples, the communication interface(s) 1504 may receive one or more signals (e.g., from the remote computing device(s) 1510) decode the signal(s), and provide the decoded data to the electrical bus 1501. As another example, the communication interface(s) 1504 may receive one or more signals from the electrical bus 1501 (e.g., representative of one or signals from the computing components 1508, monitoring sensor(s) 1502, and/or UI 1506) encode the signal(s), and transmit the encoded signal(s) to the remote computing device(s) 1510.

In some examples, the remote computing device(s) 1510 in communication with the monitoring device 1500 through the network and communication interface(s) 1504 may be similar to the monitoring device 1500, in that the remote computing device 1510 comprises one or more communication interfaces 1504 in electrical communication with computing components 1508. In some examples, the remote computing device(s) 1510 may or may not comprise a similar UI 1506.

In the example of FIG. 15, the UI 1506 includes one or more input devices 1516 and one or more output devices 1518. In some examples, the one or more input devices 1516 may comprise one or more touch screens, buttons, switches, microphones, remote controls, and/or other input devices 1516. In some examples, the welding-type tool 1100 may be used as an input device (e.g., based on over which particular input element 220 on the support platform 202 the welding-type tool 1100 is detected to be positioned). In some examples, the one or more output devices 1518 may comprise one or more display/touch screens, speakers, lights, haptic devices, and/or other output devices 1518. In some examples, the output device(s) 1518 (e.g., a display screen) of the UI 1506 may output guidance regarding use of the welding technique monitoring system 200, and/or feedback relating to a monitored welding-type operation.

In some examples, the UI 1506 may include circuitry configured to drive the input device(s) 1516 and/or output device(s) 1518 of the UI 1506. In some examples, the UI 1506 may be configured to generate one or more signals representative of input received via the input device(s) 1516 and provide the signal(s) to the bus 1501. In some examples, the UI 1506 may also be configured to control the output device(s) 1518, to generate one or more outputs in response to one or more signals received via the bus 1501 (e.g., from the computing components 1508).

In some examples, information output by the output device(s) 1518 of the UI 1506 may additionally (or alternatively) be output by remote I/O device(s) 150 (e.g., of the remote computing device(s) 150). This mirrored output may be useful for teachers, students, administrators, and/or others not directly using the welding technique monitoring system 200. In some examples, the remote I/O devices 150 may include input and/or output devices similar (or identical) to those described above with respect to the UI 1506.

In the example of FIG. 15, the computing components 1508 are positioned within a housing 1599 of the monitoring device 1500. As shown, the computing components 1508 include memory circuitry 1520 in electrical communication with processing circuitry 1522. In some examples, the processing circuitry 1522 may comprise one or more processors, controllers, and/or graphical processing units (GPUs). In some examples, the processing circuitry 1522 may be configured to execute machine readable instructions stored in the memory circuitry 1520.

In the example of FIG. 15, the memory circuitry 1520 includes (and/or stores) joint data 1524. In some examples, the joint data 1524 may be representative of a position and/or orientation of a joint 124 (e.g., relative to a marker stand 208 and/or one or more markers 199). In some examples, the orientation of the joint 124 may be represented by one or more vectors, such as, for example, a joint orientation vector 1704, a base plate surface vector 1706, and/or a base plate perpendicular vector 1708 (see, e.g., FIG. 17).

In some examples, the joint orientation vector 1704 may be a vector that extends parallel to the joint 124. In some examples, the joint orientation vector 1704 may have a length equal to the length of the j oint 124. In some examples, the j oint orientation vector 1704 may be a unitary vector, and the length of the joint 124 may be represented by another portion of the joint data 1524 (e.g., the joint position), or not represented at all.

In some examples, the base plate surface vector 1706 may be a vector that extends perpendicular to the joint orientation vector 1704 in a plane parallel to a surface of a workpiece 122 (and/or parallel to the surface 201 of the support platform 202). In some examples, the base plate perpendicular vector 1708 may be a vector that extends perpendicular to the base plate surface vector 1706 and the joint orientation vector 1704. In some examples, the base plate surface vector 1706 and/or the base plate perpendicular vector 1708 may be unitary vectors.

In the example of FIG. 15, the memory circuitry 1520 further includes (and/or stores) joint identifying information 1526. In some examples, the joint identifying information 1526 may be associated in memory circuitry 1520 with the joint data 1524, such that the processing circuitry 1522 can identify the particular joint data 1524 using joint identifying information 1526.

In some examples, the joint identifying information 1526 may include one or more joint parameters. In some examples, the one or more joint parameters may include the type of joint 124 (e.g., Tee/corner joint 124a, lap joint 124b, butt joint 124c, etc.), a thickness of the workpiece(s) 122 being joined at the joint 124, an alignment arm 410 configuration applicable to the joint 124, and/or whether the joint 124 is configured for a right or left handed welding-type operation (e.g., via the configuration of the clamps 204, configuration of the support platform 202, handedness of the operator 118, etc.). In some examples, the joint identifying information 1526 may include information that only indirectly pertains to the joint 124, such as, for example, identifying information regarding the operator 118, a project (and/or job), a training exercise, a work order, a WPS, the welding-type equipment 104, a weld number, and/or other information that might be associated with the joint data 1524.

In some examples, the memory circuitry 1520 may also include (and/or store) values for other determined, target, present, and/or past parameters, such as, for example, welding parameters (e.g., voltage, current, wire feed speed, gas flow rate, etc.), welding technique parameters (e.g., work angle, travel angle, travel speed, travel direction, contact tip to work distance, travel speed, aim, etc.), weave parameters (e.g., frequency, weave width, dwell time, etc.), monitoring sensor 1502 parameters (e.g., sensor coordinate system 2304, sensor plane 2602, sensor axis 2604, etc.), and/or operation parameters (e.g., exercise identifier(s), operator identifier(s), weld cell identifier(s), project identifier(s), welding procedure specification (WPS) information, work order information, welding-type equipment 104 type/identifier(s), etc.). In some examples, one or more parameters may be associated with timestamp information, one or more other parameters, and/or other information. In some examples, a technique monitoring process 1600 may use and/or update one or more of the stored parameters during operation.

In some examples, the memory circuitry 1520 may also include (and/or store) several different (e.g., rigid body) models of different welding-type tools 1100, markers 199, marker rings 1200/1300/1400, and/or calibration blocks 2000 (further discussed below with respect to FIG. 20). In some examples, one or more of the models may include and/or indicate dimension information. In some examples, the model(s) may be used when tracking and/or determining position(s) and/or orientation(s).

In some examples, the memory circuitry 1520 may also include (and/or store) one or more of the thresholds discussed herein. Though certain items and/or information are sometimes described as being included, stored, and/or recorded in memory circuitry 1520, one of ordinary skill will understand this is a shorthand for specifying that data representative of those items and/or information is included, stored, and/or recorded in memory circuitry 1520.

In the example of FIG. 15, the memory circuitry 1520 further stores a welding technique monitoring process 1600. In some examples, the technique monitoring process 1600 may comprise machine-readable instructions stored in memory circuitry 1520 and/or configured for execution by the processing circuitry 1522. In some examples, the technique monitoring process 1600 may be implemented via discrete circuitry (e.g., of the processing circuitry 1522) rather than, or in addition to, instructions stored in the memory circuitry 1520.

While the below disclosure refers to the memory circuitry 1520 and/or processing circuitry 1522 of the monitoring device 1500, it should be understood that some or all of functions may additionally, or alternatively, be performed by memory circuitry and/or processing circuitry of the remote computing device(s) 1510. Though the discussion below focuses on the welding technique monitoring system 200, joint alignment fixture 400, and marker ring 1200, it should be understood that the discussion may be equally applicable to the first alternative welding technique monitoring system 600, the first/second alternative alignment fixtures 500/700, and first/second alternative marker rings 1300/1400.

FIG. 16 is a flowchart illustrating operation of an example technique monitoring process 1600. In some examples, during the technique monitoring process 1600, the processing circuitry 1522 uses sensor data from the monitoring sensor 1502 to track a position and/or orientation of the welding-type tool 1100 relative to the position and/or orientation of the joint 124, and provide welding technique feedback based on the tracking. In some examples, the technique monitoring process 1600 further defines a process by which the welding technique monitoring system 200 can be calibrated to identify the position(s) and/or orientation(s) of the welding-type tool 1100 and/or joint 124 based on sensor data captured by the monitoring sensor(s) 1502.

In some examples, prior to beginning (or at the beginning of) the technique monitoring process 1600, the processing circuitry 1522 may calibrate the welding technique monitoring system 200 to work with the monitoring sensor(s) 1502. For example, where one or more of the monitoring sensors 1502 are camera and/or optical sensors, the processing circuitry 1522 may identify a resolution (e.g., 1280x720) and/or field of view (e.g., 60 degrees) of the monitoring sensor(s) 1502. In some examples, the resolution and/or field of view of the camera and/or optical monitoring sensors 1502 may be stored in memory circuitry 1520 and/or entered by the operator 118 (e.g., via the UI 1506).

In some examples, the resolution and/or field of view may be automatically detected. For example, the monitoring sensor(s) 1502 may capture an image of two markers 199 on the marker stand 208 that are both positioned on a plane that is parallel to the sensor plane 2602 (see, e.g., FIG. 26) and that are a known (e.g., stored and/or user entered) distance apart. The processing circuitry 1522 may then automatically determine the field of view using a binary search algorithm, along with the known distance between the markers 199, a known (or previously determined) resolution, and the dimensions of the marker(s) 199 (e.g., stored as part of the model(s) of the marker(s) 199). In some examples, the resolution and/or field of view may be considered and/or used whenever the welding technique monitoring system 200 determines the position(s) and/or orientation(s) of objects using sensor data captured by camera and/or optical monitoring sensors 1502.

In the example of FIG. 16, the technique monitoring process 1600 begins at block 1900, where the processing circuitry 1522 performs a marker ring calibration process 1900. In some examples, the marker ring calibration process 1900 enables the welding technique monitoring system 200 to translate an identified position and/or orientation of the marker ring 1200/1300/1400 (and/or one or more markers 199 on the marker ring 1200/1300/1400) to a position and/or orientation of the welding-type tool 1100. The marker ring calibration process 1900 is discussed further below with respect to FIG. 19.

After the marker ring calibration process 1900, the technique monitoring process 1600 proceeds to block 1602 where the processing circuitry 1522 determines whether the technique monitoring system 200 needs to be calibrated to identify the position and/or orientation of a particular joint 124. In some examples, whether or not the technique monitoring system 200 needs a joint calibration may be determined on the basis of user input (e.g., received via the UI 1506). In some examples, whether or not the technique monitoring system 200 needs a joint calibration may be determined on the basis of whether the processing circuitry 1522 determines that sensor data captured by the monitoring sensor(s) 1502 relates to and/or shows (e.g., a marker 1999 of) a calibration device (e.g., further discussed below with respect to FIG. 22).

If the processing circuitry 1522 determines that the technique monitoring system 200 needs a joint calibration at block 1602, the processing circuitry 1522 performs a joint calibration process 2200 after block 1602. In some examples, the joint calibration process 2200 enables the welding technique monitoring system 200 to determine the position and/or orientation of a welding joint 124 relative to the marker stand 208, and record that position and/or orientation of the joint 124 as joint data 1524. In some examples, the welding technique monitoring system 200 may be put into a calibration mode prior to performing the joint calibration process 2200. The joint calibration process 2200 is discussed further below with respect to FIG. 22. After the joint calibration process 200, the technique monitoring process 1600 returns to block 1602.

In the example of FIG. 16, after block 1602 determines the joint calibration process 2200 need not be performed (and/or not performed *again*)*,* the technique monitoring process 1600 proceeds to block 1604, where joint identifying information 1526 is received (e.g., via the UI 1506). In some examples, rather than the joint identifying information 1526 being received via the UI 1506, the processing circuitry 1522 may determine the joint identifying information 1526 based on sensor data captured by the monitoring sensor 1502. For example, the monitoring sensor 1502 may capture sensor data relating to the joint 124, and the processing circuitry 1522 may use computer vision techniques to identify joint identifying information 1526 based on the sensor data. As another example, the monitoring sensor 1502 may capture sensor data relating to the operator 118, and the processing circuitry 1522 may use computer vision techniques to identify the operator 118 based on the sensor data, and use identifying information of the operator 118 as the joint identifying information 1526.

In the example of FIG. 16, after the joint identifying information 1526 is received at block 1604, the technique monitoring process 1600 performs a joint identification process 2400. In some examples, the joint identification process 2400 identifies previously stored joint data 1524 based on the joint identifying information 1526 from block 1604. The joint data 1524 can then be used to identify a position and/or orientation of the joint 124 relative to the monitoring sensor 1502. The joint identification process 2400 is discussed further below with respect to FIG. 24.

In the example of FIG. 16, after the joint identification process 2400, the technique monitoring process 1600 proceeds to block 1606, where the processing circuitry 1522 determines whether a welding-type operation has begun and/or is presently occurring. In some examples, the determination may be based on sensor data captured by the monitoring sensor(s) 1502. For example, the monitoring sensor(s) 1502 may capture (e.g., image) sensor data relating to light passing through the light filter 902 housed in the light filter housing 900. In such an example, the processing circuitry 1522 may determine, based on the sensor data, whether the (e.g., visible) light passing through the light filter 902 is of a threshold brightness (e.g., where the threshold brightness is representative of the filtered brightness of a welding arc). In some examples, the processing circuitry 1522 may additionally, or alternatively, determine if the (e.g., visible) light passing through the light filter 902 is of a particular color (and/or wavelength), such as a color (and/or wavelength) associated with light of a threshold brightness filtered by the particular light filter 902 used in the welding technique monitoring system 200.

In some examples, the processing circuitry 1522 may determine that a (e.g., simulated and/or practice) welding-type operation has begun and/or is occurring based on operator input (e.g., received via the UI 1506). For example, the operator 118 may wish to do practice or simulate a welding-type operation before performing a live-welding-type operation. In such an example, the operator 118 may provide an input indicating that they are beginning (or continuing) a simulated and/or practice welding-type operation, and the processing circuitry 1522 may determine that a (e.g., simulated and/or practice) welding-type operation has begun and/or is occurring based on the operator input.

FIG. 16 shows the technique monitoring process 1600 proceeding to block 1608 if the processing circuitry 1522 determines that no welding-type operation is occurring. At block 1608, the processing circuitry 1522 determines whether the j oint alignment fixture 400 is in an engaged or disengaged position. In some examples, the determination may be made based on sensor data captured by the monitoring sensor 1502 relating to the joint alignment fixture 400.

For example, the monitoring sensor(s) 1502 may capture (e.g., image) sensor data relating to one or more (e.g., marker 199 positioned) portions of the joint alignment fixture 400. Thereafter, the processing circuitry 1522 may analyze the sensor data and determine whether the sensor data indicates the one or more portions of the joint alignment fixture 400 are detectable (e.g., visible) and/or within a certain volume relative to (e.g., in a given direction and/or distance from) the monitoring sensor 1502. In some examples, the portion(s) of the joint alignment fixture 400 may include a marker flag 802 and/or alignment arm 410, and/or the marker(s) 199 on the marker flag 802 and/or alignment arm 410.

If the joint alignment fixture 400 is determined to be engaged, the technique monitoring process 1600 proceeds to block 1610 after block 1608. In some examples, the technique monitoring process 1600 may also proceed to block 1610 if the processing circuitry 1522 cannot make a determination as to whether the joint alignment fixture 400 is engaged. At block 1610, the processing circuitry 1522 outputs (e.g., via the output device(s) 1518 of the UI 1506) directions and/or guidance for how to use the joint alignment fixture 400 to correctly position and/or align the joint 124.

In some examples, the directions and/or guidance may be based on a position and/or orientation of the joint 124 identified during the joint identification process 2400. In some examples, the directions and/or guidance may include one or more pictures, videos, animations, audio/text instructions, and/or other appropriate outputs. In some examples, the directions and/or guidance output at block 1610 may be output regardless of whether the joint alignment fixture 400 is engaged.

FIG. 2a shows a simple example of directions and/or guidance that might be output at block 1610. As shown, the directions and/or guidance are in the form of a textual message displayed on a display screen output device 1518 of the monitoring device 1500. The depicted directions and/or guidance output at block 1610 direct the operator 118 to use the joint alignment fixture 400 to position and/or align the joint 124.

In the example of FIG. 16, after block 1610, the technique monitoring process 1600 proceeds to block 1612, where the processing circuitry 1522 outputs (e.g., via the output device(s) 1518 of the UI 1506) one or more warnings to disengage the joint alignment fixture 400 prior to initiating a welding-type operation. In some examples, such a warning may help to avoid damage to the joint alignment fixture 400 during the welding-type operation, and/or negative weld quality due to interference in the welding-type operation by the alignment fixture. In some examples, the warning(s) may include one or more pictures, videos, animations, audio/text instructions, and/or other appropriate outputs.

FIG. 2b shows a simple example of a warning that might be output at block 1612. As shown, the warning is in the form of a textual message displayed on the display screen output device 1518 of the monitoring device 1500. The depicted warning output at block 1612 cautions the operator 118 to disengage the joint alignment fixture 400 before welding.

In the example of FIG. 16, the technique monitoring process 1600 executes a test weld process 2500 if the processing circuitry 1522 determines that the joint alignment fixture 400 is not engaged at block 1608. In some examples, the test weld process 2500 checks whether the welding technique monitoring system 200 is correctly configured for a welding-type operation, prior to the actual welding-type operation. The test weld process 2500 is discussed further below with respect to FIG. 2500.

In the example of FIG. 16, after both block 1612 and the test weld process 2500, the technique monitoring process 1600 once again executes the joint identification process 2400 (e.g., in case there has been any movement of the joint 124). Afterwards, the technique monitoring process 1600 returns to block 1606 where the processing circuitry 1522 again determines whether a welding-type operation has begun and/or is occurring. As shown, the technique monitoring process 1600 proceeds from block 1606 to block 1614 if the processing circuitry 1522 determines a welding-type operation has begun and/or is occurring.

At block 1614, the processing circuitry 1522 suppresses output from the output device(s) 1518 of the UI 1506 for the duration of the welding-type operation. In some examples, this may help to avoid distracting the operator 118 during the welding-type operation. In some examples, information may instead (and/or still) be provided via the remote I/O devices 150 (e.g., for teachers, students, administrators, etc.). After block 1614, the technique monitoring process 1600 proceeds to block 1616, where the processing circuitry 1522 locks in the position and/or orientation of the joint 124 relative to the monitoring sensor(s) 1502 determined during the joint identification process 2400 (as there is likely to be no or negligible movement of the joint 124 and/or monitoring sensor(s) 1502 during the welding-type operation).

Following block 1616, the technique monitoring process 1600 proceeds to block 1618 where the processing circuitry 1522 tracks the welding-type tool 1100 using sensor data captured by the monitoring sensor 1502. For example, the processing circuitry 1522 may analyze the (e.g., image) sensor data captured by the monitoring sensor 1502 to identify the position and/or orientation of the marker ring 1200 (and/or one or more markers 199 on the marker ring 1200) on the welding-type tool 1100. Thereafter, the processing circuitry 1522 may apply one or more translations (e.g., determined during the marker ring calibration process 1900) to determine the position and/or orientation of the welding-type tool 1100 using the identified position and/or orientation of the marker ring 1200 (and/or one or more markers 199 on the marker ring 1200) on the welding-type tool 1100.

In some examples, the orientation of the welding-type tool 1100 may be represented and/or conceptualized in the form of a tool orientation vector 1702 (see, e.g., FIG. 17). In some examples, the tool orientation vector 1702 may point parallel to an axis of an electrode, contact tip 1106, and/or nozzle assembly 1104 of the welding-type tool 1100.

In the example of FIG. 16, after block 1618, the technique monitoring process 1600 proceeds to block 1620 where the processing circuitry 1522 determines one or more welding technique parameter values. In some examples, the one or more welding technique parameter values are determined based on the position and/or orientation of the welding-type tool 1100 relative to the position and/or orientation of the joint 124. In some examples, the processing circuitry 1522 may use the position and/or orientation of the welding-type tool 1100 relative to the monitoring sensor 1502 (e.g., determined at block 1618), and the position and/or orientation of the joint 124 relative to the monitoring sensor 1502 (e.g., determined during the joint identification process 2400) to determine the position and/or orientation of the welding-type tool 1100 relative to the position and/or orientation of the joint 124. In some examples, the one or more welding technique parameter may include work angle, travel angle, contact tip to work distance, travel speed, aim, weave parameters, and/or other parameters relating to welding technique.

In some examples, travel angle may be defined as the angle of the welding-type tool 1100 with respect to a direction that a welding-type operation progresses (e.g., where a perpendicular angle is a zero degree travel angle). Thus, in some examples, the technique monitoring process 1600 may determine the travel angle based on the angle between the joint orientation vector 1704 and the tool orientation vector 1702 (and/or 90 degrees minus this angle).

In some examples, work angle may be defined as the angle between a line perpendicular to a base workpiece 122 (e.g., the workpiece 122 lying flat on the support platform 202 and/or parallel to the support platform 202 itself) and a plane determined by the axis of an electrode of the welding-type tool 1100 (e.g., tool orientation vector 1702) and the weld axis (e.g., joint orientation vector 1704). Thus, in some examples, the technique monitoring process 1600 may determine the work angle based on the base plate perpendicular vector 1708 and the tool orientation vector 1702 (e.g., where the tool orientation vector 1702 is assumed to be the relevant line on the plane). In some examples, precise calculations of travel angle and/or work angle may rely on both an angle between the tool orientation vector 1702 and the joint orientation vector 1704, and an angle between the tool orientation vector 1702 and the base plate perpendicular vector 1708 (e.g., applied to certain trigonometric functions).

In some examples, the contact tip to work distance may be defined as the distance between the position of the joint 124 and the position of the welding-type tool 1100 (e.g., where the position of the welding-type tool 1100 is defined to be the position at the end of a contact tip 1106 or tungsten electrode of the welding-type tool 1100). In some examples, the travel speed may be defined as the change in the position of the welding-type tool 1100 along the joint 124 (and/or parallel to the joint orientation vector 1704) over time. In some examples, the aim may be defined as the shortest distance along the workpiece 122 between a center of the joint 124 (e.g., along the base plate surface vector 1706) and an intersection of the workpiece 122 and (e.g., an extension of) the tool orientation vector 1702.

In some examples, the processing circuitry 1522 may determine instantaneous values for the one or more welding technique parameters at block 1620, and record the values in memory circuitry 1520 until the welding-type operation is over. In some examples, only the instantaneous position(s) and/or orientation(s) of the welding-type tool 1100 (and/or of the joint 124) relative to the monitoring sensor 1502 (and/or joint 124) may be recorded at block 1620, and the instantaneous values for the one or more welding technique parameters determined afterwards. In some examples, feedback regarding the welding technique parameter values may be suppressed during the welding-type operation to avoid distracting the operator 118 during the welding-type operation.

FIG. 17 shows an example of the tool orientation vector 1702, joint orientation vector 1704, a base plate surface vector 1706, and base plate perpendicular vector 1708. The tool orientation vector 1702 is shown as an arrow extending from the end of the nozzle assembly 1104 and/or the end of a contact tip 1106 within the nozzle assembly 1104. The tool orientation vector 1702 is further shown extending in a direction parallel to an axis of the nozzle assembly 1104 (and/or an axis of the contact tip 1106).

In the example of FIG. 17, the joint orientation vector 1704 is shown as an arrow extending along (and/or parallel to) the joint 124 between the two workpieces 122. The base plate surface vector 1706 is shown as an arrow extending along the surface of the workpiece 122, perpendicular to the joint 124 and/or joint orientation vector 1704, from the joint 124 to an edge 1710 of the workpiece 122. The base plate perpendicular vector 1708 is shown as an arrow extending perpendicular to the flat surface(s) of the workpiece 122 and perpendicular to the joint 124, joint orientation vector 1704, and base plate surface vector 1706. While shown as being particular lengths in the example of FIG. 17, in some examples, the length of each vector may be arbitrary and/or less important than the direction.

In the example of FIG. 16, after determining and/or recording technique parameter values at block 1620, the technique monitoring process 1600 determines whether the welding-type operation is still occurring at block 1622. In some examples, the determination at block 1622 may be similar (or identical) to the determination at block 1606. If the technique monitoring process 1600 determines that the welding-type operation is still occurring, the technique monitoring process 1600 returns to block 1614 after block 1622. If the technique monitoring process 1600 determines that the welding-type operation is over, the technique monitoring process 1600 proceeds to block 1624 after block 1622.

At block 1624, feedback regarding the determined welding technique parameters may be provided (e.g., via UI 1506). In some examples, the feedback may in the form of one or more text messages, images, videos, sounds, vibrations, and/or appropriate outputs. In some examples, the feedback may identify one or more of the welding technique parameter values and/or weave pattern characteristic values determined at block 1620. In some examples, the feedback may identify the welding technique parameter values and/or weave pattern characteristic values at different times of the welding-type operation, and/or average welding technique parameter values and/or weave pattern characteristic values. In some examples, the feedback may output video and/or audio recorded at the time corresponding to the displayed an/or selected welding technique parameter values and/or weave pattern characteristic values.

In some examples, the processing circuitry 1522 may compare the determined welding technique parameter values (and/or weave pattern characteristic values) to expected and/or target welding technique parameter (and/or weave pattern characteristic) values, and/or provide feedback regarding the comparison. In some examples, the technique monitoring process 1600 might provide different feedback (e.g., red vs. green colors, chime vs. alarm sounds, etc.) depending on whether the determined values are within, or outside of, a threshold range of the expected/target values. In some examples, the technique monitoring process 1600 may further determine one or more ratings, grades, and/or scores based on the comparison of the determined values to the expected/target values, and provide feedback with respect thereto.

FIG. 18 shows example feedback that might be output to an operator 118 during the feedback block 1624 of the technique monitoring process 1600. In the example of FIG. 18, a graphical user interface (GUI) 1800 is shown, such as might be presented via a display screen output device 1518 of the monitoring device 1500. As shown, the GUI 1800 presents feedback regarding work angle, travel angle, contact tip to work distance, travel speed, and aim welding technique parameter values over time (e.g., the time of the welding-type operation). The GUI 1800 further has a slider allowing for selection of welding technique parameter values at different times. While the feedback is presented in the form of line graphs in the GUI 1800 of FIG. 18, in some examples, the feedback may take alternative, or additional, forms. The GUI 1800 further shows comparison feedback (e.g., between actual and expected/target values) in the form of a score for each welding technique parameter, as well as a total (e.g., average) score.

In the example of FIG. 16, the technique monitoring process 1600 either ends after block 1626 (e.g., in response to some input via the UI 1506), or repeats the technique monitoring process 1600. As shown, the technique monitoring process 1600 may repeat beginning at block 1900 if there has been some change to the welding-type tool 1100 and/or marker ring 1200 (e.g., determined at block 1628). For example, if the operator 118 obtains a new marker ring 1200 or welding-type tool 1100, or rearranges the attachment location of the marker ring 1200 on the welding-type tool 1100, the technique monitoring process 1600 may repeat beginning at block 1900. In some examples, the technique monitoring process 1600 may rely on operator input (e.g., via the UI 1506) to determine whether there has been some change to the welding-type tool 1100 and/or marker ring 1200. In the example of FIG. 16, the technique monitoring process 1600 returns to block 1900 if there has been a change to the welding-type tool 1100 and/or marker ring 1200, and returns to block 1602 if there has not been such a change.

FIG. 19 is a flowchart illustrating operation of an example marker ring calibration process 1900 of the technique monitoring process 1600. In some examples, the marker ring calibration process 1900 enables the welding technique monitoring system 200 to translate an identified position and/or orientation of the marker ring 1200 attached to the welding-type tool 1100 (and/or one or more markers 199 on the marker ring 1200) to a position and/or orientation of the welding-type tool 1100. Once calibrated, the welding technique monitoring system 200 is thereafter able to track the position and/or orientation of the welding-type tool 1100 by tracking the position and/or orientation of the marker ring 1200 attached to the welding-type tool 1100 (and/or the one or more markers 199 on the marker ring 1200).

In the example of FIG. 19, the marker ring calibration process 1900 begins at block 1902 where the processing circuitry 1522 prompts the operator 118 (e.g., via the UI 1506) to properly position a tool holder and the welding-type tool 1100 (e.g., in the tool holder) for the marker ring calibration process 1900. In some examples, proper positioning of the tool holder may comprise a position fixed on the flat surface 201 of the support platform 202, or fixed on a flat surface approximately parallel to (and/or aligned with) the flat surface 201 of the support platform 202. Proper positioning of the tool holder may further comprise being positioned such that the tool holder is visible and/or detectable to the monitoring sensor 1502. In some examples, proper positioning of the tool holder may comprise being attached to the surface 201 of the support platform 202 (e.g., in place of the light filter housing 900). Proper positioning of the welding-type tool 1100 may comprise being positioned with the nozzle assembly 1104 of the welding-type tool 1100 held by the tool holder.

FIG. 20 shows an example of a calibration block 2000 that may be used as a tool holder during the marker ring calibration process 1900. In the example of FIG. 20, the calibration block 2000 is a cube with six block faces 2002. Each block face 2002 of the calibration block 2000 has an approximately cylindrical cavity 2004 configured to fit a nozzle assembly 1104 of a welding-type tool 1100. Each cavity 2004 is of a different size (e.g., with respect to a radius/diameter and/or depth), so as to accommodate differently sized nozzle assemblies 1104.

In the example of FIG. 20, each cavity 2004 of the calibration block 2000 is defined by cavity walls configured to grip and/or restrict the nozzle assembly 1104 when inserted into the cavity 2004. In some examples, the cavity walls are configure to restrict the nozzle assembly 1104 (and/or welding-type tool 1100) from translational movement. More particularly, the cavity walls may be configured to restrict translational movement along a plane defined by the block face 2002 having the cavity 2004.

In the example of FIG. 20, each cavity 2004 further includes a pillar 2006. Each pillar 2006 is shown extending up from an end of the cavity 2004 towards the block face 2002 of the cavity 2004. Each pillar 2006 is further shown extending in a direction approximately perpendicular to the plane of the block face 2002 having the cavity 2004. As shown, each pillar 2006 is also positioned at an approximate center of the cavity 2004. In some examples, different pillars 2006 may extend to different heights (e.g., measured from an end of the cavity 2004).

In some examples, each pillar 2006 is configured to abut a contact tip or tungsten electrode of the nozzle assembly 1104 when the nozzle assembly 1104 is inserted into the cavity 2004. Such abutment may serve to stop the nozzle assembly 1104 (and/or welding-type tool 1100) from further movement down into the cavity 2004 (e.g., in a direction parallel to the pillar 2006). In some examples, the pillar 2006 both restricts movement and ensures that the contact tip 1106 or tungsten electrode of the nozzle assembly 1104 will always be at the same position in a particular cavity 2004.

In the example of FIG. 2000, each block face 2002 further includes four markers 199 positioned proximate the four corners of the block face 2002. In some examples, each marker 199 is different from each other marker 199, such that each block face 2002 is distinguishable from each other block face 2002. The unique markers 199 may further ensure each orientation of each block face 2002 is distinguishable from each other orientation of that block face 2002.

As shown, each block face 2002 additionally includes four complementary fasteners 2001. Each complementary fastener 2001 is shown positioned between two markers 199. In some examples, the complementary fasteners 2001 are configured to connect with fasteners 101 secured to the support platform 202. In some examples, connection of complementary fasteners 2001 of a block face 2002 to fasteners 101 secured to the support platform 202 will result in the calibration block 2000 being removably attached to the support platform 202. In some examples, disconnection of the fasteners 101 and complementary fasteners 2001, and/or removal of the fasteners 101 from the support platform 202, may allow the calibration block 2000 to be removed from the support platform 202. While the complementary fasteners 2001 are shown as holes (e.g., configured to fit/receive protruding pins, screws, bolts, etc.) in the example of FIG. 20, in some examples, the complementary fasteners 2001 may instead be protruding elements (e.g., pins, screws, bolts, etc. configured to be received by complementary holes).

In the example of FIG. 19, after prompting for proper positioning of the tool holder and/or welding-type tool 1100 at block 1902, the marker ring calibration process 1900 proceeds to block 1904. At block 1904, the monitoring sensor 1502 captures sensor data relating to the tool holder (e.g., calibration block 2000) that is used to hold the nozzle assembly 1104 of the welding-type tool 1100 during the marker ring calibration process 1900.

In the example of FIG. 19, after capturing sensor data relating to the calibration block 2000 holding the welding-type tool 1100 at block 1904, the marker ring calibration process 1900 proceeds to block 1906. At block 1906, the processing circuitry 1522 determines which block face 2002 of the tool holder (e.g., calibration block 2000) is most visible to (and/or most detectable by) the monitoring sensor 1502. In some examples, determining which block face 2002 is most visible may comprise determining which block face 2002 (and/or markers 199 of the block face 2002) is closest to being oriented approximately parallel to a sensor plane 2602, and/or approximately perpendicular to a sensor axis 2604, of the monitoring sensor 1502 (see, e.g., FIG. 26).

In some examples, the tool holder (e.g., calibration block 2000) may be positioned with only one block face 2002 being visible to (and/or detectable/discernable by) the monitoring sensor 1502. For example, fasteners 101 attached to the support platform 202 may be arranged such that when the complementary fasteners 2001 of the calibration block 2000 connect with the fasteners 101, only one block face 2002 of the calibration block 2000 is visible to (and/or detectable/discernable by) the monitoring sensor 1502. In such examples, determining which block face 2002 is most visible (and/or detectable/discernable) is a simple endeavor as only one block face 2002 is at all visible (and/or detectable/discernable).

However, in some examples, the block face 2002 may be positioned askew, such that more than one block face 2002 is visible (and/or detectable/discernable). Or the monitoring sensor 1502 may be slightly elevated above the tool holder (e.g., calibration block 2000), such that the upper block face 2002 is also visible (and/or detectable/discernable). In such examples, the processing circuitry 1522 may need to first discern which block face 2002 is most visible (and/or detectable/discernable) to the monitoring sensor 1502.

In some examples, the memory circuitry 1520 may store a model of the calibration block 2000 that identifies which markers 199 are on each block face 2002 of the calibration block 2000, and/or how the markers 199 are arranged on each block face 2002 of the calibration block 2000. In some examples, the processing circuitry 1522 may analyze the (e.g., image) sensor data and identify the markers 199 that are currently detectable (e.g., visibly recognizable). The processing circuitry 1522 may then determine the position(s) and/or orientation(s) of the identified marker(s) 199 using the sensor data, and identify the arrangement of detected and/or identified markers 199. The processing circuitry 1522 may further compare the arrangement of the identified markers 199 to the stored model of the calibration block 2000 (and/or the stored arrangement(s) of marker(s) 199 on the block faces 2002 in the model).

By comparing identified arrangements of markers 199 to the stored model, the processing circuitry 1522 may identify which block faces 2002 were detected by (e.g., visible in) the sensor data. The processing circuitry 1522 may then determine which of the detected block faces 2002 has the most markers 199 oriented towards the monitoring sensor 1502 (e.g., perpendicular to a sensor axis 2604 of the monitoring sensor 1502 and/or parallel to a sensor plane 2602 of the monitoring sensor 1502 - see, e.g., FIG. 26). The block face 2002 with the most markers 199 oriented towards the monitoring sensor 1502 may be considered most visible to (and/or most detectable by) the monitoring sensor 1502.

In the example of FIG. 19, after determining the most visible (and/or detectable) block face 2002 of the calibration block 2000 at block 1908, the marker ring calibration process 1900 proceeds to block 1910. At block 1910, the processing circuitry 1522 determines which cavity 2004 of the calibration block 2000 is being used to hold the nozzle assembly 1104 of the welding-type tool 1100. In some examples, the determination may be based on which block face 2002 of the calibration block 2000 was determined to be most visible (and/or most detectable), and the model of the calibration block 2000 stored in memory circuitry 1520.

For example, the processing circuitry 1522 may conclude the most visible (and/or most detectable) block face 2002 is facing (and/or oriented towards) the monitoring sensor 1502. The processing circuitry 1522 may then determine the orientation(s) of the most visible block face 2002 (and/or the orientation of the calibration block 2000) based on the (e.g., previously determined) orientation(s) of the marker(s) 199 on the most visible block face 2002 (e.g., as compared with the orientation(s) of the marker(s) 199 in the stored model). The processing circuitry 1522 may further reference the stored model of the calibration block 2000 to determine which cavity 2004 is available for use (e.g., oriented upwards) when the most visible block face 2002 is facing sideways (e.g., towards the monitoring sensor 1502) and in the determined orientation.

In the example of FIG. 19, after determining which cavity 2004 of the calibration block 2000 will hold the nozzle assembly 1104 at block 1910, the marker ring calibration process 1900 proceeds to block 1912. At block 1912, the processing circuitry 1522 determines the peak (e.g., highest upward) position of the pillar 2006 in the cavity 2004 that will hold the nozzle assembly 1104 (e.g., by referencing the stored model). In some examples, different pillars 2006 in different cavities 2004 may have different peak positions. In some examples, it may be helpful to know the peak position of the pillar 2006, as the peak of the pillar 2006 will abut the contact tip 1106 or tungsten electrode of the nozzle assembly 1104, and so will approximately correspond to the position of the end of the contact tip 1106 or tungsten electrode.

In some examples, the memory circuitry 1520 may store relative peak positions of each pillar 2006 of the calibration block 2000 (e.g., as part of the stored model of the calibration block 2000). For example, each peak position of each pillar 2006 may be stored relative to one or more markers 199 on a block face 2002 adjacent to the block face 2002 having the cavity 2004 with the pillar 2006. Thus, the processing circuitry 1522 may use the previously determined position(s) and/or orientation(s) of the marker(s) 199 in conjunction with the information stored in the stored model to determine the peak position of the pillar 2006 of the cavity 2004 that will receive the nozzle assembly 1104 of the welding-type tool 1100.

In some examples, a simpler version of the calibration block 2000 may be used as a tool holder. For example, the pillars 2006 of the calibration block 2000 may all be of the same height, and/or all peak at the same position relative to the block face 2002 and/or marker(s). As another example, a simpler calibration block 2000 may have only one cavity 2004, where some mechanism may be used to adjust the volume inside the cavity 2004 to accommodate different sized nozzle assemblies 104 (e.g., similar to the mechanisms 1250 shown and discussed with respect to the marker ring 1200 of FIG. 12). In such examples, it may not matter which cavity 2004 is in use, making the most visible block face 2002 determination of block 1906 less important, and/or making the pillar peak determination of block 1912 much simpler.

In the example of FIG. 19, after determining the peak position of the pillar 2006 at block 1912, the marker ring calibration process 1900 proceeds to block 1914. At block 1914, the processing circuitry 1522 defines the position of the welding-type tool 1100 to be equal to the peak position of the pillar 2006. As noted above, when the nozzle assembly 1104 is fully inserted into the cavity 2004 of the calibration block 2000, the peak position of the pillar 2006 will be the same as the position of the end of the contact tip 1106 or tungsten electrode of the nozzle assembly 1104 that abuts the pillar 2006. As the end position of the contact tip 1106 or tungsten electrode may be a useful part of the welding-type tool 1100 to track (e.g., for determining contact tip to work distance), the marker ring calibration process 1900 calls for defining the position of the welding-type tool 1100 as the end position of the contact tip 1106 or tungsten electrode.

After defining the position of the welding-type tool 1100 to be the position of the peak of the pillar 2006 at block 1914, the marker ring calibration process proceeds to block 1916. At block 1916, the processing circuitry 1522 directs the monitoring sensor 1502 to capture sensor data relating to the welding-type tool 1100 as the welding-type tool 1100 is moved by the operator 118.

In some examples, the processing circuitry 1522 may prompt the operator 118 (e.g., via UI 1506) to move the welding-type tool 1100 so that the monitoring sensor 1502 can capture data relating to (and/or showing) all the ring faces 1220/1230 (and/or markers 199) of the marker ring 1200. In some examples, the processing circuitry 1522 may prompt the operator 118 to move the welding-type tool 1100 in one complete continuous revolution while the monitoring sensor 1502 is capturing data. In some examples, one or more of the cavities 2004 of the calibration block 2000 may be configured to allow rotational movement of the welding-type tool 1100 while the nozzle assembly 1104 is in the cavity 2004. For example, the rotational movement may be about the nozzle assembly 1104 and/or a central axis of the nozzle assembly 1104 (e.g., approximately parallel to the pillar 2006). In such examples, the operator 118 may provide (and/or the processing circuitry 1522 may prompt the operator 118 to provide) some indication (e.g., via the UI 1506) when the monitoring sensor 1502 should begin and/or end capturing data (and/or when they will begin and/or end moving the welding-type tool 1100), such as via two inputs, or one input and a timer function, and the monitoring sensor 1502 may capture data relating to the welding-type tool 1100 and/or marker ring 1200 in response to such an indication.

In some examples, the processing circuitry 1522 may prompt the operator 118 to move the welding-type tool 1100 in a series of discrete steps that combine to equal one complete revolution. For example, one or more of the cavities 2004 may not allow for rotational movement of the nozzle assembly 1104 while in the cavity 2004. In such examples, the operator 118 may be prompted to remove the nozzle assembly 1104 from the cavity 2004, rotate the welding-type tool 1100, and then reinsert the nozzle assembly 1104 into the cavity 2004. In such examples, the operator 118 may provide (and/or the processing circuitry 1522 may prompt the operator 118 to provide) some indication (e.g., via the UI 1506) when the monitoring sensor 1502 should capture data for a particular discrete step, and the monitoring sensor 1502 may capture data relating to the welding-type tool 1100 and/or marker ring 1200 in response to such an indication.

FIG. 21 shows an example of how the calibration block 2000 and welding-type tool 1100 might appear to the monitoring sensor 1502 when the calibration block 2000 is attached to the support platform 202, and/or the welding-type tool 1100 is held by the calibration block 2000 (other elements have been omitted for simplicity, clarity, and explanation). As shown, only one block face 2002 of the calibration block 2000 is fully visible in FIG. 21, providing a simple example of what would be the most visible block face 2002. Fasteners 101 are shown extending through the support platform 202 to connect with the complementary fasteners 2001 on a lower block face 2002 of the calibration 2000 that abuts the surface 201 of the support platform 202 (the lower block face 2002 is not visible due to the perspective of the figure).

In the example of FIG. 21, the welding-type tool 1100 is additionally shown with the nozzle assembly 1104 inserted into a cavity 2004 of the calibration block 2000 (though the actual cavity 2004 is not visible due to the perspective of the figure). A dotted line version welding-type tool 1100 is shown at a rotated orientation from the solid line version of the welding-type tool 1100 to give an example of the how the welding-type tool 1100 might be moved during the (e.g., circular) movement phase of the marker ring calibration process 1900 (e.g., at block 1916).

In the example of FIG. 19, after capturing the sensor data at block 1916, the marker ring calibration process 1900 proceeds to block 1918. At block 1918, the processing circuitry 1522 determines the position and/or orientation of each marker 199 on the marker ring 1200 relative to the monitoring sensor 1502 using the sensor data captured by the monitoring sensor 1502 at block 1916. In some examples, at block 1918, the processing circuitry 1522 may determine the position and/or orientation of one or more markers 199 at different times (e.g., at different points in the movement of the welding-type tool 1100) using the sensor data.

In some examples, the processing circuitry 1522 may store the position(s) and/or orientation(s) in memory circuitry 1520. In some examples, the processing circuitry 1522 may build a model of the marker ring 1200 using the sensor data, and/or the determined position(s) and/or orientation(s) of the marker(s) 199 on the marker ring 1200. In some examples, the model may include positions and/or orientations of the markers 199 relative to one another, and/or translations between positions and/or orientations of the markers 199. Thereby, using the model, the processing circuitry 1522 may be able to determine where one (e.g., visible) first marker 199 is positioned and/or oriented using sensor data relating to the first marker 199, and then translate knowledge of the first marker 199 into the position and/or orientation of a second (e.g., invisible and/or obstructed) marker 199,without any sensor data relating to the second marker 199.

After determining the position and/or orientation of the marker(s) 199 on the marker ring 1200 at block 1918, the processing circuitry 1522 defines the orientation of the welding-type tool 1100 at block 1920. As discussed above, the orientation of the welding-type tool 1100 may be represented and/or conceptualized via a tool orientation vector 1702 (see, e.g., FIGS. 17 and 21). In some examples, the processing circuitry 1522 defines the orientation of the welding-type tool 1100 (e.g., tool orientation vector 1702) as being straight downwards into the calibration block 2000, approximately perpendicular to the block face 2002 having the cavity 2004 (and/or approximately perpendicular to the surface 201 of the support platform 202).

In some examples, the processing circuitry 1522 may use sensor data from an accelerometer monitoring sensor 1502 (e.g., measuring acceleration due to gravity) to determine which direction is straight downwards. However, this may yield less accurate results if the support platform 202 and/or calibration block 2000 is not positioned on a perfectly horizontal surface, as the direction of gravity may not be approximately perpendicular to the surface 201 of the support platform 202 and/or the block face 2002.

In some examples, the processing circuitry 1522 may use the stored model of the calibration block 2000 to determine the direction the welding-type tool 1100 is oriented. For example, the stored model may store a base position of the pillar 2006 (e.g., where the pillar 2006 begins) relative to the marker(s) 199 on the most visible block face 2002, as well as the peak position of the pillar 2006 relative to the marker(s) 199 on the most visible block face 2002. Using the stored model information and the previously determined position(s) and/or orientation(s) of the marker(s) 199, the processing circuitry 1522 may identify the peak and base positions of the pillar 2006, and define the tool orientation vector 1702 as extending from the peak position of the pillar 2006 to the base position of the pillar 2006.

Alternatively, the processing circuitry 1522 may analyze the saved model to identify two markers 199 on the most visible block face 2002 that are vertically aligned when that block face 2002 is in the previously determined orientation. Thereafter, the processing circuitry 1522 may define the tool orientation vector 1702 as extending from the position of the upper marker 199 (or some position offset from the marker 199) to the position of the lower marker 199 (or some position equally offset) using the previously determined positions of the markers 199.

In some examples, the processing circuitry 1522 may use the determined positions and/or orientations of one or more markers 199 on the marker ring 1200 to determine the direction the welding-type tool 1100 is oriented (e.g., tool orientation vector 1702). For example, using the sensor data detected by the monitoring sensor 1502 as the welding-type tool 1100 is rotated in block 1916, the processing circuitry 1522 may be able to identify several positions of a marker 199 on the marker ring 1200 during the rotational movement. In some examples, the processing circuitry 1522 may be able to identify additional positions of the marker 199 on the marker ring 1200 by identifying positions of other secondary markers 199 on the marker ring 1200 (e.g., at times when the primary marker 199 is obscured), and using a generated model of the marker ring to estimate the position of the primary marker 199.

In some examples, the processing circuitry 1522 may be able to define and/or approximate a circle having a perimeter that approximately intersects the identified positions of the marker 199 on the marker ring 1200. Thereafter, the processing circuitry 1522 may be able to identify a central position of the circle that is approximately equidistant (e.g., within 0-3 millimeters) from the identified positions of the marker 199 on the marker ring 1200 and/or collinear with an axis of the nozzle assembly 1104 (and/or contact tip 1106). In some examples, the processing circuitry 1522 may define the tool orientation vector 1702 as being parallel to a vector extending from the central position of the circle to the defined tool position (e.g., peak point of the pillar 2006). In some examples, the processing circuitry 1522 may go through the same process with several or all of the markers 199 on the marker ring 1200 to identify several circle centers and subsequent vectors, and use a statistical technique (e.g., mean, mode, etc.) to identify one tool orientation vector 1702 from the several.

In some examples, the processing circuitry 1522 may alternatively, or additionally, identify a normal vector to the circle, using known geometric techniques, and define the tool orientation vector 1702 as being parallel to the normal vector. In some examples, to the extent there are two normal vectors, the processing circuitry 1522 may use the normal vector that points closer to the defined tool position (e.g., peak point of pillar 2006). In some examples, the processing circuitry 1522 may go through the same process with several or all of the markers 199 on the marker ring 1200 to identify several normal vectors, use a statistical technique (e.g., mean, mode, etc.) to identify one normal vector from the several, and use that one normal vector to define the direction the welding-type tool 1100 is oriented.

In the example of FIG. 19, after defining the orientation of the welding-type tool 1100 at block 1920, the marker ring calibration process 1900 proceeds to block 1922. At block 1922, the processing circuitry 1522 determines one or more translations between the orientation(s) of the marker(s) 199 on the marker ring 1200 and the orientation of the welding-type tool 1100 defined at block 1920. In some examples, the translation(s) may comprise one or more angles and/or vectors that may be added to, or subtracted from, (e.g., an axis of) the orientation(s) of the marker(s) 199 to convert (e.g., an axis of) the orientation(s) of the marker(s) 199 to the orientation of the welding-type tool 1100 (e.g., tool orientation vector 1702).

In some examples, the processing circuitry 1522 may use the previously determined orientation(s) of the marker(s) 199 (e.g., from block 1920) to determine the translation(s). In some examples, the processing circuitry 1522 may capture new sensor data (e.g., via the monitoring sensor 1502), identify one or more new orientations of the marker(s) 199 on the marker ring 1200, and use those one or more new orientations to determine the translation(s). In some examples, the processing circuitry 1522 may define some overall orientation of the marker ring 1200 relative to its markers 199 (e.g., using the generated model of the marker ring 1200) and determine a translation between the orientation of the marker ring 1200 as a whole and the orientation of the welding-type tool 1100.

After determining the orientation translation(s) at block 1922, the marker ring calibration process 1900 proceeds to block 1924. At block 1924, the processing circuitry 1522 determines one or more translations between the position(s) of the marker(s) 199 on the marker ring 1200 and the position of the welding-type tool 1100 defined at block 1914 (e.g., peak of the pillar 2006). In some examples, the translation(s) may comprise one or more distances, directions, and/or vectors that may be added to, or subtracted from, the positions(s) of the marker(s) 199 to convert the position(s) of the marker(s) 199 to the position of the welding-type tool 1100.

In some examples, the processing circuitry 1522 may use the previously determined position(s) of the marker(s) 199 to determine the translation(s). In some examples, the processing circuitry 1522 may capture new sensor data (e.g., via the monitoring sensor 1502), identify one or more new positions of the marker(s) 199 on the marker ring 1200, and use those one or more new positions to determine the translation(s). In some examples, the processing circuitry 1522 may define some overall position of the marker ring 1200 relative to its markers 199 (e.g., using the generated model of the marker ring 1200) and determine a translation between the position of the marker ring 1200 as a whole and the position of the welding-type tool 1100. As shown, the marker ring calibration process 1900 ends after determination of the position translation(s) at block 1924.

FIG. 22 is a flowchart illustrating operation of an example joint calibration process 2200 of the technique monitoring process 1600. In some examples, the joint calibration process 2200 enables the welding technique monitoring system 200 to determine the position and/or orientation of a welding joint 124 relative to the marker stand 208 (and/or one or more markers 199 on the marker stand 208), and record the position and/or orientation of the joint 124 as joint data 1524. Once recorded, an operator can thereafter configure the welding technique monitoring system 200 to monitor a welding-type operation on a similarly positioned and/or oriented joint 124 by loading the saved joint data 1524 (and without having to again undergo the joint calibration process 2200).

In the example of FIG. 22, the joint calibration process 2200 begins at block 2202, where the processing circuitry 1522 prompts the operator 118 (e.g., via the UI 1506) to position the workpiece(s) 122 and/or joint 124 using the joint alignment fixture 400. In some examples, the prompt(s) may instruct the operator 118 to put the joint alignment fixture 400 in a fully engaged position such that the joint contacting elements 418 make contact with the workpieces 122 and correctly aligns the joint 124 and/or positions the joint 124 (e.g., with respect to height above the support platform 202 and/or in a direction parallel to the abutting edge(s) 218 and/or end edge(s) 216). As the joint alignment fixture 400 is fixed in place relative to the marker stand(s) 208, the joint alignment fixture 400 will always position and/or align the workpieces 122 and/or joint 124 in the same way relative to the marker stand(s) 208 (and/or the marker(s) 199 on the marker stand(s) 208).

In some examples, even when using the alignment fixture 400, the position(s) of the workpiece(s) 122 and/or joint 124 may be variable in a direction parallel to the joint 124. That is, different joints 124 (and/or workpieces 122) may have different lengths (i.e., distance between ends), and/or may be differently positioned along their lengths. In some examples, the welding technique monitoring system 200 may use determined position(s) of the welding-type tool 1100 during a welding-type operation to determine the position(s) of the workpiece(s) 122 and/or joint 124 in a direction parallel to the joint 124. In some examples, some default position(s) may be assumed. As the height above the support platform 202 and/or positioning of the joint 124 in a direction parallel to the abutting edge(s) 218 and/or end edge(s) 216 have a far more substantial impact on the welding technique parameter values, it is more important these positions remain consistent than the position(s) in a direction parallel to the joint 124.

After prompting to properly position and/or align the joint 124 using the joint alignment fixture 400 at block 2202, the joint calibration process 2200 proceeds to block 2204. In some examples, the joint calibration process 2200 may proceed to block 2204 in response to some input from the operator 118 (e.g., received via the UI 1506) indicating that the joint 124 has been properly positioned and/or aligned. In some examples, the joint calibration process 2200 may proceed to block 2204 in response to the processing circuitry 1522 determining from sensor data captured via the monitoring sensor 1502 that the j oint alignment fixture 400 has been engaged (e.g., by analyzing the visibility and/or positioning of one or more portions and/or markers 199 of the joint alignment fixture 400).

At block 2206 of the joint calibration process 2200, the processing circuitry 1522 prompts the operator 118 (e.g., via the UI 1506) to secure the workpiece(s) 122 via the clamps 204 so that the joint 124 remains properly positioned and/or aligned. In some examples, the processing circuitry 1522 further prompts for the operator 118 to disengage the joint alignment fixture 400 after securing the workpiece(s) 122 so that the joint alignment fixture 400 will not impede the remaining portions of the joint calibration process 2200.

In the example of FIG. 22, after prompting for clamping of the workpiece(s) 122 and/or disengagement of the joint alignment fixture 400 at block 2204, the joint calibration process 2200 proceeds to block 2206. In some examples, the joint calibration process 2200 may proceed to block 2206 in response to some input from the operator 118 (e.g., received via the UI 1506) indicating that the clamps 204 have been engaged to secure the workpiece(s) 122, and/or indicating that the joint alignment fixture 400 has been disengaged. In some examples, the joint calibration process 2200 may proceed to block 2206 in response to the processing circuitry 1522 determining from sensor data captured via the monitoring sensor 1502 that the clamps 204 have been engaged and/or the joint alignment fixture 400 has been disengaged (e.g., by analyzing the visibility and/or positioning of one or more portions and/or markers 199 of the clamps 204 and/or j oint alignment fixture 400).

At block 2206, the processing circuitry 1522 prompts the operator 118 (e.g., via the UI 1506) to position a calibration device proximate a first end of the joint 124. In some examples, the calibration device is some device that can be detected by the monitoring sensor 1502 and/or whose position can be determined by the processing circuitry 1522 (e.g., via an analysis of sensor data relating to the calibration device). In some examples, the welding-type tool 1100 may be used as the calibration device. In some examples, the calibration block 2000 may be used as the calibration device. In some examples, a separate device may be used as the calibration device.

In some examples, after the calibration device is positioned proximate a first end of the joint 124, the monitoring sensor 1502 captures first (e.g., image) sensor data of and/or relating to the calibration device. In some examples, the monitoring sensor 1502 may capture the first sensor data in response to some input from the operator 118 (e.g., received via the UI 1506) indicating that the calibration device has been positioned proximate the first end of the joint 124. In some examples, the monitoring sensor 1502 may capture the first sensor data in response to the processing circuitry 1522 determining (e.g., via analysis of previously captured sensor data) that the calibration device has stayed approximately stationary for a threshold period of time. In some examples, the monitoring sensor 1502 may continuously capture sensor data, and the processing circuitry 1522 may simply define the most recently captured sensor data as being first sensor data in response to the processing circuitry 1522 determining that the calibration device has stayed approximately stationary for a threshold period of time.

In the example of FIG. 22, after prompting for positioning of the calibration device at a first end of the joint 124, and capturing the first sensor data of the calibration device at the first end of the joint 124, the joint calibration process 2200 proceeds to block 2208, where the process is repeated with respect to a second end of the joint 124. After capturing the first and second sensor data at blocks 2206-2208, the joint calibration process 2200 proceeds to block 2210, where the processing circuitry 1522 analyzes the first and second sensor data to determine corresponding first and second positions of the calibration device relative to the monitoring sensor 1502 when at the first and second ends of the joint 124. In some examples, the processing circuitry 1522 additionally, or alternatively, analyzes the sensor data to determine the positions and/or orientations of one or more markers 199 of the calibration device relative to the monitoring sensor 1502.

FIG. 23 shows an example of how the calibration block 2000 might be used as a calibration device during the joint calibration process 2200. As shown, the solid line calibration block 2000a has been placed on the workpiece 122 at a first end of the joint 124. A dashed line version of the calibration block 2000b is shown placed at the opposite end of the joint 124 to represent where the calibration block 2000 might be positioned when placed at a second, opposite, end of the joint 124. The monitoring system 200 is further shown with the light filter housing 900 and light filter 902 temporarily removed from the support platform 202 so that the monitoring sensor 1502 has an unobstructed view of the workpiece(s) 122, joint 124, and/or calibration block 2000. In some examples, just the light filter 902 may be removed, and the light filter housing 900 allowed to remain. In some examples (e.g., where the light filter 902 is an auto-darkening filter), even the light filter 902 may be allowed to remain (e.g., because the light filter 902 will not darken until/unless there is an arc).

In the example of FIG. 22, after determining first and second positions and/or orientations of the calibration device, the joint calibration process 2200 proceeds to block 2212. At block 2212, the processing circuitry 1522 identifies a position and/or orientation of the joint 124 relative to the monitoring sensor 1502 based on the first and/or second positions and/or orientations of the calibration device determined at block 2212.

In some examples, the processing circuitry 1522 may use the position(s) of one or more markers 199 on the calibration device to determine the position of the joint 124. In some examples, the processing circuitry 1522 may use a point at some predetermined offset from the position(s) of the calibration device and/or the marker(s) 199 on the calibration device (e.g., where the offset is stored in memory circuitry 1520 and/or as part of model of the calibration device).

In some examples the processing circuitry 1522 may use a statistical combination (e.g., average) of first and second positions of the calibration device (and/or first and/or second positions of marker(s) 199 on the calibration device) to determine the position(s) of the joint 124. In some examples, the processing circuitry 1522 may use only the first position or second position of the calibration device. As discussed above, the processing circuitry 1522 may determine position relative to the height above the support platform 202 and/or in a direction parallel to the abutting edge(s) 218 and/or end edge(s) 216.

In some examples, the processing circuitry 1522 may identify the orientation of the joint 124 as being parallel to a vector extending between the first and second positions of the calibration device, and/or a marker 199 on the calibration device. In some examples, the processing circuitry 1522 may identify the orientation of the joint 124 as being parallel to a vector extending between points at predetermined offsets from the first and second positions of the calibration device and/or the marker(s) 199 (e.g., where the offsets are stored in memory circuitry 1520 and/or as part of model of the calibration device). In some examples, the processing circuitry 1522 may identify the orientation of the joint 124 as being parallel to a statistical combination of several vectors extending between first and second positions of several markers 199 on the calibration device (and/or several points offset from the markers 199). In some examples, the processing circuitry 1522 may only use one position and orientation of the calibration device (and/or marker(s) 199 on the calibration device) to identify orientation of the joint 124 (e.g., by defining the orientation of the joint 124 as being a vector intersecting the calibration device and/or marker(s) 199 at a predetermined angle stored in memory circuitry 1520 and/or as part of model of the calibration device).

In the example of FIG. 22, after identifying the position(s) and/or orientation of the joint 124 relative to the monitoring sensor 1502 at block 2212, the joint calibration process 2200 proceeds to block 2214. At block 2214, the monitoring sensor 1502 captures sensor data of and/or relating to the marker stand 208 facing the monitoring sensor 1502, and/or having markers 199 detectable by (and/or visible to) the monitoring sensor 1502. In some examples, block 2214 may be skipped (e.g., if previously captured sensor data already includes sensor data of and/or relating to the marker stand 208).

Once sensor data of and/or relating to the marker stand 208 is obtained, the joint calibration process 2200 proceeds to block 2216. At block 2216, the processing circuitry analyzes the sensor data to determine a position and/or orientation of the marker stand 208 (and/or one or more markers 199 on the marker stand 208) relative to the monitoring sensor 1502. After determining the position and/or orientation of the marker stand 208 (and/or its markers 199), the joint calibration process 2200 proceeds to block 2218 where the processing circuitry 1522 determines the position and/or orientation of the joint 124 relative to the marker stand 208 (and/or its markers 199).

In some examples, in order to determine the position and/or orientation of the joint 124 relative to the marker stand 208 (and/or its markers 199), the processing circuitry 1522 may define an origin of a marker stand coordinate system 2302 (and/or marker reference frame) that is anchored to the marker stand 208 and/or its markers 199 (see, e.g., FIG. 23). Thereafter, the processing circuitry 1522 may determine a translation between an origin and coordinate system of a sensor coordinate system 2304 of the monitoring sensor 1502 and the origin and coordinate system of the marker stand coordinate system 2302 anchored to the marker stand 208 (and/or its markers 199). Using the translation between the sensor coordinate system 2304 and marker stand coordinate system 2302, the processing circuitry 1522 can translate the position(s) and orientation of the joint 124 relative to the monitoring sensor 1502 to the position(s) and orientation of the joint 124 relative to the marker stand 208 (and/or its markers 199).

In some examples, the processing circuitry 1522 may define the origin of the marker stand coordinate system 2302 to be the position of one of the markers 199 on the marker stand 208, or some offset (e.g., saved in memory circuitry 1520). In some examples, the processing circuitry 1522 may define the axes of the marker stand coordinate system 2302 using the three dimensional orientation of one of the markers 199 on the marker stand 208 (or some angular offset therefrom).

In some examples, the processing circuitry 1522 may define the axes of the marker stand coordinate system 2302 using the positions of several markers 199 on the marker stand 208. In some examples, defining the axes using positions of markers 199 may help to avoid and/or reduce tracking jitter (e.g., slight changes in a tracked object's position and/or orientation in different sensor data samples, despite the object remaining stationary, due to noise and/or other tracking errors). In some examples, tracking jitter may be more pronounced when tracking orientation and less pronounced when tracking position (and even less pronounced when tracking positions of spaced apart markers 199), so there may be some accuracy and/or precision advantages to using position to define the axes of the marker stand coordinate system 2302.

For example, the processing circuitry 1522 may define one axis of the marker stand coordinate system 2302 as a vector extending between two approximately horizontally aligned markers 199 on the marker stand 208, a second axis as a vector extending between two approximately vertically aligned markers 199 on the marker stand 208, and the third axis as a vector perpendicular to the first two vectors. In some examples, two sets of horizontally and/or vertically aligned markers 199 may be used, and the axes defined according to a statistical analysis (e.g., mean, median, mode, etc.). In some examples, the memory circuitry 1520 may store a model of the marker stands 208 and/or their markers 199 to aid the processing circuitry 1522 in selecting the pairs of markers 199 for the axes definition. However, this example method for defining the axes relies on the markers 199 being both horizontally and/or vertically aligned, which may not always be the case and/or be difficult to implement in practice.

As another example, the processing circuitry 1522 may define a plane using positions of three of the markers 199 on the marker stand 208, and define the first axis as being the normal vector of the plane. In some examples, multiple planes and/or multiple normal vectors may be calculated using different (and/or all) sets of three markers 199 on the marker stand 208, and the first axis may be defined according to the outcome of a statistical analysis (e.g., mean, median, mode, etc.) of the multiple normal vectors. The second axis may be defined similar to the first example, using a pair of vertically or horizontally aligned markers 199, or a statistical analysis of two pairs of vertically or horizontally aligned markers 199. In some examples, this method may benefit from relative consistency in manufacturing flat planar surfaces from which to construct a marker stand 208, as well as reduction in potential for jitter through statistical analysis of multiple vectors.

The example of FIG. 23 shows how a marker stand coordinate system 2302 might compare to a monitoring sensor coordinate system 2304. As shown, the marker stand coordinate system 2302 has an origin offset somewhat from the position of the marker stand 208. Additionally, the X axis is shown as being approximately normal to the plane of the marker stand 208 to which the markers 199 are attached. The Z axis is shown as being approximately parallel to the alignment between two markers 199 on the marker stand 208, and the Y axis is shown as being approximately parallel to the vertical alignment of two markers 199 on the marker stand 208. The monitoring sensor coordinate system 2304, in contrast, has a different origin than the marker stand coordinate system 2302, and while the Y axis of the monitoring sensor coordinate system 2304 is similar to that of the marker stand coordinate system, both the X and Z axes are different.

In the example of FIG. 22, after the position and/or orientation of the joint 124 is determined relative to the marker stand 208 (e.g., using the newly defined marker stand coordinate system 2302), the joint calibration process 2200 proceeds to block 2220. At block 220, the processing circuitry 1522 records, in the memory circuitry 1520, joint data 1524 representative of the position and orientation of the joint 124 relative to the marker stand 208 (and/or the marker stand coordinate system 2302). Because the marker stand 208 and joint alignment fixture 400 are attached to the same support platform 202, use of the alignment fixture to position and/or orient the joint 124 will always result in the joint 124 being positioned and/or oriented relative to the marker stand 208 in the same way as when first calibrated via the joint calibration process 2200. Thus, the welding technique monitoring system 200 can be configured to monitor a welding-type operation on a similarly positioned and/or oriented joint 124 in the future (e.g., without having to again undergo the joint calibration process 2200) by positioning the joint 124 using the joint alignment fixture 400 and loading the saved j oint data 1524.

Additionally, because the saved position and orientation of the joint 124 is anchored to the marker stand 208 (and/or marker stand coordinate system 2302) rather than the monitoring sensor 1502 (and/or monitoring sensor coordinate system 2304), the system 200 can accurately determine the position(s) and/or orientation of the joint 124 even if the monitoring sensor 1502 (and/or monitoring device 1500) is moved. Therefore, if the monitoring device 1500 is removed (e.g., for maintenance) then reinserted into the monitoring device housing 206, moved around within the monitoring device housing 206, or replaced entirely, there is no additional calibration is necessary. The system 200 can simply re-detect where the marker stand 208 is relative to monitoring sensor 1502, and re-compute the translation needed to transition from the monitoring sensor coordinate system 2304 to the marker stand coordinate system 2302, given the new position and/or orientation of the monitoring sensor 1502 (and/or marker stand 208).

In some examples, the memory circuitry 1520 may additionally store joint identifying information (as discussed above) with the joint data 1524, and associate the joint identifying information with the joint data 1524. In some examples, the joint identifying information may be received from the operator 118 via the UI 1506. In some examples, the joint identifying information may be automatically determined by the processing circuitry 1522, such as, for example in response to the processing circuitry 1522 recognizing joint identifying information during an analysis of sensor data captured during the joint alignment process 2200.

FIG. 24 is a flowchart illustrating operation of an example joint identification process 2400. In some examples, the joint identification process 2400 identifies previously stored joint data 1524 associated with previously stored joint identifying information based on newly received or determined joint identifying information. Once the joint data 1524 is identified and decoded, the joint identification process 2400 acts as the inverse of the joint calibration process 2200; transitioning and/or translating the position and orientation of the joint 124 (represented by the joint data 1524) from the marker stand coordinate system 2302 to the sensor coordinate system 2304.

In the example of FIG. 24, the joint identification process 2400 begins at block 2402, where the processing circuitry 1522 identifies relevant joint data 1524 saved in the memory circuitry 1520 using the joint identifying information 1526 newly received at block 1604 of the technique monitoring process 1600. In some examples, the memory circuitry 1520 stores a plurality of different pieces of joint data 1524 along with a data structure that associates each different piece of joint data 1524 with different joint identifying information. In some examples, the processing circuitry 1522 identifies the relevant joint data 1524 by comparing the newly received joint identifying information with other joint identifying information previously saved in the memory circuitry 1520 until there is a match. The relevant joint data 1524 is then the joint data 1524 associated with the matched joint identifying information.

In some examples, if there is no identical match, the processing circuitry 1522 may find the joint identifying information that most and/or best matches the new joint identifying information, and use that associated joint data 1524 as the relevant joint data 1524. In some examples, the processing circuitry 1522 may apply one or more corrections to the position and/or orientation information represented by the joint data 1524 to compensate for differences between the new joint identifying information and the matched joint identifying information.

After identifying the relevant joint data 1524 at block 2402, the joint identification process proceeds to block 2404. At block 2404, the processing circuitry 1522 decodes the joint data 1524 to determine the position(s) and/or orientation of the joint 124 relative to the marker stand 208, the markers 199 on the marker stand 208, and/or the marker stand coordinate system 2302. Thereafter, at block 2406, the monitoring sensor 1502 captures sensor data of and/or relating to the marker stand 208 and/or the markers 199 on the marker stand 208. Afterwards, the processing circuitry 1522 identifies the positions and/or orientations of one or more markers 199 on the marker stand 208 at block 2408, and then determines the marker stand coordinate system 2302 based on those positions and/or orientations at block 2410. Following this step, the processing circuitry 1522 determines a translation between the marker stand coordinate system 2302 and the sensor coordinate system 2304 at block 2412, then transitions the position(s) and/or orientation of the joint 124 to the monitoring system coordinate system 2304 at block 1414 using the translation. In some examples, the operations of blocks 2404-2414 are similar, or identical, to those of blocks 2212-2218 previously discussed above (e.g., in a somewhat inverted order), and so further discussion is omitted in the interest of brevity.

FIG. 25 is a flowchart illustration operation of an example test weld process 2500. In some examples, the test weld process 2500 checks whether the welding technique monitoring system 200 is correctly configured for a welding-type operation, prior to the actual welding-type operation. As incorrect configurations can result in incorrect sensor data and/or incorrect feedback, the test weld process 2500 can be helpful to perform prior to initiation of a welding-type operation.

In the example of FIG. 25, the test weld process 2500 begins at block 2502, where the monitoring sensor 1502 captures sensor data of and/or relating to the welding-type tool 1100. Once the sensor data is captured, the processing circuitry 1522 analyzes the sensor data to determine the position and/or orientation of the welding-type tool 1100. In some examples, determining the position and/or orientation of the welding-type tool 1100 may involve determining the position and/or orientation of the marker ring 1200, and/or determining the position(s) and/or orientation(s) of one or more markers 199 on the marker ring 1200. The processing circuitry 1522 may use the translation determined and/or saved during the marker ring calibration process 1900 to translate the position(s) and/or orientation(s) of the marker(s) 199 on the marker ring 1200 (and/or of the marker ring 1200 itself) to the position and/or orientation of the welding-type tool 1100.

Once the position and/or orientation of the welding-type tool 1100 is determined, the test weld process 2500 proceeds to block 2504, where the processing circuitry 1522 determines whether the welding-type tool 1100 is within a threshold test range of the joint 124. In some examples, the threshold test range may be representative of a maximum distance between the joint 124 and the welding-type tool 1100 for a welding-type operation (e.g., maximum possible arc length), and/or a distance slightly beyond. In some examples, the determination as to whether the welding-type tool 1100 is within the threshold test range may involve determining a distance between the position of the joint 124 (e.g., determined during the joint identification process 2400) and the position of the welding-type tool 1100 (e.g., determined at block 2502), and comparing the distance with the threshold test range.

In the example of FIG. 25, the test weld process 2500 ends if the welding-type tool 1100 is not within the threshold test range of the joint 124. This might occur, for example, if the operator 118 is still configuring the welding technique monitoring system 200 and/or welding-type equipment 104. In such an example, the operator 118 may have the welding-type tool 1100 at their side, set on a table, or elsewhere out of the way (and/or out of the threshold test range). In some examples, if the monitoring sensor 1502 was unable to capture pertinent sensor data of and/or relating to the welding-type tool 1100, and/or the processing circuitry 1522 was unable to determine the position of the welding-type tool 1100 at block 2502, the test weld process 2500 may also end after block 2504.

If, on the other hand, the welding-type tool 1100 is determined to be within the threshold test range of the joint 124, the test weld process 2500 proceeds to block 2506 where the processing circuitry 1522 determines whether the welding-type tool 1100 is pointed at the monitoring sensor 1502. In some examples, having the welding-type tool 1100 pointed towards the monitoring sensor 1502 during a welding-type operation may result in sparks that may travel over the filter housing top wall 910 of the light filter housing 900, and/or interfere with capture of sensor data by the monitoring sensor 1502. The interference may be especially pronounced if the sparks get between the monitoring sensor 1502 and the marker ring 1200 (e.g., due to the proximity of the sparks and/or the sparks' unfiltered brightness). This interference may result in sensor data errors, monitoring errors, and/or feedback errors, and so is best avoided. However, if the welding-type tool 1100 is pointed away from the monitoring sensor 1502 during the welding-type operation, the light from any sparks may be attenuated by distance and/or substantially blocked by the welding-type tool 1100 and/or the operator 118, reducing the chance of interference.

In some examples, determining whether the welding-type tool 1100 is pointed at the monitoring sensor 1502 may involve determining whether the tool orientation vector 1702 would intersect a sensor plane 2602 of the monitoring sensor 1502 if the tool orientation vector 1702 were extended (e.g., infinitely). In some examples, the sensor plane 2602 may be a plane perpendicular to a sensor axis 2604 at an approximate middle of a field of view of the monitoring sensor 1502. In some examples, the processing circuitry 1522 may determine the sensor plane 2602 using sensor data captured by the monitoring sensor 1502. In some examples, the sensor plane 2602 may be known, predetermined, and/or saved in memory circuitry 1520.

FIG. 26 shows an example of how the welding-type tool 1100 might be oriented when pointed towards the monitoring sensor 1502 (e.g., such that an extension of the tool orientation vector 1702 would intersect the sensor plane 2602). As shown, the welding-type tool 1100 is rotated so that the nozzle assembly 1104 and tool orientation vector 1702 are pointed diagonally across the support platform 202 towards the light filter housing 900, monitoring device housing 206, and monitoring sensor 1502. While the extension of the tool orientation vector 1702 does not actually intersect any of the light filter housing 900, monitoring device housing 206, and monitoring sensor 1502, the extension of the tool orientation vector 1702 does intersect a sensor plane 2602 of the monitoring sensor 1502.

In the example of FIG. 26, the sensor plane 2602 is shown as a large rectangular dotted line extending upward from the support platform to a height above the top of the monitoring device housing 206, and extending along the end edge 216 of the support platform 202 (and past the support platform 202) in both directions from the monitoring sensor 1502. As shown, the sensor plane 2602 is approximately parallel to the front face of the monitoring device housing 206, and approximately perpendicular to the surface 201 of the support platform 202, as well as approximately perpendicular the sensor axis 2604 of the monitoring sensor 1502. While shown as being a bounded rectangle of a modest size for the sake of understanding and explanation, persons of ordinary skill will understand that an actual sensor plane 2602 would extend infinitely outwards.

In the example of FIG. 25, the test weld process 2500 ends if the processing circuitry 1522 determines the welding-type tool 1100 is not pointed at the monitoring sensor 1502. If, on the other hand, the welding-type tool 1100 is pointed at the monitoring sensor 1502, the test weld process 2500 proceeds to block 2508 where the processing circuitry 1522 notifies the operator 118 that the welding technique monitoring system 200 is incorrectly configured, and outputs remedial instructions (e.g., via the UI 1506).

In some examples, the remedial instructions output at block 2508 may indicate that, or how, the welding technique monitoring system 200 should be configured to ensure that the welding-type tool 1100 is pointed away from the monitoring sensor 1502 during a welding-type operation. For example, the instructions may explain that the alignment platform 202b can be rotated so that the welding-type tool 1100 can be pointed away from the monitoring sensor 1502 when the operator 118 is handling the welding-type tool 1100 with their preferred hand. As another example, the instructions may explain that the welding technique monitoring system 200 is currently configured for operation with a particular hand, and instruct the operator 118 to change the hand they are using to handle the welding-type tool 1100 if they wish to continue using the current configuration. In some examples, the processing circuitry 1522 may analyze sensor data of and/or relating to the marker stand 208 and/or the joint alignment fixture 400 (and/or their respective markers 199) to determine for which particular hand the welding technique monitoring system 200 is currently configured. After block 2508, the test weld process 2500 ends.

FIGS. 27a-27c show a second alternative welding technique monitoring system 2700 that might be used in the welding system 100 as an alternative to, or in addition to, the welding technique monitoring systems 200/600. As shown, the second alternative welding technique monitoring system 2700 is similar to the welding technique monitoring system 200 of FIGS. 2a-2d. For example, the second alternative welding technique monitoring system 2700 has a support platform 202 with a joint alignment fixture 400, and marker stands 208 attached to the surface 201 of the support platform 202. In some examples, clamps 204 may also be attached to the support platform 202, similar to the welding technique monitoring system 200. Also shown attached to the surface 201 of the support platform 202 is a first monitoring device housing 206a.

However, unlike the welding technique monitoring system 200 of FIGS. 2a-2d, the second alternative welding technique monitoring system 2700 of FIGS. 27a-27c has both a first monitoring device housing 206a and a second monitoring device housing 206b attached to the surface 201 of the support platform 202. As shown, the first monitoring device housing 206a is positioned at an opposite end (and/or along an opposite end edge 216) of the support platform 202 from the second monitoring device housing 206b. A first monitoring device 1500a is shown as being inserted into the first monitoring device housing 206a, while a second monitoring device 1500b is inserted into the second monitoring device housing 206b.

In some examples, using two monitoring devices 1500 positioned at opposite ends of the support platform 202 may allow for the second alternative welding technique monitoring system 2700 to be used to monitor left or right handed welding-type operations, with no need for the clamps 204 to be repositioned or the support platform 202 to be reconfigured (e.g., reoriented). With two monitoring devices 1500, regardless of which direction the welding-type tool 1100 is pointed, the welding-type tool 1100 should be always be pointed away from at least one of the monitoring sensors 1502 of at least one of the monitoring devices 1500. Thus, at least one monitoring sensor 1502 of at least monitoring device 1500 should not be interfered with, and/or impeded by, sparks coming between the welding-type tool 1100 and monitoring sensor 1502 during a welding-type operation.

In examples where sparks do not interfere with and/or impede either monitoring device 1500 (and/or either monitoring sensor 1502), the data detected by the monitoring devices 1500 may allow for more consistent, accurate, and/or precise tracking and/or monitoring, due to the redundancy. In such examples, the monitoring devices 1500 may communicate with one another (e.g., via their respective communication interfaces 1504) to time synchronize the redundant sensor data.

In FIGS. 27a-27c, the monitoring device housings 206 are shown as being of approximately equal size and symmetrically arranged, such that the housings 206 extend approximately parallel to one another, and are approximately aligned with one another. This positioning and/or configuration ensures that the monitoring sensors 1502 of each monitoring device 1500 (and/or their respective sensor axes 2604) are similarly aligned parallel to the expected orientation of the welding joint 124. While, in some examples, the monitoring device housings 206 may instead be arranged asymmetrically, such that the monitoring device housings 206 are still parallel but are not aligned, such an asymmetric arrangement may require the support platform 202 be significantly wider than if the monitoring device housings 206 are arranged symmetrically.

In some examples, a single monitoring device 1500 may be used instead of two monitoring devices 1500. In such examples, the single monitoring device 1500 may be moved between the first and second monitoring device housings 206 as needed for left/right handed welding-type operations. In some examples, only one monitoring device 1500 and one monitoring device housing 206 may be used, and the monitoring device housing 206 (with the monitoring device 1500 inside) may simply be configured for removal from one end, and reattachment to the other end, of the support platform 202 (e.g., as discussed above).

In the examples of FIGS. 27a-27c, the second alternative welding technique monitoring system 2700 also includes housing stands 2702 that may be used to elevate the monitoring device housings 206 above the surface 201 of the support platform 202. In some examples, one or more of the housing stands 2702 may be attached (e.g., via fasteners) between a monitoring device housing 206 and the support platform 202 (e.g., via fasteners) to change the height of one monitoring device 1500 (e.g., with respect to the other monitoring device 1500). This may be helpful, for instance, to account for differences between monitoring devices 1500.

For example, some monitoring devices 1500 may have a monitoring sensor 1502 that is positioned more to one side or another (rather than in the center) of the monitoring device 1500. In such instances, a housing stand 2702 may be used to set one of the monitoring device housings 206 at a different height than the other monitoring device housing 206. The different heights provided by the housing stand(s) 2702 may ensure that the monitoring sensors 1502 are aligned (and/or at the same height/distance above the surface 201 of the support platform 202), despite being offset in opposite directions.

In some examples, one or both housing stands 2702 may be removable from and/or attachable to the surface 201 of the support platform 202 (e.g., similar to that which is discussed above with respect to the monitoring device housing 206 and support platform 202). In some examples, the monitoring device housings 206 may be removable from and/or attachable to the housing stands 2702 (e.g., similar to that which is discussed above with respect the monitoring device housings 206 and support platform 202). In some examples, different housing stands 2702 may be swapped in and/or out to position the monitoring device housing(s) 206 and/or monitoring sensor(s) 1502 at the appropriate height and/or elevation above the surface 201 of the support platform 202. As used here, the height or elevation above the surface 201 of the support platform 202 refers to the distance and/or space away from the surface 201 of the support platform 202 in a direction perpendicular to the plane of the surface 206 of the support platform 202.

In the examples of FIGS. 27a-27c, the support platform 202 of the second alternative welding technique monitoring system 2700 is all one piece, instead of divided into a monitoring platform 202a and alignment platform 202b as in the welding technique monitoring system 200. Because of the two monitoring devices 1500 (or single repositionable monitoring device 1500), there is no need to have two reconfigurable pieces of the support platform 202. In some examples, the support platform 202 of the second alternative welding technique monitoring system 2700 may be comprised of a sturdy lightweight and/or spatter resistant material, such as aluminum or plastic, and/or a material more suited to conducting electrical current suitable for a welding-type operation, such as steel.

The second alternative welding technique monitoring system 2700 also differs from the welding technique monitoring system 200 in that the second alternative welding technique monitoring system 2700 lacks a light filter 902 and/or light filter housing 900. Instead, light blockers 2704 are attached to the support platform 202. Each light blocker 2704 is shown as having a blocker base attached to, and extending parallel to, the support platform 202. Extending up from, and perpendicular to, the blocker base is a light blocking wall. As shown, the light blockers 2702 are aligned with one another, with the monitoring positions of the monitoring sensors 1502, and with the expected position/orientation of the welding joint 124.

In some examples, each light blocker 2704 is configured to block (e.g., arc) light from being directly visible by the monitoring sensor 1502, while still allowing the marker(s) 199 on the marker ring 1200/1300/1400/3200 to be visible. In some examples, each light blocker 2704 is comprised of an opaque material that is impenetrable to light. As shown, each light blocker 2704 is positioned between the expected monitoring position of the monitoring sensor 1502 and the expected position of the welding joint 124. Thus, when (e.g., arc) light is produced proximate the welding joint 124, light that would've otherwise been directly visible to and/or directly detected by the monitoring sensor 1502 is instead blocked from direct view by the light blocker 2704.

In some examples, the monitoring sensor(s) 1502 may nevertheless detect (e.g., arc) light produced by the welding-type operation, despite the arc blockers 2704. Though the arc blockers 2704 may block the monitoring sensor(s) 1502 from directly observing or detecting the (e.g., arc) light generated by the welding-type operation at the welding joint 124, the (e.g., arc) light may still illuminate and/or brighten the surrounding environment. Thus, the monitoring sensor(s) 1502 may observe and/or detect the (e.g., arc) light indirectly by observing and/or detecting the illumination and/or brightness of the surrounding environment.

In some examples, the monitoring sensor(s) 1502 may capture sensor data relating to the surrounding environment, and the technique monitoring process 1600 may analyze characteristics and/or properties of the sensor data to determine (e.g., at block 1606) whether a welding-type operation is taking place. For example, the technique monitoring process 1600 may determine a welding-type operation is occurring (and/or has started) when sensor data indicates the (e.g., average, mode, medium, etc.) brightness of the environment has increased beyond a threshold, and/or that the brightness has increased at a rate that exceeds a threshold rate. As another example, the technique monitoring process 1600 may determine a welding-type operation is not occurring (and/or has stopped) when the sensor data indicates the brightness of the environment has decreased below a threshold, and/or that the brightness has decreased at a rate that exceeds a threshold rate (e.g., in terms of absolute value of the rate(s)).

In some examples where the captured sensor data is representative of a captured image, the technique monitoring process 1600 may analyze characteristics and/or properties of the image to determine (e.g., at block 1606) whether a welding-type operation is taking place. In particular, the technique monitoring process 1600 may analyze certain values of one or more Red Blue Green (RGB) color model representations to determine whether a welding-type operation is taking place. For example, the RGB color values in a hue, saturation, value (HSV), and/or hue, saturation, level (HSL), color model representation may be analyzed to determine whether a welding-type operation is taking place.

In such examples, a welding-type operation may be determined to have begun or ceased when there is an upward or downward spike (e.g., over a threshold slope/rate) of the (e.g., average, mode, medium, etc.) hue, saturation, and/or value/level in the captured image. While the value and/or level might seem to be the best indicator of a welding-type operation (as value/level are generally seen as synonymous with brightness), surprisingly empirical evidence seems to indicate that changes in hue might be better used as an indicator of whether a welding-type operation has started/stopped.

In particular, the hue has been observed to dramatically spike up or down when a welding-type operation begins or ends, and otherwise stay approximately constant. Though saturation and value/level quantities also spike at the beginning and/or end of a welding-type operation, their steady state quantities after the spike have been observed to fluctuate far more than hue. Because the rate of change (and/or slope) of the (e.g., average, mode, medium, etc.) hue is approximately zero except when a welding-type operation begins or ends (unlike saturation and/or value/level), it may be easier to use hue as an indicator of welding-type operation than saturation and/or value/level.

In some examples where the monitoring sensor 1502 is a camera and/or optical sensor, camera/sensor exposure values may also be used to determine whether a welding-type operation is occurring. In some examples, camera/sensor exposure refers to how long a camera/sensor receives light before capturing (e.g., image) data. In some cameras and/or image sensors the exposure time is automatically set and/or adjusted to keep the average brightness and/or intensity of each image approximately the same. Thus, if there is suddenly a bright light (e.g., as might occur when a welding-type operation begins), the exposure time may be automatically (and/or drastically) decreased (e.g., at more than a threshold rate). And if the light suddenly disappears (e.g., as might occur when a welding-type operation ends), the exposure time may be automatically (and/or drastically) increased (e.g., at more than a threshold rate). Thereby, automatic changes in exposure time may be used to determine whether a welding-type operation has started/stopped, and/or is underway.

Using the above methods, the technique monitoring process 1600 can identify if a welding-type operation is occurring when light blockers 2704 are used instead of light filters 902. In some examples, the light blockers 2704 may be cheaper alternatives to light filters 902, and yet sufficiently effective to still allow for efficient monitoring. In some examples, the light blockers 2704 may also be relatively low profile, and thereby take up significantly less space than the light filters 902. Due to the lower profile, the light blockers 2704 may allow for the monitoring device 1500 to be located closer to the welding joint 124 than when using the light filters 902, which may increase monitoring accuracy.

FIGS. 28a-28d show a third alternative welding technique monitoring system 2800 that might be used in the welding system 100 as an alternative to, or in addition to, the welding technique monitoring systems 200/600/2700. As shown, the third alternative welding technique monitoring system 2800 is similar to the second alternative welding technique monitoring system 2700. For instance, the third alternative welding technique monitoring system 2800 has a one piece support platform 202 with a joint alignment fixture 400 attached to the surface 201 of the support platform 202. In some examples, clamps 204 may also be attached to the support platform 202, similar to the welding technique monitoring systems 200/2700. The third alternative welding technique monitoring system 2800 also has marker stands 208. Additionally, the third alternative welding technique monitoring system 2800 does not include light filters 902, similar to the second alternative welding technique monitoring system 2700.

However, unlike the second alternative welding technique monitoring system 2700, the marker stands 208 of the third alternative welding technique monitoring system 2800 are shown as being attached to (and/or part of) alternative monitoring device housings 2806, rather than being attached to the support surface 202. In the examples of FIGS. 28a-28d, each monitoring device platform housing 2808 is shown as having a marker stand 208 connected on either side. Markers 199 are further shown on the marker stands 208, similar to that which is discussed above with respect to the welding technique monitoring system 200. Some or all of the markers 199 on the marker stands 208 of one monitoring device platform housing 2808 may be visible to (and/or detectable by) the monitoring sensor 1502 of a monitoring device 1500 connected to the opposite monitoring device platform housing 2808 (e.g., via the monitoring device removable housing 2810).

The third alternative welding technique monitoring system 2800 is also shown as having alternative light blockers 2804, instead of the light blockers 2704 of the second alternative welding technique monitoring system 2700. And rather than being attached to the support platform 202, the alternative light blockers 2804 are shown in FIGS. 28a-28d as attached to the marker stands 208 of the alternative monitoring device housings 2806.

By combining the marker stands 208 and alternative light blockers 2804 with the alternative monitoring device housings 2806, the third alternative welding technique monitoring system 2800 reduces the amount of clutter on the support platform 202. The reduced clutter provides more space on the support platform 202 for the operator 118 to maneuver the welding-type tool 1100. The reduced clutter also makes the support platform 202 easier to clean should the support platform 202 become soiled (e.g., with spatter, debris, etc.). The reduced clutter also makes it possible to position the monitoring device 1500 even closer to the expected position of the welding joint 124, which may further increase monitoring accuracy.

In the examples of FIGS. 28a-28, each alternative monitoring device housing 2806 is comprised of a monitoring device platform housing 2808 and a monitoring device removable housing 2810. In some examples, the monitoring device removable housings 2810 may be overlaid with a housing cover, similar to that which is described above. Each monitoring device platform housing 2808 is shown in FIG. 28a as being connected to the support platform 202 via fasteners 101 extending through holes of the monitoring device platform housing 2808 and support platform 202. A carrying handle 2899 is also shown between each monitoring device platform housing 2808 and each end edge 216 of the support platform 202. In some examples, one or more of the carrying handles 2899 may be integrated with and/or attached to the monitoring device platform housing(s) 2808.

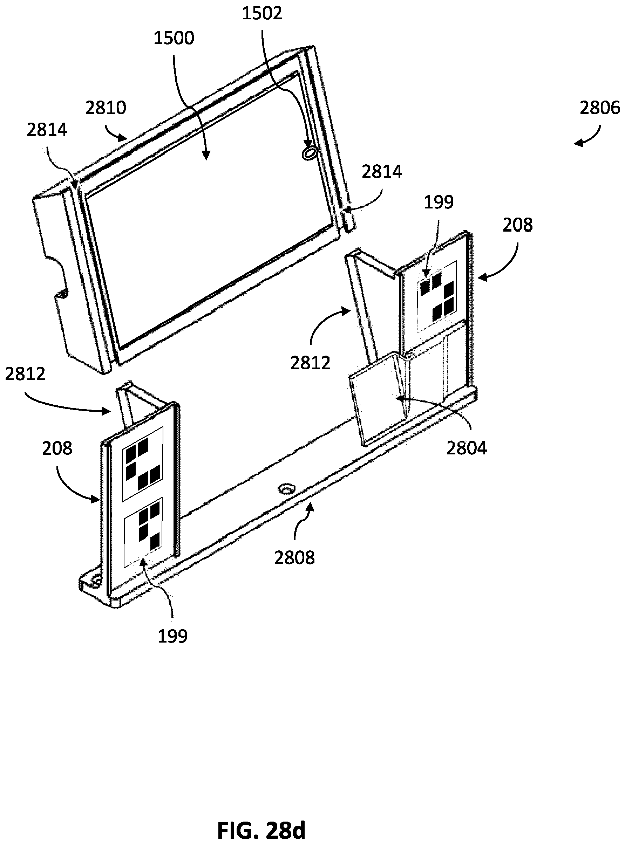

In some examples, each monitoring device platform housing 2808 includes housing connectors 2812 configured for tool-less connection with complementary housing connectors 2814 of the monitoring device removable housing 2810. In the example of FIG. 28d, the housing connectors 2812 of the monitoring device platform housing 2808 are shown as dovetail rails, and the complementary housing connectors 2814 of the monitoring device removable housing 2810 are shown as channels. In some examples, the channels of the monitoring device removable housing 2810 are configured to receive the rails of the monitoring device platform housing 2808, and allow the monitoring device removable housing 2810 to slide along the rails. In this way, the monitoring device removable housing 2810 may tool-lessly connect to and/or disconnect from the monitoring device platform housing 2808.

In some examples, the housing connectors 2812 and/or complementary housing connectors 2814 may be arranged in a poka yoke configuration. The poka yoke configuration may ensure that each monitoring device removable housing(s) 2810 may only be connected to each monitoring device platform housing 2808 in a particular orientation. This may be particularly helpful where there is only one monitoring device removable housing 2810 (e.g., housing one monitoring device 1500), and that one monitoring device removable housing 2810 must be moved between (and connected to/disconnected from) both monitoring device platform housings 2808. In such situations, it may be important that the monitoring device removable housing 2810 connects with a particular monitoring device platform housing 2808 in a particular orientation to ensure correct positioning and/or orientation of the monitoring sensor 1502 (e.g., facing the expected position of the welding joint 124 and at approximately the same position relative to the opposing markers199/marker stand(s) 208 as when connected to the opposite monitoring device platform housing 2808).

FIGS. 29a-29b show examples of housing connectors 2812 of monitoring device platform housings 2808 arranged in a poka yoke configuration with complementary housing connectors 2814 of a monitoring device removable housing 2810. In FIGS. 29a-29b, the housing connectors 2812y are dovetail rails, and the housing connectors 2812x are channels configured to receive a dovetail rail. Meanwhile, the complementary housing connector 2814y is a channel configured to receive a dovetail rail, and the complementary housing connector 2814x is a dovetail rail.

As shown, the housing connectors 2812x of both monitoring device platform housings 2808 are aligned with one another on the left side of the page, while the housing connectors 2812y of both monitoring device platform housings 2808 are aligned with one another on the right. In this configuration, the monitoring device removable housing 2810 must be flipped about its longitudinal axis 2900 when moving between monitoring device platform housings 2808 in order to align its complementary connector 2814y (i.e., channel) with the housing connector 2812y (i.e., rail), and align its complementary connector 2814x (i.e., rail) with the housing connector 2812x (i.e., channel).

Importantly, this flip of the monitoring device removable housing 2810 about the longitudinal axis 2900 keeps the expected position of the monitoring sensor 1502 facing the welding joint 124, and at approximately the same position relative to the opposing markers 199/marker stand(s) 208, regardless of to which monitoring device platform housing 808 the monitoring device removable housing 2810 is connected. Were the monitoring device removable housing 2810 allowed to instead be rotated about its lateral axis (e.g., perpendicular to the longitudinal axis 2900), the expected monitoring position of the monitoring sensor 1502 would still be facing the welding joint 124, but would be at a different position relative to the opposing markers 199/marker stand(s) 208 than when connected with the opposing monitoring device platform housing 808. Such a difference in relative positioning may negatively impact the joint calibration process 2200 and/or joint identification process 2400 when moving the monitoring device 1500 to accommodate a change in right/left handed welding-type operations. Thus, the poka yoke configuration ensures correct positioning and alignment of the monitoring sensor 1502 when the monitoring device 1500 and monitoring device removable housing 2810 is moved between monitoring device platform housings 2808.

In some examples, housing stands 2702 may be used with the third alternative welding technique monitoring system 2800, similar to that which is described above with respect to the second alternative welding technique monitoring system 2700. For example, complementary housing connectors 2814 (e.g., channels) may be formed in a housing stand 2702, such that it may connect with the monitoring device platform housing 2808 prior to connection of the monitoring device removable housing 2810. In such examples, the housing stands 2702 may increase the elevation of the monitoring device removable housing 2810 (and/or monitoring device 1500) as needed.

In the examples of FIGS. 29a-29d, the monitoring device removable housings 2810 (and/or housed monitoring devices 1500) are shown angled with the respect to the surface 201 of the support platform 202 when connected with the monitoring device platform housings 2808. This is due to the angle of the housing connectors 2812 and complementary housing connectors 2814. In some examples, the angle may be approximately 20 degrees. In some examples, this angle may be sufficient to ensure that (e.g., arc) light produced by the welding-type operation at the welding j oint 124 is outside a field of detection (and/or field of view) of the monitoring sensor 1502.

However, even when outside a field of detection (and/or field of view) of the monitoring sensor 1502, (e.g., arc) light produced by the welding-type operation may still impinge upon the monitoring sensor 1502. Where the monitoring device 1500 is a camera and/or optical sensor, this situation may result in a phenomenon called "lens flare," where bands of light appear in a captured image and/or video, obscuring the scene(s) depicted in the image/video. In the examples of FIGS. 28a-28d, the third alternative welding technique monitoring system 2800 includes alternative light blockers 2804 to prevent (e.g., arc) light produced by the welding-type operation from impinging upon the monitoring sensor 1502 and causing lens flare.

In the examples of FIGS. 28a-28d, the alternative light blockers 2804 are shown as being attached to the monitoring device platform housings 2808. In particular, each alternative light blocker 2804 is shown as being attached to the marker stands 208 of the monitoring device platform housings 2808. As shown, the marker stands 208 are formed with rail connectors that allow complementary channel connectors of the alternative light blockers 2804 to connect the alternative light blockers 2804 with the marker stands 208 of the monitoring device platform housings 2808. The attachment of the alternative light blockers 2804 to the monitoring device platform housings 2808 (rather than the support platform 202) further helps to reduce the clutter on the support platform 202.

While the alternative light blockers 2804 cover a portion of the marker stands 208, there is still enough room on the marker stands 208 for three markers 199 to be shown on each monitoring device platform housing 2808, which is sufficient to determine a marker stand coordinate system (e.g., at block 2410 of the joint identification process 2400). Additionally, in some examples, a marker 199 may be inscribed/attached atop the alternative light blocker 2804.

In the examples of FIGS. 29a-29d, at least a portion of each alternative light blocker 2804 is positioned between the expected position of the welding joint 124 and an expected monitoring position of a monitoring sensor 1502 (or the actual position of the monitoring sensor 1502 when the monitoring device 1500 is housed in a monitoring device removable housing 2810 that is connected to the monitoring device platform housing 2808 to which the light blocker 2704 is attached). In some examples, each alternative light blocker 2804 is comprised of an opaque material that is impenetrable to light. The positioning of the alternative light blocker 2804 and the angling of the monitoring device 1500 in the alternative monitoring device housing 2806 serves to prevent (e.g., arc) light produced by the welding-type operation from impinging upon the monitoring sensor 1502 and causing lens flare. This is shown, for example, in FIGS. 30a-30b, which depict potential ray paths 3002 of light 3004 produced by the welding-type operation proximate the welding joint 124 with respect to an alternative light blocker 2804 and monitoring sensor 1502.

In FIG. 30a, the angling of the monitoring device 1500 is sufficient to remove the light 3004 produced by the welding-type operation from the field of detection/view 3006 of the monitoring sensor 1502, while still keeping the opposing marker walls 208 in the field of detection/view 3006. However, the ray paths 3002 show that some of the light 3004 would still impinge upon the monitoring sensor 1502 if the alternative light blocker 2804 were not present. With the alternative light blocker 2804 present, the path 3002 of the light 3004 is blocked from proceeding past the alternative light blocker 2804 further towards, and/or to imping upon, the monitoring sensor 1502. While one of the paths 3002 of light 3004 may still make it past the alternative light blocker 2804, none of light 3004 from this path 3002 impinges upon the monitoring sensor 1502 due to the angling of the monitoring device 1500 and the positioning of the alternative light blocker 2804.

While the angle of the monitoring device 1500 and positioning of the alternative light blocker 2804 may reduce the likelihood that (e.g., arc) light produced by the welding-type operation will directly impinge upon the monitoring sensor 1502, the monitoring sensor 1502 may nevertheless indirectly detect the (e.g., arc) light illuminating the surrounding environment, as discussed above. This indirect detection may enable the third alternative welding technique monitoring system 2800 to determine when a welding-type operation begins and/or ends, as discussed above.

While, in the examples of FIGS. 29a-30b, a portion of the alternative light blocker 2804 is shown as being tilted at approximately the same angle as the monitoring device 1500 and/or the monitoring device removable housing 2810, in some examples, the alternative light blocker 2804 may be tilted at a different angle, or not tilted at all. FIGS. 31-31b, for example, show example alternative light blockers 2804x and 2804y that are not tilted at all. Due to the lack of tilting, upper portions of the alternative light blocker 2804x are spaced farther from upper portions of the monitoring device removable housing 2810. In FIG.31b, both upper and lower portions of the alternative light blocker 2804y are spaced farther from the monitoring device removable housing 2810 due to the lack of tilting and additional spacing of the alternative light blocker 2804y away from the monitoring device removable housing 2810.

The disclosed welding technique monitoring system 200 (and/or first alternative welding technique monitoring system 600, second alternative welding technique monitoring system 2700, and/or third alternative welding technique monitoring system 2800) is a lightweight, compact, self-contained, and highly portable means of monitoring welding technique and/or providing feedback. The relatively lightweight and compact systems 200/600/2700/2800 can be easily transported to different welding stations/sites, providing a marked advantage over legacy monitoring systems that use heavy welding stands that are difficult to move. The joint alignment fixture 400/500/700 and marker stands 208 enable the systems 200/600/2700/2800 to consistently and repeatedly monitor welding technique relative to a particular type of joint 124, with only a single, simple calibration. And the systems 200/600/2700/2800 can continue accurate monitoring (with no additional calibration) even if the monitoring sensor 1502 and/or support platform 202 is moved. Additionally, the use of a light filter 902 and/or light blocker 2704/2804 enables the systems 200/600/2700/2800 to detect a welding-type operation without the need to worry about establishing communication between the system 200/600 and welding-type equipment 104. The systems 200/600/2700/2800 are further configured for use with existing (rather than potentially expensive custom), welding-type tools 1100, thereby keeping the systems 200/600/2700/2800 low cost and highly portable. The systems 200/600/2700/2800 are further configured to use off the shelf monitoring devices 1500 (e.g., mobile devices) for all the electronic functions, thereby simplifying equipment and/or power/battery management.

The present methods and/or systems may be realized in hardware, software, or a combination of hardware and software. The present methods and/or systems may be realized in a centralized fashion in at least one computing system, or in a distributed fashion where different elements are spread across several interconnected computing or cloud systems. Any kind of computing system or other apparatus adapted for carrying out the methods described herein is suited. A typical combination of hardware and software may be a general-purpose computing system with a program or other code that, when being loaded and executed, controls the computing system such that it carries out the methods described herein. Another typical implementation may comprise an application specific integrated circuit or chip. Some implementations may comprise a non-transitory machine-readable (e.g., computer readable) medium (e.g., FLASH drive, optical disk, magnetic storage disk, or the like) having stored thereon one or more lines of code executable by a machine, thereby causing the machine to perform processes as described herein.

While the present method and/or system has been described with reference to certain implementations, it will be understood by those skilled in the art that various changes may be made and equivalents may be substituted without departing from the scope of the present method and/or system. In addition, many modifications may be made to adapt a particular situation or material to the teachings of the present disclosure without departing from its scope. Therefore, it is intended that the present method and/or system not be limited to the particular implementations disclosed, but that the present method and/or system will include all implementations falling within the scope of the appended claims.

While this disclosure sometimes refers to up, down, left, and right for the sake of explanation, persons of ordinary skill will recognize that this a shorthand that might be more precisely described using elements of the welding technique monitoring system 200 and geometric principles (e.g., where up is a direction defined by a vector extending between the surface 201 of the support platform 202 and the filter housing top wall 910 of the light filter housing 900, where the vector extends approximately perpendicular to the surface 201 of the support platform 202, down is the opposite direction, and left/right are opposite vectors approximately parallel to the end edges 216 and/or abutting edges 218 of the support platform 202 and/or approximately perpendicular to up/down).

As used herein, "approximately," with respect to an angle, means within three degrees of the angle, unless otherwise specified. With respect to position, "approximately" means within three millimeters of that position, unless otherwise specified.

As used herein, "and/or" means any one or more of the items in the list joined by "and/or". As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z".

As utilized herein, the terms "e.g.," and "for example" set off lists of one or more non-limiting examples, instances, or illustrations.

As used herein, the terms "coupled," "coupled to," and "coupled with," each mean a structural and/or electrical connection, whether attached, affixed, connected, joined, fastened, linked, and/or otherwise secured. As used herein, the term "attach" means to affix, couple, connect, join, fasten, link, and/or otherwise secure. As used herein, the term "connect" means to attach, affix, couple, join, fasten, link, and/or otherwise secure.

As used herein the terms "circuits" and "circuitry" refer to physical electronic components (i.e., hardware) and any software and/or firmware ("code") which may configure the hardware, be executed by the hardware, and or otherwise be associated with the hardware. As used herein, for example, a particular processor and memory may comprise a first "circuit" when executing a first one or more lines of code and may comprise a second "circuit" when executing a second one or more lines of code. As utilized herein, circuitry is "operable" and/or "configured" to perform a function whenever the circuitry comprises the necessary hardware and/or code (if any is necessary) to perform the function, regardless of whether performance of the function is disabled or enabled (e.g., by a user-configurable setting, factory trim, etc.).

As used herein, a control circuit may include digital and/or analog circuitry, discrete and/or integrated circuitry, microprocessors, DSPs, etc., software, hardware and/or firmware, located on one or more boards, that form part or all of a controller, and/or are used to control a welding process, and/or a device such as a power source or wire feeder.

As used herein, the term "processor" means processing devices, apparatus, programs, circuits, components, systems, and subsystems, whether implemented in hardware, tangibly embodied software, or both, and whether or not it is programmable. The term "processor" as used herein includes, but is not limited to, one or more computing devices, hardwired circuits, signal-modifying devices and systems, devices and machines for controlling systems, central processing units, programmable devices and systems, field-programmable gate arrays, application-specific integrated circuits, systems on a chip, systems comprising discrete elements and/or circuits, state machines, virtual machines, data processors, processing facilities, and combinations of any of the foregoing. The processor may be, for example, any type of general purpose microprocessor or microcontroller, a digital signal processing (DSP) processor, an application-specific integrated circuit (ASIC), a graphic processing unit (GPU), a reduced instruction set computer (RISC) processor with an advanced RISC machine (ARM) core, etc. The processor may be coupled to, and/or integrated with a memory device.

As used, herein, the term "memory" and/or "memory device" means computer hardware or circuitry to store information for use by a processor and/or other digital device. The memory and/or memory device can be any suitable type of computer memory or any other type of electronic storage medium, such as, for example, read-only memory (ROM), random access memory (RAM), cache memory, compact disc read-only memory (CDROM), electro-optical memory, magneto-optical memory, programmable read-only memory (PROM), erasable programmable read-only memory (EPROM), electrically-erasable programmable read-only memory (EEPROM), a computer-readable medium, or the like. Memory can include, for example, a non-transitory memory, a non-transitory processor readable medium, a non-transitory computer readable medium, non-volatile memory, dynamic RAM (DRAM), volatile memory, ferroelectric RAM (FRAM), first-in-first-out (FIFO) memory, last-in-first-out (LIFO) memory, stack memory, non-volatile RAM (NVRAM), static RAM (SRAM), a cache, a buffer, a semiconductor memory, a magnetic memory, an optical memory, a flash memory, a flash card, a compact flash card, memory cards, secure digital memory cards, a microcard, a minicard, an expansion card, a smart card, a memory stick, a multimedia card, a picture card, flash storage, a subscriber identity module (SIM) card, a hard drive (HDD), a solid state drive (SSD), etc. The memory can be configured to store code, instructions, applications, software, firmware and/or data, and may be external, internal, or both with respect to the processor.

The term "power" is used throughout this specification for convenience, but also includes related measures such as energy, current, voltage, and enthalpy. For example, controlling "power" may involve controlling voltage, current, energy, and/or enthalpy, and/or controlling based on "power" may involve controlling based on voltage, current, energy, and/or enthalpy.

As used herein, welding-type refers to actual live, and/or simulated, welding (including laser welding and/or hot wire welding), cladding (including laser cladding), brazing, plasma cutting, induction heating, carbon arc cutting or gouging, hot wire preheating, and/or resistive preheating.

As used herein, a welding-type tool refers to a tool suitable for and/or capable of actual live, and/or simulated, welding (including laser welding and/or hot wire welding), cladding (including laser cladding), brazing, plasma cutting, induction heating, carbon arc cutting or gouging, hot wire preheating, and/or resistive preheating.

As used herein, welding-type power refers to power suitable for actual live welding (including laser welding and/or hot wire welding), cladding (including laser cladding), brazing, plasma cutting, induction heating, carbon arc cutting or gouging, hot wire preheating, and/or resistive preheating.

As used herein, a welding-type power supply and/or welding-type power source refers to a device capable of, when input power is applied thereto, supplying output power suitable for actual live welding (including laser welding and/or hot wire welding), cladding (including laser cladding), brazing, plasma cutting, induction heating, carbon arc cutting or gouging, hot wire preheating, and/or resistive preheating; including but not limited to transformer-rectifiers, inverters, converters, resonant power supplies, quasi-resonant power supplies, switch-mode power supplies, etc., as well as control circuitry and other ancillary circuitry associated therewith.
Certain embodiments of the invention are described in the following clauses:
Clause 1. A marker ring configured for attachment to a welding tool, the marker ring comprising:
   a ring body, the ring body comprising:
      a ring inner surface extending at least partially around a ring bore that extends through the ring body, and
      a ring outer surface, comprising a plurality of outer sidewall faces connected together around the ring bore;
   a plurality of markers, each marker of the plurality of markers being positioned on a different outer sidewall face of the plurality of outer sidewall faces; and
   a fastener configured to fasten the marker ring to a handle, a neck, or a nozzle assembly of a welding torch.
Clause 2. The marker ring of clause 1, wherein the fastener comprises a snap on fastener, a threaded fastener, a bolt fastener, a clamp fastener, a spring fastener, or an inflatable fastener.
Clause 3. The marker ring of clause 1, wherein the fastener extends through the ring body into the ring bore, or is configured to modify the diameter of the ring bore.
Clause 4. The marker ring of clause 1, wherein the ring outer surface comprises:
   a first ring outer surface comprising a first plurality of outer sidewall faces connected together in a first ring that encircles the ring bore, and
   a second ring outer surface comprising a second plurality of outer sidewall faces connected together in a second ring that encircles the ring bore.
Clause 5. The marker ring of clause 4, wherein the ring body is centered around a ring axis, and wherein a first outer sidewall face, of the first plurality of outer sidewall faces, is connected to an adjacent first outer sidewall face, of the first plurality of outer sidewall faces, at a first sidewall edge, and a second outer sidewall face, of the second plurality of outer sidewall faces, is connected to an adjacent second outer sidewall face, of the second plurality of outer sidewall faces, at a second sidewall edge, the first sidewall edge forming a first angle with respect to the ring axis, and the second sidewall edge forming a second angle with respect to the ring axis.
Clause 6. The marker ring of clause 5, wherein the first angle is different than the second angle.
Clause 7. The marker ring of clause 5, wherein the first angle is the same as the second angle.
Clause 8. The marker ring of clause 4, wherein no first sidewall face of the first plurality of sidewall faces is parallel to any second sidewall face of the second plurality of sidewall faces.
Clause 9. The marker ring of clause 4, wherein no first outer sidewall face of the plurality of outer sidewall faces shares an edge with any second outer sidewall face of the second plurality of sidewall faces.
Clause 10. The marker ring of clause 4, wherein a number of the plurality of markers is equal to, a quantity of the first plurality of outer sidewall faces, such that each first outer sidewall face has a first marker of the plurality of first markers.
Clause 11. A welding torch, comprising:
   a torch handle;
   a torch neck attached to the torch handle;
   a torch nozzle assembly attached to the torch neck, the nozzle assembly comprising a welding nozzle and electrode; and
   a marker ring attached to the torch handle, the torch neck, or the torch nozzle assembly, the marker ring comprising:
      a ring body, the ring body comprising:
         a ring inner surface extending at least partially around a ring bore that extends through the ring body, and
         a ring outer surface comprising a plurality of outer sidewall faces connected together around the ring bore,
         wherein the torch handle, the torch neck, or the torch nozzle assembly extends through the ring bore; and
      a plurality of markers, each marker of the plurality of markers being positioned on a different outer sidewall face of the plurality of outer sidewall faces.
Clause 12. The welding torch of clause 11, wherein the marker ring further comprises a fastener that secures the marker ring to the torch handle, the torch neck, or the torch nozzle assembly.
Clause 13. The welding torch of clause 11, wherein the fastener extends through the ring body into the ring bore, is configured to modify the diameter of the ring bore, or comprises a snap on fastener, a threaded fastener, a screw fastener, a clamp fastener, a spring fastener, or an inflatable fastener.
Clause 14. The welding torch of clause 11, wherein the ring outer surface comprises:
   a first ring outer surface comprising a first plurality of outer sidewall faces connected together in a first ring that encircles the ring bore, and
   a second ring outer surface comprising a second plurality of outer sidewall faces connected together in a second ring that encircles the ring bore.
Clause 15. The welding torch of clause 14, wherein the ring body is centered around a ring axis, and wherein a first outer sidewall face, of the first plurality of outer sidewall faces, is connected to an adjacent first outer sidewall face, of the first plurality of outer sidewall faces, at a first sidewall edge, and a second outer sidewall face, of the second plurality of outer sidewall faces, is connected to an adjacent second outer sidewall face, of the second plurality of outer sidewall faces, at a second sidewall edge, the first sidewall edge forming a first angle with respect to the ring axis, and the second sidewall edge forming a second angle with respect to the ring axis.
Clause 16. The welding torch of clause 15, wherein the first angle is different than the second angle.
Clause 17. The marker ring of clause 15, wherein the first angle is the same as the second angle.
Clause 18. The welding torch of clause 14, wherein no first sidewall face of the first plurality of sidewall faces is parallel to any second sidewall face of the second plurality of sidewall faces.
Clause 19. The welding torch of clause 14, wherein no first outer sidewall face of the plurality of outer sidewall faces shares an edge with any second outer sidewall face of the second plurality of sidewall faces.
Clause 20. The welding torch of clause 14, wherein a number of the plurality of markers is equal to a quantity of the first plurality of outer sidewall faces, such that each first outer sidewall face has a first marker of the plurality of first markers.

## Claims

1. A marker ring configured for attachment to a welding tool, the marker ring comprising:
a ring body, the ring body comprising:
a ring inner surface extending at least partially around a ring bore that extends through the ring body, and
a ring outer surface, comprising a plurality of outer sidewall faces connected together around the ring bore;
a plurality of markers, each marker of the plurality of markers being positioned on a different outer sidewall face of the plurality of outer sidewall faces; and
a fastener configured to fasten the marker ring to a handle, a neck, or a nozzle assembly of a welding torch.

2. The marker ring of claim 1, wherein the fastener comprises a snap on fastener, a threaded fastener, a bolt fastener, a clamp fastener, a spring fastener, or an inflatable fastener.

3. The marker ring of claim 1, wherein the fastener extends through the ring body into the ring bore, or is configured to modify the diameter of the ring bore.

4. The marker ring of claim 1, wherein the ring outer surface comprises:
a first ring outer surface comprising a first plurality of outer sidewall faces connected together in a first ring that encircles the ring bore, and
a second ring outer surface comprising a second plurality of outer sidewall faces connected together in a second ring that encircles the ring bore.

5. The marker ring of claim 4, wherein the ring body is centered around a ring axis, and wherein a first outer sidewall face, of the first plurality of outer sidewall faces, is connected to an adjacent first outer sidewall face, of the first plurality of outer sidewall faces, at a first sidewall edge, and a second outer sidewall face, of the second plurality of outer sidewall faces, is connected to an adjacent second outer sidewall face, of the second plurality of outer sidewall faces, at a second sidewall edge, the first sidewall edge forming a first angle with respect to the ring axis, and the second sidewall edge forming a second angle with respect to the ring axis.

6. The marker ring of claim 5, wherein the first angle is different than the second angle, or wherein the first angle is the same as the second angle.

7. The marker ring of claim 4, wherein no first sidewall face of the first plurality of sidewall faces is parallel to any second sidewall face of the second plurality of sidewall faces, or wherein no first outer sidewall face of the plurality of outer sidewall faces shares an edge with any second outer sidewall face of the second plurality of sidewall faces.

8. The marker ring of claim 4, wherein a number of the plurality of markers is equal to, a quantity of the first plurality of outer sidewall faces, such that each first outer sidewall face has a first marker of the plurality of first markers.

9. A welding torch, comprising:
a torch handle;
a torch neck attached to the torch handle;
a torch nozzle assembly attached to the torch neck, the nozzle assembly comprising a welding nozzle and electrode; and
a marker ring attached to the torch handle, the torch neck, or the torch nozzle assembly, the marker ring comprising:
a ring body, the ring body comprising:
a ring inner surface extending at least partially around a ring bore that extends through the ring body, and
a ring outer surface comprising a plurality of outer sidewall faces connected together around the ring bore,
wherein the torch handle, the torch neck, or the torch nozzle assembly extends through the ring bore; and
a plurality of markers, each marker of the plurality of markers being positioned on a different outer sidewall face of the plurality of outer sidewall faces.

10. The welding torch of claim 9, wherein the marker ring further comprises a fastener that secures the marker ring to the torch handle, the torch neck, or the torch nozzle assembly, or wherein the fastener extends through the ring body into the ring bore, is configured to modify the diameter of the ring bore, or comprises a snap on fastener, a threaded fastener, a screw fastener, a clamp fastener, a spring fastener, or an inflatable fastener.

11. The welding torch of claim 9, wherein the ring outer surface comprises:
a first ring outer surface comprising a first plurality of outer sidewall faces connected together in a first ring that encircles the ring bore, and
a second ring outer surface comprising a second plurality of outer sidewall faces connected together in a second ring that encircles the ring bore.

12. The welding torch of claim 11, wherein the ring body is centered around a ring axis, and wherein a first outer sidewall face, of the first plurality of outer sidewall faces, is connected to an adjacent first outer sidewall face, of the first plurality of outer sidewall faces, at a first sidewall edge, and a second outer sidewall face, of the second plurality of outer sidewall faces, is connected to an adjacent second outer sidewall face, of the second plurality of outer sidewall faces, at a second sidewall edge, the first sidewall edge forming a first angle with respect to the ring axis, and the second sidewall edge forming a second angle with respect to the ring axis.

13. The welding torch of claim 12, wherein the first angle is different than the second angle, or wherein the first angle is the same as the second angle.

14. The welding torch of claim 11, wherein no first sidewall face of the first plurality of sidewall faces is parallel to any second sidewall face of the second plurality of sidewall faces, or wherein no first outer sidewall face of the plurality of outer sidewall faces shares an edge with any second outer sidewall face of the second plurality of sidewall faces.

15. The welding torch of claim 11, wherein a number of the plurality of markers is equal to a quantity of the first plurality of outer sidewall faces, such that each first outer sidewall face has a first marker of the plurality of first markers.
